(19) Europäisches Patentamt / European Patent Office / Office européen des brevets

(11) EP 3 426 390 B1

# (12) EUROPEAN PATENT SPECIFICATION

(45) Date of publication and mention of the grant of the patent:
**17.12.2025 Bulletin 2025/51**

(21) Application number: **17712897.2**

(22) Date of filing: **06.03.2017**

(51) International Patent Classification (IPC):
***B01J 20/283*** *(2006.01)* ***B01D 15/38*** *(2006.01)*
***B01D 15/34*** *(2006.01)* ***B01J 20/32*** *(2006.01)*
***B01J 20/289*** *(2006.01)* ***B01J 20/28*** *(2006.01)*
***B01D 15/40*** *(2006.01)* ***B01D 15/32*** *(2006.01)*
***B01D 15/30*** *(2006.01)* ***B01D 15/26*** *(2006.01)*
***B01J 20/22*** *(2006.01)* ***B01J 20/288*** *(2006.01)*
***B01J 20/285*** *(2006.01)* ***B01J 20/286*** *(2006.01)*
***B01D 15/20*** *(2006.01)*

(52) Cooperative Patent Classification (CPC):
**B01J 20/283; B01D 15/206; B01J 20/22; B01J 20/28004; B01J 20/28009; B01J 20/28016; B01J 20/28019; B01J 20/28042; B01J 20/28057; B01J 20/28059; B01J 20/28061; B01J 20/28064; B01J 20/28066; B01J 20/28069; B01J 20/28071;**
(Cont.)

(86) International application number:
**PCT/US2017/020859**

(87) International publication number:
**WO 2017/155848 (14.09.2017 Gazette 2017/37)**

## (54) POROUS MATERIALS WITH CONTROLLED POROSITY AND USE THEREOF FOR CHROMATOGRAPHIC SEPARATIONS

PORÖSE MATERIALIEN MIT KONTROLLIERTER POROSITÄT UND VERWENDUNG DAVON FÜR CHROMATOGRAFISCHE TRENNUNGEN

MATÉRIAUX POREUX À POROSITÉ CONTRÔLÉE ET LEUR UTILISATION POUR DES SÉPARATIONS CHROMATOGRAPHIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2016 US 201662304254 P**
**06.03.2016 US 201662304259 P**
**06.03.2016 US 201662304261 P**

(43) Date of publication of application:
**16.01.2019 Bulletin 2019/03**

(73) Proprietor: **Waters Technologies Corporation**
**Milford, MA 01757 (US)**

(72) Inventors:
- **WALSH, Daniel, P.**
  **Danvers, MA 01923 (US)**
- **WYNDHAM, Kevin, Daniel**
  **Upton, MA 01568 (US)**
- **FAIRCHILD, Jacob, Nathan**
  **Upton, MA 01568 (US)**
- **LAWRENCE, Nicole, L.**
  **Stafford Springs, CT 06076 (US)**

(74) Representative: **Forresters IP LLP**
**Skygarden**
**Erika-Mann-Straße 11**
**80636 München (DE)**

(56) References cited:
**WO-A1-2014/201033**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **KIRKLAND J J ET AL: "Superficially porous silica microspheres for fast high-performance liquid chromatography of macromolecules", JOURNAL OF CHROMATOGRAPHY A, ELSEVIER, AMSTERDAM, NL, vol. 890, no. 1, 18 August 2000 (2000-08-18), pages 3 - 13, XP004228904, ISSN: 0021-9673, DOI: 10.1016/S0021-9673(00)00392-7**
- **CABRERA K ET AL: "SilicaROD@? - A new challenge in fast high-performance liquid chromatography separations", TRAC TRENDS IN ANALYTICAL CHEMISTRY, ELSEVIER, AMSTERDAM, NL, vol. 17, no. 1, 1 January 1998 (1998-01-01), pages 50 - 53, XP004109114, ISSN: 0165-9936, DOI: 10.1016/S0165-9936(97)00091-5**


(52) Cooperative Patent Classification (CPC): (Cont.)
**B01J 20/28073; B01J 20/28076; B01J 20/28078; B01J 20/28083; B01J 20/28085; B01J 20/28092; B01J 20/28095; B01J 20/285; B01J 20/286; B01J 20/3204; B01J 20/3234; B01J 20/3236; B01J 20/324; B01J 20/3257; B01J 20/3272; B01J 20/3285; B01J 20/3289; B01J 20/3293; B01J 20/3295;** B01J 2220/46; B01J 2220/56; B01J 2220/82

## Description

### CROSS REFERENCE TO RELATED APPLICATIONS

This application claims the benefit of and priority to U.S. Provisional Application Ser. No. 62/304,254 filed March 6, 2016; U.S. Provisional Application Ser. No. 62/304,259 filed March 6, 2016; and U.S. Provisional Application Ser. No. 62/304,261 filed March 6, 2016.

### BACKGROUND OF THE INVENTION

Packing materials for liquid chromatography (LC) are generally classified into two types: organic materials, e.g., polydivinylbenzene, and inorganic materials typified by silica. Many organic materials are chemically stable against strongly alkaline and strongly acidic mobile phases, allowing flexibility in the choice of mobile phase pH. However, organic chromatographic materials generally result in columns with low efficiency, particularly with low molecular-weight analytes. Many organic chromatographic materials not only lack the mechanical strength of typical chromatographic silica and also shrink and swell when the composition of the mobile phase is changed.

Silica is the material most widely used in High Performance Liquid Chromatography (HPLC), Ultra Performance Liquid Chromatography (UPLC), and Supercritical Fluid Chromatography (SFC). The most common applications employ silica that has been surface-derivatized with an organic functional group such as octadecyl (C18), octyl (C8), phenyl, amino, cyano, etc. As stationary phases for HPLC, these packing materials result in columns that have high efficiency and do not show evidence of shrinking or swelling.

Current Hybrid Material Technologies (HMT) provide important solutions to traditional chromatographic problems experiences with silica based packing materials. HMT improvements include dramatically improved high and excellent low pH stability, great mechanical stability, good peak shape when used at pH 7, high efficiency, good retentivity, and desirable chromatographic selectivity.

Superficially porous particles (also called pellicular, fused-core, or core-shell particles) were routinely used as chromatographic sorbents in the 1970's. These earlier superficially porous materials had thin porous layers, prepared from the adsorption of silica sols to the surface of ill-defined, polydisperse, nonporous silica cores (>20 μm). The process of spray coating or passing a solution of sols through a bed of particles was commonly used. Kirkland extensively explored the use of superficially porous particles throughout this time and helped develop the Zipax brand of superficially porous materials in the 1970's. A review of Kirkland's career was provided by Unger (Journal of Chromatography A, 1060 (2004) 1).

Superficially porous particles have been a very active area of research in the past five years. One prior report that uses a mixed condensation of a tetraalkoxysilane with an organosilane of the type $YSi(OR)_3$ where Y contains an alkyl or aryl group and R is methoxy or ethoxy, has been reported by Unger for both fully porous (EP 84,979 B1, 1996) and superficially porous particles *(*Advanced Materials 1998, 10, 1036). These particles do not have sufficient size (1-2 μm) for effective use in UPLC, nor do they contain chromatographically enhanced pore geometry. Narrow distribution superficially porous particles have been reported by Kirkland (US Application 20070189944) using a Layer-by-Layer approach (LBL) - however these particles are not highly spherical. Other surfactant-templated approaches, can yield low yields of narrow distribution, fully porous particles, however these approaches have not been used to prepare monodisperse, spherical superficially porous particles having chromatographically enhanced pore geometry.

Modern, commercially available superficially porous particles use smaller (<2 μm), monodisperse, spherical, high purity non-porous silica cores. A porous layer is formed, growing these particles to a final diameter between 1.7-2.7 μm. The thickness of the porous layer and pore diameter are optimized to suit a particular application (e.g., small vs. large molecule separations). In order to remove polyelectrolytes, surfactants, or binders (additional reagents added during the synthesis) and to strengthen the particles for use in HPLC or UPLC applications, these material are calcined (500-1000°C in air). Additional pore enlargement, acid treatment, rehydroxylation, and bonding steps have been reported.

Evaluation of superficially porous materials (*e.g.,* Journal of Chromatography A. 1217 (2010) 1604-1615; Journal of Chromatography A 1217 (2010) 1589-1603) indicates improvements in column performance may be achieved using columns packed with these superficially porous materials. While not limited to theory, improvements were noted in van Deemter terms as well as improved thermal conductivity. The University of Cork also has a recent patent application (WO 2010/061367 A2) on superficially porous particles.

Although these reported superficially porous particle processes differ, they can be classified as layering of preformed sols (*e.g*., AMT process) or growth using high purity tetraalkoxysilane monomers (*e.g*., the University of Cork process). The AMT and University of Cork processes are similar in that they incorporate a repeated in-process workup (over nine times) using centrifugation followed by redispersion. For the AMT process this is a requirement of the layer-by-layer approach, in which alternate layers of positively charged poly-electrolyte and negatively charged silica sols are applied. For the University of Cork process the in-process workup is used to reduce reseeding and agglomeration events.

Particles prepared by this approach have smooth particle surfaces and have notable layer formation by FIB/SEM analysis. While both approaches use similar spherical monodisperse silica cores that increase in particle size as the porous layer increases, they differ in final particle morphology of the superficially porous particle. The AMT process results in bumpy surface features and variation of the porous layer thickness. This difference in surface morphology may be due to variation in the initial layering of sols. Most notably both processes use high temperature thermal treatment in air to remove additives (polyelectrolyte or surfactants) and improve the mechanical properties of their superficially porous particles. Since hybrid materials are not thermally stable above 600°C, this approach is not applicable to the formation of hybrid superficially porous particles.

The synthesis of narrow particle size distribution porous chromatographic particles is expected to have great benefit for chromatographic separations. Such particles should have an optimal balance of column efficiency and backpressure.

While the description of monodisperse superficially porous silica particles has been noted in the literature, these particles do not display chromatographically enhanced pore geometry and controlled pore diameters for many chromatographic applications.

Thus, there remains a need for a process in which packing materials, including fully porous and superficially porous materials, can be prepared with controlled and desireable pore diameters and chromatographically enhanced pore geometry.

Similarly, there remains a need for a process in which porous materials having controlled porosity can be prepared with improved chemical stability with high pH mobile phases.

A prior art arrangement is known from WO 2014/201033, which discloses chromatographic columns and separation devices comprising a superficially porous material.

**Brief Summary of the Invention**

The present invention provides novel chromatographic materials. *e.g.*, for chromatographic separations, and separations devices containing the chromatographic material. According to the present invention, there is provided a chromatographic material having controlled porosity as defined by Claim 1. There is further provided a chromatographic device as defined by Claim 11. Further, preferable, features are presented in the dependent claims. Any embodiment not falling within the scope of the claims is included for illustrative purposes only.

In certain embodiments, the chromatographic material having controlled porosity is in the form of a particle, a monolith, or a superficially porous material.

In other embodiments, the chromatographic materials of the invention have chromatographically enhancing pore geometry. In certain specific embodiments. the chromatographic materials of the invention do not have chromatographically enhancing pore geometry.

The invention provides a chromatographic material having controlled porosity comprising a chromatographic core material having a primary surface and one or more layers of a chromatographic surface material.

In certain embodiments, the chromatographic core material having a primary surface of the materials of the invention is a nonporous material, a substantially nonporous material, a superficially porous material, or a fully porous material. In specific embodiments, the chromatographic core material is an inorganic material, an organic material, or an inorganic/organic hybrid material. In still other specific embodiments, the chromatographic core material is an inorganic material; silica; silica coated with an inorganic/organic hybrid surrounding material; a magnetic core material; a magnetic core material coated with silica; a high thermal conductivity core material; a high thermal conductivity core material coated with silica; a composite material; an inorganic/organic hybrid surrounding material; a composite material coated with silica; a magnetic core material coated with an inorganic/organic hybrid surrounding material; or a high thermal conductivity core material coated with an inorganic/organic hybrid surrounding material. In certain embodiments, the chromatographic core material is not a hollow core material.

In some embodiments, the chromatographic core material having a primary surface of the materials of the invention has the formula:

$$(SiO_2)_d/[R^2((R)_p(R^1)_qSiO_t)_m] \qquad (I)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C3_2$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;

$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_1$-$C_{18}$ heteroaryl; or absent wherein each $R^2$ is attached to two or more silicon atoms;

p and q are each independently 0.0 to 3.0,

t is 0.5, 1.0, or 1.5;
d is 0 to about 30;
m is an integer from 1-20; wherein R, $R^1$ and $R^2$ are optionally substituted;

provided that:

(1) when $R^2$ is absent, m=1 and $t = \frac{(4-(p+g))}{2}$, when $0<p+q \leq 3$; and

(2) when $R^2$ is present, m=2-20 and $t = \frac{(3-(p+g))}{2}$, when $p+q \leq 2$;

the formula:

$$(SiO_2)_d/[((R)_p(R^1)_qSiO_t)] \qquad (II)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
d is 0 to about 30:
p and q are each independently 0.0 to 3.0, provided that when p+q=1 then t=1.5; when p+q=2 then t=l; or when p+q=3 then t=0.5;

the formula:

$$(SiO_2)_d/[(R^2((R^1)_rSiO_t)_m] \qquad (III)$$

wherein,

$R^1$ is $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_1$-$C_{18}$ heteroaryl; or absent; wherein each $R^2$ is attached to two or more silicon atoms;
d is 0 to about 30;
r is 0, 1 or 2, provided that when r=0 then t=1.5: when r=l then t=l; or when r=2, then t=0.5; and
m is an integer from 1-20;

the formula:

$$(A)_x(B)_y(C)_z \qquad IV$$

wherein the order of repeat units A, B, and C may be random, block, or a combination of random and block; A is an organic repeat unit which is covalently bonded to one or more repeat units A or B *via* an organic bond; B is an organosiloxane repeat unit which is bonded to one or more repeat units B or C via an inorganic siloxane bond and which may be further bonded to one or more repeat units A or B via an organic bond; C is an inorganic repeat unit which is bonded to one or more repeat units B or C via an inorganic bond; x and y are positive numbers, and z is a non negative number, wherein x +y + z = 1. In certain embodiments, z = 0, then $0.002 \leq x/y \leq 210$, and when $z \neq 0$, then $0.0003 \leq y/z \leq 500$ and $0.002 \leq x/(y+z) \leq 210$; or the formula:

$$(A)_x(B)_y(B^*)_{y^*}(C)_z \qquad (V)$$

wherein the order of repeat units A, B, B*, and C may be random, block, or a combination of random and block; A is an organic repeat unit which is covalently bonded to one or more repeat units A or B via an organic bond; B is an organosiloxane repeat unit which is bonded to one or more repeat units B or B* or C via an inorganic siloxane bond and which may be further bonded to one or more repeat units A or B via an organic bond, B* is an organosiloxane repeat unit which is bonded to one or more repeat units B or B* or C via an inorganic: siloxane bond, wherein B* is an organosiloxane repeat unit that does not have reactive (*i.e.,* polymerizable) organic components and may further have

a protected functional group that may be deprotected after polymerization; C is an inorganic repeat unit which is bonded to one or more repeat units B or B* or C via an inorganic bond; x and y are positive numbers and z is a non negative number, wherein $x + y + z = 1$. In certain embodiments, when $z = 0$, then $0{,}002 \leq x/(y+y^*) \leq 210$, and when $z \neq 0$, then $0.0003 \leq (y+y^*)/z \leq 500$ and $0.002 \leq x/(y+y^*+z) \leq 210$.

In certain embodiments of the inventinon, each layer of the one or more layers of a chromatographic surface material independently comprises one or more nanoparticles. In some emobodiments, each nanoparticle of the one or more nanoparticles is independently an inorganic material or an inorganic/organic hybrid material. In still other embodiments, each nanoparticle of the one or more nanoparticles is independently diamond, carbon black, graphite, a carbon nanotube, silicon carbide, or an oxide or nitride of aluminum, cerium, carbon black, carbon nanotubes, zirconium, barium, cerium, cobalt, copper, europium, gadolinium, iron, nickel, samarium, silicon, silver, titanium, zinc, or boron. In other embodiments, each nanoparticle of the one or more nanoparticles is independently a material having the formula has the formula:

$$(SiO_2)_d/[R^2((R)_p(R^1)_qSiO_t)_m] \qquad (I)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C3_2$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_1$-$C_{18}$ heteroaryl; or absent wherein each $R^2$ is attached to two or more silicon atoms;
p and q are each independently 0.0 to 3.0,
t is 0.5, 1.0, or 1.5;
d is 0 to about 30;
m is an integer from 1-20; wherein R, $R^1$ and $R^2$ are optionally substituted;

provided that:

(1) when $R^2$ is absent, m=1 and $t = \frac{(4-(p+g))}{2}$, when $0<p+q \leq 3$; and

(2) when $R^2$ is present, m=2-20 and $t = \frac{(3-(p+g))}{2}$, when $p+q \leq 2$;

the formula:

$$(SiO_2)_d/[((R)_p(R^1)_qSiO_t)] \qquad (II)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
d is 0 to about 30:
p and q are each independently 0.0 to 3.0, provided that when p+q=1 then t=1.5; when p+q=2 then t=l; or when p+q=3 then t=0.5;

the formula:

$$(SiO_2)_d/[(R^2((R^1)_rSiO_t)_m] \qquad (III)$$

wherein,

$R^1$ is $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl,
$C_5$-$C_{18}$ aryl, $C_1$-$C_{18}$ heteroaryl; or absent: wherein each $R^2$ is attached to two or more silicon atoms;
d is 0 to about 30;

r is 0, 1 or 2, provided that when r=0 then t=1.5: when r=l then t=l; or when r=2, then t=0.5; and
m is an integer from 1-20;

the formula:

$$(A)_x(B)_y(C)_z \qquad IV$$

wherein the order of repeat units A, B, and C may be random, block, or a combination of random and block; A is an organic repeat unit which is covalently bonded to one or more repeat units A or B *via* an organic bond; B is an organosiloxane repeat unit which is bonded to one or more repeat units B or C via an inorganic siloxane bond and which may be further bonded to one or more repeat units A or B via an organic bond; C is an inorganic repeat unit which is bonded to one or more repeat units B or C via an inorganic bond; x and y are positive numbers, and z is a non negative number, wherein $x + y + z = 1$. In certain embodiments, $z = 0$, then $0.002 \leq x/y \leq 210$, and when $z \neq 0$, then $0.0003 \leq y/z \leq 500$ and $0.002 \leq x/(y+z) \leq 210$; or the formula:

$$(A)_x(B)_y(B^*)_{y^*}(C)_z \qquad (V)$$

wherein the order of repeat units A, B, B*, and C may be random, block, or a combination of random and block; A is an organic repeat unit which is covalently bonded to one or more repeat units A or B via an organic bond; B is an organosiloxane repeat unit which is bonded to one or more repeat units B or B* or C via an inorganic siloxane bond and which may be further bonded to one or more repeat units A or B via an organic bond, B* is an organosiloxane repeat unit which is bonded to one or more repeat units B or B* or C via an inorganic: siloxane bond, wherein B* is an organosiloxane repeat unit that does not have reactive (*i.e.,* polymerizable) organic components and may further have a protected functional group that may be deprotected after polymerization; C is an inorganic repeat unit which is bonded to one or more repeat units B or B* or C via an inorganic bond; x and y are positive numbers and z is a non negative number, wherein $x + y + z = 1$. In certain embodiments, when $z = 0$, then $0,002 \leq x/(y+y^*) \leq 210$, and when $z \neq 0$, then $0.0003 \leq (y+y^*)/z \leq 500$ and $0.002 \leq x/(y+y^*+z) \leq 210$.

In certain embodiments, the materials used in each layer of the chromatographich suraface material may be a mixture of more than one type of material.

In particular embodiments, each nanoparticle of the one or more nanoparticles has a average diameter of 1-400 nm, or of 5-200 nm..

In certain embodiments, each layer of the one or more layers of a chromatographic surface material independently comprises nanoparticles of two or more different average diameters. In particular embodiments, each layer independently comprises nanoparticles different average diameters, wherein the two different average diameters is a larger average diameter and a smaller average diameter. In specific embodiments, the diameter ratio of the nanoparticles having the larger average diameter to the nanoparticles having the smaller average diameter in each layer is independently greater than 1.75; in the range of 1.75 to 100, or in the range of 2-50. In other specific embodiments, wherein the weight ratio of the nanoparticles having the larger average diameter to the nanoparticles having the smaller average diameter in each layer is independently from about 19:1 to 0.05:1; from about 15:1 to about 0.25:1; or from about 10:1 to about 0.5:1.

According to the invention, each layer of the one or more layers of a chromatographic surface material independently has an average pore diameter of 20 to 1500 Angstroms. The average pore diameter of the one or more layers of a chromatographic surface material varies in a predetermined pattern from the primary surface of the chromatographic core material to the outermost surface of the chromatographic material. In particular embodiments, the predetermined pattern comprises an increase in average pore diameter from the primary surface of the chromatographic core material to the outermost surface of the chromatographic material; a decrease in average pore diameter from the primary surface of the chromatographic core material to the outermost surface of the chromatographic material; or both an increase in average pore diameter from the primary surface of the chromatographic core material to the outermost surface of the chromatographic material and a decrease in average pore diameter from the primary surface of the chromatographic core material to the outermost surface of the chromatographic material.

According to the invention, each layer of the one or more layers of a chromatographic surface material independently has specific surface area of 25 to 1100 $m^2g$ The specific surface area of the one or more layers of a chromatographic surface material varies in a predetermined pattern from the primary surface of the chromatographic core material to the outermost surface of the chromatographic material. In particular embodiments, the predetermined pattern comprises an increase in specific surface area from the primary surface of the chromatographic core material to the outermost surface of the chromatographic material; a decrease in specific surface area from the primary surface of the chromatographic core material to the outermost surface of the chromatographic material; or both an increase in specific

surface area from the primary surface of the chromatographic core material to the outermost surface of the chromatographic material and a decrease in specific surface area from the primary surface of the chromatographic core material to the outermost surface of the chromatographic material.

In other embodiments, each layer of the one or more layers of a chromatographic surface material independently has an average pore volume of 0.15 to 1.5 $cm^3/g$. In still other embodiments, the average pore volume of the one or more layers of a chromatographic surface material varies in a predetermined pattern from the primary surface of the chromatographic core material to the outermost surface of the chromatographic material. In particular embodiments, the predetermined pattern comprises an increase in average pore volume from the primary surface of the chromatographic core material to the outermost surface of the chromatographic material; a decrease in average pore volume from the primary surface of the chromatographic core material to the outermost surface of the chromatographic material; or both an increase in average pore volume from the primary surface of the chromatographic core material to the outermost surface of the chromatographic material and a decrease in s average pore volume from the primary surface of the chromatographic core material to the outermost surface of the chromatographic material.

In certain embodiments, the predetermined pattern includes variations of two or more of average pore diameter, average pore volume, or specific surface area. In particular, the predetermined pattern can be developed to produce a desired shape to the pores or a desired property at a particular location within the pore.

In some embodiments, the least one layer of the one or more layers of a chromatographic surface material is an inorganic/organic hybrid material which comprises a hydrophobic surface group and one or more ionizable modifiers. In such embodiments, each ionizable modifier independently contains a carboxylic acid group, a sulfonic acid group, an arylsulfonic group, a phosphoric acid group, a boronic acid group, an amino group, an imido group, an amido group, a pyridyl group, an imidazolyl group, an ureido group, a thionyl-ureido group or an aminosilane group. In particular such embodiments, each ionizable modifier is independently obtained from an ionizable modifying reagent selected from groups having the formula (I)

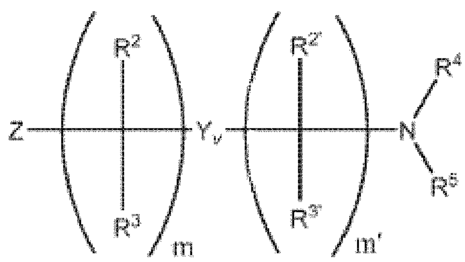

(I)

the formula (II):

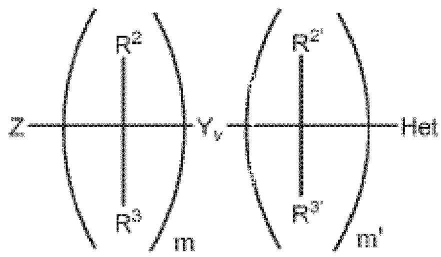

(II) ,

11

the formula (III):

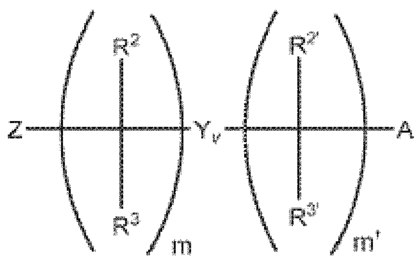

(III)

or a combination thereof
wherein

- m is an integer from 1-8;
- v is 0 or 1;
- when v is 0, m' is 0;
- when v is 1, m' is an integer from 1-8;
- Z represents a chemically reactive group, including (but not limited to)

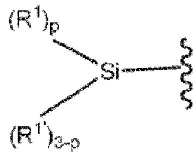

,

-OH, -OR<$^6$, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
- Y is an embedded polar functionality;
- each occurrence of $R^1$ independently represents a chemically reactive group on silicon, including (but not limited to) -H, -OH-, -$OR^6$, dialkylamine, triflate, Br, Cl, I, vinyl, alkene, or $(CH_2)_m$-Q;
- each occurrence of Q is -OH, -$OR^6$, amine, alkylamine, dialkylamine, isocyanate, acyl c:bloride, triflate, isocyanate, thiocyanate, imidazole carbonate, NHS-ester, carboxylic acid, ester, epoxide, alkyne, alkene, azide, -Br, -C1, or -I;
- m" is an integer from 1-8
- p is an integer from 1-3;
- each occurrence of $R^1$ independently represents F, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl, fluoroalkyl, or fluoroaryl;
- each occurrence of $R^2$, $R^{2'}$, $R^3$ and $R^3$ independently represents hydrogen, $C_1$-$C_{18}$ alkyl, $C_2$-$C_{18}$ alkenyl, $C_2$-$C_{18}$ alkynyl, $C_3$-$C_{18}$ cycloalkyl, $C_2$-$C_{18}$ heterocycloalkyl, $C_5$-$C_{18}$ aryl, $C_5$-$C_{18}$ aryloxy, or $C_4$-$C_{18}$ heteroaryl, -Z, or a group having the formula-$Si(R')_bR''_a$ or -C(R') $bR''_a$;
- a and b each represents an integer from 0 to 3 provided that a + b = 3;
- R' represents a $C_2$-$C_6$ straight, cyclic or branched alkyl group;
- R" is a functionalizing group selected from the group consisting of alkyl, alkenyl, alkynyl, aryl, cyano, amino, diol, nitro, ester, a cation or anion exchange group, an alkyl or aryl group containing an embedded polar functionality and a chiral moiety;
- $R^4$ represents hydrogen, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
- $R^5$ represents hydrogen, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
- each occurrence of $R^6$ independently represents $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
- Het represents a heterocyclic or heteroaryl ring system comprising at least one nitrogen atom; and
- A represents an acidic ionizable modifier moiety or a dual charge ionizable modifier moiety.

In such embodiments, the molar ratio of the hydrophobic surface group : ionizable modifier is from about 2.5:1 to about 350:1; about 3:1 to about 200:1 ;or about 4:1 to about 35:1. In other embodiments, the concentration of ionizable modifier is less than about 0.5 $\mu mol/m^2$; less than about 0.4 $\mu mol/m^2$; less than about 0.3 $\mu mol/m^2$from about 0.01 $\mu mol/m^2$ to about 0.5 $\mu mol/m^2$;from about 0.01 $\mu mol/m^2$ to about 0.4 $\mu mol/m^2$;or from about 0.03 $\mu mol/m^2$ to about 0.3 $\mu mol/m^2$.

The chromatographic material of the invention has a surface area of about 25 to 1100 $m^2/g$; of about 80 to 500 $m^2/g$; or of about 120 to 330 $m^2/g$.

In still other embodiments, the chromatographic material of the invention has a pore volume of about 0.15 to 1.7 $m^2/g$; or of about 0.5 to 1.3 $m^2/g$.

In other embodiments, the chromatographic material of the invention has a micropore surface area of less than about 110 $m^2/g$; of less than about 105 $m^2/g$; of less than about 80 $m^2/g$; of less than about 50 $m^2/g$.

In yet other embodiments, the chromatographic material of the invention has an average pore diameter of about 20 to 1500Å; of about 50 to 1000Å; of about 100 to 750Å; of about 110 to 500Å; of about 100 to 750Å; or of about 110 to 500Å.

In other embodiments, the chromatographic material of the invention, where the material is a particle having a

chromatographic core, the a ratio of core diameter to particle diameter of 0.05-0.99; or from 0.2-0.95.

In particular embodiments, the chromatographic material of Claim 1, is hydrolytically stable at a pH of about l to about 14; of about 10 to about 14; or of about 1 to about 5.

In certain embodiments, the chromatographic material of the invention further comprises a surface modification. In specific embodiments, the material has been surface modified by coating with a polymer; by a combination of organic group and silanol group modification; by a combination of organic group modification and coating with a polymer; by a combination of silanol group modification and coating with a polymer; via formation of an organic covalent bond between the material's organic group and the modifying reagent; or by a combination of organic group modification, silanol group modification and coating with a polymer.

In another aspect, the invention provides a separations device having a stationary phase comprising the chromatographic material of the invention. In certain embodiments, said device is selected from the group consisting of chromatographic columns, thin layer plates, filtration membranes, microfluidic separation devices, sample cleanup devices, solid supports, microchip separation devices, and microtiter plates. In other embodiments, the separations device is useful for applications selected from the group consisting of solid phase extraction, high pressure liquid chromatography, combinatorial chemistry, synthesis, biological assays, ultra performance liquid chromatography, ultra fast liquid chromatography, ultra high pressure liquid chromatography, supercritical fluid chromatography, and mass spectrometry.

In still another aspect, the invention provides a chromatographic column, comprising

a) a column having a cylindrical interior for accepting a packing material and

b) a packed chromatographic bed comprising the chromatographic material of the invention.

Described but not claimed is a kit comprising the chromatographic material of the invention and instructions for use. In certain embodiments, the instructions are for use with a separations device, including, but not limited to chromatographic columns, thin layer plates, microfluidic separation devices, filtration membranes, sample cleanup devices and microtiter plates.

In still another aspect, the invention provides a chromatographic device, comprising

a) an interior channel for accepting a packing material and
b) a packed chromatographic bed comprising the chromatographic material of the invention.

Also described but not claimed is a method for preparing a chromatographic material according to the invention comprising the steps of:

a) providing a chromatographic core material having a primary surface; and
b) applying to said primary surface one or more layers of chromatographic surface material, to produce a chromatographic material having controlled porosity.

Further described is a method for preparing a chromatographic material according to the invention comprising the steps of:

a) providing a chromatographic core material having a primary surface; and
b) applying to said surface a chromatographic surface material and an electrolyte;
c) removing the polyelectrolyte to form a resultant material having a surface; and
d) optionally, repeating steps b and c one or more time on surface of the resultant material, to produce a chromatographic material having controlled porosity.

In certain embodiments utilizing a polyelectrolyte, each instance of the polyelectrolyte is independently a linear, branched, and block polymers containing one or more alkyl, cycloalkyl, aryl or ethylene oxide groups and one or more primary, secondary, tertiary and quaternary amino groups, pyrrolidone groups, pyridine groups, or imidazole groups, wherein each polyelectrolyte may be positively or negatively charged. In such embodiments, the polyelectrolyte is removed by calcination, thermal treatment, chemical extraction, degradation, ozonolysis, or combinations thereof

In other emboduiments, the methods further comprise a post-synthetic processing step. In such embodiments, the post-synthetic processing step is endcapping, hydrothermal treatment, extraction, ozonolysis, lyophilization, pseudomorphic transformation, surrounding the chromatographic material in an inorganic surrounding material, surrounding the chromatographic material in an inorganic/organic hybrid surrounding material, drying, thermal treatment, dispersion, acid treatment, reaction with a hybrid functional group, surface modification, grinding, classification, sedimentation, or

combinations thereof.

Described but not claimed is a kit comprising the superficially porous material of the invention, and instructions for use. In certain embodiments, the instructions are for use with a separations device. In certain other embodiments, the separations device is selected from the group consisting of chromatographic columns, thin layer plates, microfluidic separation devices, solid phase extraction devices, filtration membranes, sample cleanup devices and microtiter plates.

## BRIEF DESCRIPTION OF THE DRAWINGS

FIG. 1 depicts the cross-sectional geometry of superficially porous and fully porous particles. c = particle center; d = diameter of core; d"= diameter of particle; 1 = radius of particle; 0 = origin of porosity along the radius; 1 = external surface along the radius.

FIG. 2 shows representative selected physical property distributions of superficially porous materials having normalized surface area (SA, left) and normalized pore diameter (PD, right) along the radius of a particle (1). The solid lines represent the planned changes in surface area and pore diameter going from the core of the nonporous particle to the external particle surface. The dotted line represents deviations in pore properties near the nonporous core surface.

FIG. 3 shows an estimation of specific surface area (SSA) for silica nanoparticles, using Equation 2..

FIG. 4 shows an estimation of core weight fraction for different superficially porous silica materials based on the ratio of core diameter to particle diamater (Rho).

FIG. 5 shows an estimation of SSA for a superficially porous silica material using different silica nanoparticles in the synthesis and Rho of 0.73 or 0.90. This method assumes a single nanoparticle feed used for the formation of the porous layer.

FIG. 6 shows an estimation of SSA for superficially porous silica material using different silica nanoparticles (5-30 nm) and different Rho. This method assumes a single nanoparticle feed used for the formation of the porous layer.

FIG. 7 shows an estimation of average pore diameter (APD) for different superficially porous silica materials based on different silica nanoparticles. This method assumes a single nanoparticle feed used for the formation of the porous layer. Estimation of APD for different superficially porous silica materials based on different silica nanoparticles. This method assumes a single nanoparticle feed used for the formation of the porous layer.

FIG. 8 shows an estimation of SSA for Products 1a-1j. Estimated SSA is included using Equations 2-4, having modified apparent nanoparticle size. This method assumes a single nanoparticle feed used for the formation of the porous layer.

FIG. 9 shows FIB/SEM images of Products 1j and 2r.

FIG. 10 shows the pore diameter distributions for Products 3a, 7a and 7b from nitrogen sorption measurements (Desorption. dV/dLog(D)).

FIG. 11 shows the pore diameter distributions for Products 3c, 7c and 7d from nitrogen sorption measurements (Desorption, dV/dLog(D)).

FIG. 12 shows the pore diameter distributions for Products 3e, 7e and 7f from nitrogen sorption measurements (Desorption, dV/dLog(D)).

FIG. 13 shows FIB/SEM images of Products 3e and 7f.

FIG. 14 shows the pore diameter distributions for Products 1j, 3a, and 3f from nitrogen sorption measurements (Desorption, dV/dLog(D)).

FIG. 15 shows FIB/SEM images of Products 3f, 7g and 7h.

FIG. 16 shows the estimated Surface Area and Pore Diameter distribution in the porous layer from the core surface (normalized distance =0) to the external particle surface (normalized distance =1) for Product 3a. These estimations did not included deviations in pore properties near 0.

FIG. 17 shows the estimated Surface Area and Pore Diameter distribution in the porous layer from the core surface (normalized distance =0) to the external particle surface (normalized distance =1) for Product 3e. These estimations did not included deviations in pore properties near 0.

FIG. 18 shows the estimated Surface Area (SA) of porous layer from the core particle (normalized distance =0) to the particle surface (normalized distance =1) for Product 5a-5c. These estimations did not included deviations in pore properties near 0.

FIG. 19 shows the estimated Pore Diameter (PD) of porous layer from the core particle (normalized distance =0) to the particle surface (normalized distance =1) for Product 5a-5c. These estimations did not included deviations in pore properties near 0.

FIG. 20 shows the estimated Pore Diameter (PD) of porous layer from the core surface (origin of the x-axis) to the external surface (far right of the x-axis) for Products of Example 6. In the case of Rho= 0, the origin of the x-axis represents the center of the fully porous material. These estimations did not included deviations in pore properties

near 0.

FIG. 21 shows the estimated Surface Area and Pore Diameter distribution in the porous layer from the core surface (normalized distance 0) to the external particle surface (normalized distance =1) for Product 7e. These estimations did not included deviations in pore properties near 0.

FIG. 22 shows the estimated Surface Area and Pore Diameter distribution in the porous layer from the core surface (normalized distance =0) to the external particle surface (normalized distance =1) for Product 7f. These estimations did not included deviations in pore properties near 0.

FIG. 23 shows an Alternative Model for Estimated Surface Area and Pore Diameter distribution in the porous layer from the core surface (normalized distance =0) to the external particle surface (normalized distance=1) for Product 7f. These estimations did not included deviations in pore properties near 0.

FIG. 24 shows the Molecular Weight and Approximate molecular radius for selected proteins in Table 6, with reported molecule size fitting Models 1-4.

FIG. 25 shows the Cross-sectional geometry of dual porosity zone superficially porous and fully porous particles. c = particle center; d = diameter of core; d"= diameter of particle; 1 = radius of particle;

FIG. 26 shows the cross-sectional geometry of a torus-shaped or a toroid-shaped superficially porous particle. d1 = diameter across the ring of material; d2 = diameter across the nonporous core ring of material; d3 = diameter across the internal vacant ring; d4 = cross section particle diameter; c1 = center of material ring (found at d1/2); 11 = radius across the center of material ring to surface of material ring; 0 = origin of porosity along the radius; 1 = termination of the porous layer along the radius.

FIG. 27 is a graphical depiction of Ostwald ripening.

FIG. 28 presents synthetic shemes useful for the preparation of the materials of the invention. The schemes are described in detail below.

## DETAILED DESCRIPTION OF THE INVENTION

The present invention provides novel chromatographic materials, e.g., for chromatographic separations, and separations devices containing the chromatographic material. The present invention will be more fully illustrated by reference to the definitions set forth below.

### Definitions

The present invention provides novel chromatographic materials, e.g., for chromatographic separations, and separations devices containing the chromatographic material. The present invention will be more fully illustrated by reference to the definitions set forth below.

"Hybrid", including "hybrid inorganic/organic material," includes inorganic-based structures wherein an organic functionality is integral to both the internal or "skeletal" inorganic structure as well as the hybrid material surface. The inorganic portion of the hybrid material may be, e.g., alumina, silica, titanium, cerium, or "Hybrid" includes inorganic-based structures wherein an organic functionality is integral to both the internal or "skeletal" inorganic structure as well as the hybrid material surface. The inorganic portion of the hybrid material may be, e.g., alumina, silica. titanium. cerium, or zirconium oxides, or ceramic material; in an advantageous embodiment, the inorganic portion of the hybrid material is silica. As noted above, exemplary hybrid materials are shown in U.S. Patent Nos. 4,017,528, 6,528,167, 6,686,035 and 7,175,913 and International Application Publication No. WO2008/103423.

The term "alicyclic group" includes closed ring structures of three or more carbon atoms. Alicyclic groups include cycloparaffins or naphthenes which are saturated cyclic hydrocarbons, cycloolefins, which are unsaturated with two or more double bonds, and cycloacetylenes which have a triple bond. They do not include aromatic groups. Examples of cydoparaffins include cyclopropane, cyclohexane and cyclopentane. Examples of cycloolefins include cyclopentadiene and cyclooctatetraene. Alicyclic groups also include fused ring structures and substituted alicyclic groups such as alkyl substituted alicyclic groups. In the instance of the alicyclics such substituents can further comprise a lower alkyl, a lower alkenyl, a lower alkoxy, a lower alkylthio, a lower alkylamino, a lower alkylcarboxyl, a nitro, a hydroxyl, -CF3, -CN, or the like.

The term "aliphatic group" includes organic compounds characterized by straight or branched chains, typically having between 1 and 22 carbon atoms. Aliphatic groups include alkyl groups, alkenyl groups and alkynyl groups. In complex structures, the chains can be branched or cross-linked. Alkyl groups include saturated hydrocarbons having one or more carbon atoms, including straight-chain alkyl groups and branched-chain alkyl groups. Such hydrocarbon moieties may be substituted on one or more carbons with, for example, a halogen, a hydroxyl, a thiol, an amino, an alkoxy, an alkylcarboxy, an alkylthio, or a nitro group. Unless the number of carbons is otherwise specified, "lower aliphatic" as used herein means an aliphatic group, as defined above (*e.g.*, lower alkyl, lower alkenyl, lower alkynyl), but having from one to six carbon atoms. Representative of such lower aliphatic groups, *e.g.*, lower alkyl groups, are methyl, ethyl, n-propyl,

isopropyl, 2-chloropropyl, n-butyl, sec-butyl, 2- aminobutyl, isobutyl, tert-butyl, 3-thiopentyl and the like. As used herein, the term "nitro" means $-NO_2$; the term "halogen" designates -F, -Cl, -Br or -I; the term "thiol" means SH and the term "hydroxyl" means -OH. Thus, the term "alkylamino" as used herein means an alkyl group, as defined above, having an amino group attached thereto. Suitable alkylamino groups include groups having 1 to about 12 carbon atoms, advantageously from 1 to about 6 carbon atoms. The term "alkylthio" refers to an alkyl group, as defined above, having a sulfhydryl group attached thereto. Suitable alkylthio groups include groups having 1 to about 12 carbon atoms, advantageously from 1 to about 6 carbon atoms. The term "alkylcarboxyl" as used herein means an alkyl group, as defined above, having a carboxyl group attached thereto. The term "alkoxy" as used herein means an alkyl group, as defined above, having an oxygen atom attached thereto. Representative alkoxy groups include groups having 1 to about 12 carbon atoms, advantageously l to about 6 carbon atoms, e.g., methoxy, ethoxy, propoxy, tert-butoxy and the like. The terms "alkenyl" and "alkynyl" refer to unsaturated aliphatic groups analogous to alkyls, but which contain at least one double or triple bond respectively. Suitable alkenyl and alkynyl groups include groups having 2 to about 12 carbon atoms, advantageously from 1 to about 6 carbon atoms.

The term "alkyl" includes saturated aliphatic groups, including straight-chain alkyl groups, branched-chain alkyl groups, cycloalkyl (alicyclic) groups, alkyl substituted cycloalkyl groups and cycloalkyl substituted alkyl groups. In certain embodiments, a straight chain or branched chain alkyl has 30 or fewer carbon atoms in its backbone, *e.g.,* C1-C30 for straight chain or C3-C30 for branched chain. In certain embodiments, a straight chain or branched chain alkyl has 20 or fewer carbon atoms in its backbone, *e.g.*, C1-C20 for straight chain or C3-C20 for branched chain, and more advantageously 18 or fewer. Likewise, advantageous cycloalkyls have from 4-10 carbon atoms in their ring structure and more advantageously have 4-7 carbon atoms in the ring structure. The term "lower alkyl" refers to alkyl groups having from 1 to 6 carbons in the chain and to cycloalkyls having from 3 to 6 carbons in the ring structure.

Moreover, the term "alkyl" (including "lower alkyl") as used throughout the specification and Claims includes both "unsubstituted alkyls" and "substituted alkyls", the latter of which refers to alkyl moieties having substituents replacing a hydrogen on one or more carbons of the hydrocarbon backbone. Such substituents can include, for example, halogen, hydroxyl, alkylcarbonyloxy, arylcarbonyloxy, alkoxycarbonyloxy, aryloxycarbonyloxy, carboxylate, alkylcarbonyl, alkoxycarbonyl, aminocarbonyl, alkylthiocarbonyl, alkoxyl, phosphate, phosphonato, phosphinato, cyano, amino (including alkyl amino, dialkylamino, arylamino, diarylamino and alkylarylamino), acylamino (including alkylcarbonylamino, arylcarbonylamino, carbamoyl and ureido), amidino, imino, sulfhydryl, alkylthio, arylthio, thiocarboxylate, sulfate, sulfonato, sulfamoyl, sulfonamido, nitro, trifluoromethyl, cyano, azido, heterocyclyl, aralkyl, or an aromatic or heteroaromatic moiety. It will be understood by those skilled in the art that the moieties substituted on the hydrocarbon chain can themselves be substituted, if appropriate. Cycloalkyls can be further substituted, e.g., with the substituents described above. An "aralkyl" moiety is an alkyl substituted with an aryl, e.g., having 1 to 3 separate or fused rings and from 6 to about 18 carbon ring atoms, e.g., phenylmethyl (benzyl).

The term "amino," as used herein, refers to an unsubstituted or substituted moiety of the formula -NRaRb, in which Ra and Rb are each independently hydrogen, alkyl, aryl, or heterocyclyl, or Ra and Rb, taken together with the nitrogen atom to which they are attached, form a cyclic moiety having from 3 to 8 atoms in the ring. Thus, the term "amino" includes cyclic amino moieties such as piperidinyl or pyrrolidinyl groups, unless otherwise stated. An "amino-substituted amino group" refers to an amino group in which at least one of Ra and Rb, is further substituted with an amino group.

The term "aromatic group" includes unsaturated cyclic hydrocarbons containing one or more rings. Aromatic groups include 5- and 6-membered single-ring groups which may include from zero to four heteroatoms, for example, benzene, pyrrole, furan, thiophene, imidazole, oxazole, thiazole, triazole, pyrazole, pyridine, pyrazine, pyridazine and pyrimidine and the like. The aromatic ring may be substituted at one or more ring positions with, for example, a halogen, a lower alkyl, a lower alkenyl, a lower alkoxy, a lower alkylthio, a lower alkylamino, a lower alkylcarboxyl, a nitro, a hydroxyl, -CF3, -CN, or the like.

The term "aryl" includes 5- and 6-membered single-ring aromatic groups that may include from zero to four heteroatoms, for example, unsubstituted or substituted benzene, pyrrole, furan, thiophene, imidazole, oxazole, thiazole, triazole, pyrazole, pyridine, pyrazine, pyridazine and pyrimidine and the like. Aryl groups also include polycyclic fused aromatic groups such as naphthyl, quinolyl, indolyl and the like. The aromatic ring can be substituted at one or more ring positions with such substituents, *e.g.,* as described above for alkyl groups. Suitable aryl groups include unsubstituted and substituted phenyl groups. The term "aryloxy" as used herein means an aryl group, as defined above, having an oxygen atom attached thereto. The term "aralkoxy" as used herein means an aralkyl group, as defined above, having an oxygen atom attached thereto. Suitable aralkoxy groups have 1 to 3 separate or fused rings and from 6 to about 18 carbon ring atoms, *e.g.,* O-benzyl.

The term "ceramic precursor" is intended include any compound that results in the formation of a ceramic material.

The term "chiral moiety" is intended to include any functionality that allows for chiral or stereoselective syntheses. Chiral moieties include, but are not limited to, substituent groups having at least one chiral center, natural and unnatural amino-acids, peptides and proteins, derivatized cellulose, macrocyclic antibiotics, cyclodextrins, crown ethers, and metal

complexes.

The language "chromatographically-enhancing pore geometry" includes the geometry of the pore configuration of the presently-disclosed materials, which has been found to enhance the chromatographic separation ability of the material, *e.g.,* as distinguished from other chromatographic media in the art. For example, a geometry can be formed, selected or constructed, and various properties and/or factors can be used to determine whether the chromatographic separations ability of the material has been "enhanced", *e.g.,* as compared to a geometry known or conventionally used in the art. Examples of these factors include high separation efficiency, longer column life and high mass transfer properties (as evidenced by, *e.g.,* reduced band spreading and good peak shape.) These properties can be measured or observed using art-recognized techniques. For example, the chromatographically-enhancing pore geometry of the present porous materials is distinguished from the prior art particles by the absence of "ink bottle" or "shell shaped" pore geometry or morphology, both of which are undesirable because they, *e.g.,* reduce mass transfer rates, leading to lower efficiencies. Chromatographically-enhancing pore geometry is found in porous materials containing only a small population of micropores. Porous materials with such a low micropore surface area (MSA) give chromatographic enhancements including high separation efficiency and good mass transfer properties (as evidenced by, *e.g.,* reduced band spreading and good peak shape). Micropore surface area (MSA) is defined as the surface area in pores with diameters less than or equal to 34.Å, determined by multipoint nitrogen sorption analysis from the adsorption leg of the isotherm using the BJH method. As used herein, the acronyms "MSA" and "MPA" are used interchangeably to denote "micropore surface area".

The term "functionalizing group" includes organic functional groups which impart a certain chromatographic functionality to a chromatographic stationary phase.

The term "heterocyclic group" includes closed ring structures in which one or more of the atoms in the ring is an element other than carbon, for example, nitrogen, sulfur, or oxygen. Heterocyclic groups can be saturated or unsaturated and heterocyclic groups such as pyrrole and furan can have aromatic character. They include fused ring structures such as quinoline and isoquinoline. Other examples of heterocyclic groups include pyridine and purine. Heterocyclic groups can also be substituted at one or more constituent atoms with, for example, a halogen, a lower alkyl, a lower alkenyl, a lower alkoxy, a lower alkylthio, a lower alkylamino, a lower alkylcarboxyl, a nitro, a hydroxyl, $-CF_3$, -CN, or the like. Suitable heteroaromatic and heteroalicyclic groups generally will have 1 to 3 separate or fused rings with 3 to about 8 members per ring and one or more N, O or S atoms, e.g. coumarinyl, quinolinyl, pyridyl, pyrazinyl, pyrimidyl, furyl, pyrrolyl, thienyl, thiazolyl, oxazolyl, imidazolyl, indolyl, benzofuranyl, benzothiazolyl, tetrahydrofuranyl, tetrahydropyranyl, piperidinyl, morpholino and pyrrolidinyl.

The term "metal oxide precursor" is intended include any compound that contains a metal and results in the formation of a metal oxide, e.g., alumina, silica, titanium oxide, zirconium oxide, or cerium oxide.

The term "monolith" is intended to include a collection of individual particles packed into a bed formation, in which the shape and morphology of the individual particles are maintained. The particles are advantageously packed using a material that binds the particles together. Any number of binding materials that are well known in the art can be used such as, for example, linear or cross-linked polymers of divinylbenzene, methacrylate, urethanes, alkenes, alkynes, amines, amides, isocyanates, or epoxy groups, as well as condensation reactions of organoalkoxysilanes, tetraalkoxysilanes, polyorganoalkoxysiloxanes, polyethoxysiloxanes, and ceramic precursors. In certain embodiments, the term "monolith" also includes hybrid monoliths made by other methods, such as hybrid monoliths detailed in US Patent No. 7,250,214; hybrid monoliths prepared from the condensation of one or more monomers that contain 0-99 mole percent silica (*e.g.,* $SiO_2$); hybrid monoliths prepared from coalesced porous inorganic/organic particles; hybrid monoliths that have a chromatographically-enhancing pore geometry: hybrid monoliths that do not have a chromatographically-enhancing pore geometry: hybrid monoliths that have ordered pore structure; hybrid monoliths that have non-periodic pore structure; hybrid monoliths that have non-crystalline or amorphous molecular ordering; hybrid monoliths that have crystalline domains or regions: hybrid monoliths with a variety of different macropore and mesopore properties; and hybrid monoliths in a variety of different aspect ratios. In certain embodiments, the term "monolith" also includes inorganic monoliths, such as those described in G. Guiochon / J. Chromatogr. A 1168 (2007) 101-168.

The term "nanoparticle" is a microscopic particle/grain or microscopic member of a powder/nanopowder with at least one dimension less than about 100 nm, *e.g.,* a diameter or particle thickness of less than about 100 nm (0.1 nm), which may be crystalline or noncrystalline. Nanoparticles have properties different from, and often superior to those of conventional bulk materials including, for example, greater strength, hardness, ductility, sinterability, and greater reactivity among others. Considerable scientific study continues to be devoted to determining the properties of nanomaterials, small amounts of which have been synthesized (mainly as nano-size powders) by a number of processes including colloidal precipitation, mechanical grinding, and gas-phase nucleation and growth. Extensive reviews have documented recent developments in nano-phase materials: Gleiter, H. (1989) "Nano-crystalline materials," Prog. Mater. Sci. 33:223-315 and Siegel, R. W. (1993) "Synthesis and properties of nano-phase materials," Mater. Sci. Eng. A168:189-197. In certain embodiments, the nanoparticles comprise oxides or nitrides of the following: silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, and mixtures thereof. In certain embodiments, the nanoparticles of the present

invention are selected from diamonds, zirconium oxide (amorphous, monoclinic, tetragonal and cubic forms), titanium oxide (amorphous, anatase, brookite and rutile forms), aluminum (amorphous, alpha, and gamma forms), and boronitride (cubic form). In particular embodiments, the nanoparticles of the present invention are selected from nano-diamonds, silicon carbide, titanium dioxide (anatase form), cubic-boronitride, and any combination thereof. Moreover, in particular embodiments, the nanoparticles may be crystalline or amorphous. In particular embodiments, the nanoparticles are less than or equal to 100 nm in diameter, *e.g.,* less than or equal to 50 nm in diameter, *e.g.,* less than or equal to 20 nm in diameter.

Moreover, it should be understood that the nanoparticles that are characterized as dispersed within the composites of the invention are intended to describe exogenously added nanoparticles. This is in contrast to nanoparticles, or formations containing significant similarity with putative nanoparticles, that are capable of formation in situ, wherein, for example, macromolecular structures, such as particles, may comprise an aggregation of these endogenously created.

The term "substantially disordered" refers to a lack of pore ordering based on x-ray powder diffraction analysis. Specifically, "substantially disordered" is defined by the lack of a peak at a diffraction angle that corresponds to a d value (or d-spacing) of at least 1 nm in an x-ray diffraction pattern.

"Surface modifiers" include (typically) organic functional groups which impart a certain chromatographic functionality to a chromatographic stationary phase. The porous inorganic/organic hybrid particles possess both organic groups and silanol groups which may additionally be substituted or derivatized with a surface modifier.

The language "surface modified" is used herein to describe the composite material of the present invention that possess both organic groups and silanol groups which may additionally be substituted or derivatized with a surface modifier. "Surface modifiers" include (typically) organic functional groups which impart a certain chromatographic functionality to a chromatographic stationary phase. Surface modifiers such as disclosed herein are attached to the base material, e.g., via derivatization or coating and later crosslinking, imparting the chemical character of the surface modifier to the base material. In one embodiment, the organic groups of a hybrid material, e.g., particle, react to form an organic covalent bond with a surface modifier. The modifiers can form an organic covalent bond to the material's organic group via a number of mechanisms well known in organic and polymer chemistry including but not limited to nucleophilic, electrophilic, cycloaddition, free-radical, carbene, nitrene, and carbocation reactions. Organic covalent bonds are defined to involve the formation of a covalent bond between the common elements of organic chemistry including but not limited to hydrogen, boron, carbon, nitrogen, oxygen, silicon, phosphorus, sulfur, and the halogens. In addition, carbon-silicon and carbon-oxygen-silicon bonds are defined as organic covalent bonds, whereas silicon-oxygen-silicon bonds that are not defined as organic covalent bonds. A variety of synthetic transformations are well known in the literature, see, *e.g.,* March, J. Advanced Organic Chemistry, 3rd Edition, Wiley, New York, 1985.

The language, "composite material" and the term "composite" are used interchangeably herein to describe the engineered materials of the invention composed of one or more components described herein in combination with dispersed nanoparticles, wherein each component/nanoparticle remains separate and distinct on a macroscopic level within the finished structure. The composite material of the present invention is independent of form, and may be monolithic or particulate in nature. Moreover, a short-hand convention may be used to describe a composite material containing a dispersed nanoparticle, $Np/(A)_w(B)_x(C)_y$, and may be understood as follows: the symbolic representation to the left of the slash mark represents the dispersed nanoparticle, and the symbolic representations to the right of the slash mark represent the components that comprise the material that the nanoparticle (noted on the left of the slash mark) is dispersed within. In certain embodiments, the composite materials of the present invention may be nanocomposites, which are known to include, at least, for example, nano/nano-type, intra-type, inter-type, and intra/inter-type. (Nanocomposites Science and Technology, edited by P.M. Ajayan, L.S. Schadler, P.V. Braun, Wiley-VCH (Weinheim, Germany), 2003**)**

The terms "'material having a high thermal conductivity", "high thermal conductivity core", and a "high thermal conductivity additive" are defined as a material, core material, or composite additive having a thermal conductivity greater than 20 W/(m·K). In various embodiments the additive has a thermal conductivity ranges from: about 20 W/(m·K) to not more than 3500 W/(m·K); about 100 W/(m·K) to not more than 3300 W/(m·K); and 400 W/(m, K) to not more than 3000 W/(m·K). High thermal conductivity cores or additives can be, for example and without limitation, a 0.1-8 μm core particle, nanoparticle additives, or a metal oxide precursor. In various embodiments the high thermal conductivity core or additive includes (but is not limited to) aluminum, copper, gold, and diamonds.

A "high thermal diffusivity" core or additive is defined as an additive used in a superficially porous materials as having a thermal diffusivity greater than 20 $mm^2/s$. In various embodiments the core or additive has a thermal diffusivity ranges from: about 20 $mm^2/s$ to not more than 2000 $mm^2/s$; about 100 $mm^2/s$ to not more than 1600 $mm^2/s$ and 150 $mm^2/s$ to not more than 1400 $mm^2/s$ This high thermal conductivity core or additive can be a 0.1-8 μm core particle, nanoparticle additives, or a metal oxide precursor. In various embodiments the high thermal conductivity core or additive includes (but is not limited to) aluminum, copper, gold, and diamonds.

A "high thermal conductivity superficially porous material (or particle)" is defined as a material that has improved

thermal conductivity or improved thermal diffusivity over a porous silica particle of the same size. In various embodiments the higher thermal conductivity superficially porous material is a material that has improved thermal conductivity or thermal diffusivity over a superficially porous silica particle of the same size. In various embodiments the higher thermal conductivity superficially porous material is a material that has improved thermal conductivity over a fully porous hybrid particle of the same size. Determination of particle thermal conductivity can be made by the method of Gritti and Guiochon [J. Chromatogr. A, 2010, 1217, 5137) taking into account differences in bulk material properties, pore volume, surface modification type and coverage.

The terms "magnetic material", "magnetic cores" and "magnetic additives" are defined as a material, core material, or composite additive that gas a mass magnetization (a, magnetic moment per unit mass, magnetic saturation or saturation magnetization) at room temperature greater than 15 emu/g (A $m^2$/kg). This includes ferromagnetic and ferrimagnetic materials, including (but is not limited to): magnetite (ferrous ferric oxide); maghemite; yttrium iron garnet, cobalt, CrO2; and ferrites containing iron and Al, Mg, Ni, Zn, Mn or Co). Magnetic core particles do not include other oxides of iron, including hematite and goethite, that have mass magnetization values less than 10 emu/g. Hematite (0.4 emu/g) is considered antiferromagnetic at room temperature.

As used herein, the term "fines" refers to undesired materials generated in the processes of the invention that are below the 10 vol% of the target particle size distribution. Fines can be formed from reseeding events or from particle breakage. Resulting fines can be nonporous or fully porous. Often fines are substantially smaller than the 10 vol% of the target particle size distribution. Often fines are <1 um in size. Very small fines can cause problems in chromatography in that the percolate through the packed bed and get stuck in the outlet frit. This generates increased column pressure. Alternatively fines small enough to percolate through the packed bed and outlet frit can result in problems with detectors and can contaminate a product. Problems with detector include clogging flow channels, blocking detector windows, and anomalous detector readings. Such issues can reduce the lifetime of a detector and can require extensive cleaning protocols. Such issues can also impact the precision, accuracy, reliability, reproducibility, and robustness of analytical data generated. Fines can be removed by classification.

As used herein, the terms "aggregates" and "agglomerates" refer to undesired materials generated in the processes of the invention that are larger than the 90 vol% of the target particle size distribution. aggregates and/or agglomerates can form from imperfections of the core material, improper mixing or dispersion in the process, or excessive forces during workup. Aggregates and agglomerates can impact the efficiency, permeability, reproducibility and robustness of packed beds within chromatographic columns. It is difficult to optimally pack a chromatographic column with materials having an elevated amount of aggregates and agglomerates. Aggregates and agglomerates can break apart within a packed bed structure when exposed to high pressures and shears. This can result in a mechanical instability of the packed bed and the result of a void on the top of the column. This breaking of aggregates and agglomerates can also result in the generation of fines. Aggregates and agglomerates can be removed by classification.

As used herein, the term "substantially nonporous" refers to a material which, although porous, is impermeable or otherwise functions as a non-porous material. Such a substantially nonporous material has a pore volume of less than about 0.10 cc/g.

As used herein the term "controlled porosity" refers to porosity which is developed into a predetermined or desired shape or pattern. In certain instances the controlled porosity refers to the changing of an already established porous surface, for example adding a narrower pore diameter to an established wider pore network. In other instances, the controlled porosity refers to a porosity which is devieloved to form a specific pattern as measured from the core material to the outermost surface.

As used herein the term, "surface," as in "primary surface" and "outermost surface," refers to the structure of the external facing portion of the material, core, or layer. As such, the primary surface refers to the structure of the chromatographic core material prior to the addition of any surface layers. Similarly the "outermost surface" refers to the external facing portion of the final material after all layers have been completed.

As used herein the "90/10 ratio" refers to the ratio of the particle size distribution of a partiuculate material of the invention. In the 90/10 ratio, the particle sizes of the material is measured and plotted on an S-curve. The particle size value of represented by 90% of the particles (i.e. the value for which 90% of the particles are equal to or smaller than) is compared as a ratio to the particle size value represented by 10% of the particles (i.e., the value for which 10&% of the particles is equal to or smaller than).

**Ostwald Ripening and Controlled Porosity**

The invention employs the phenomenon of Ostwald Ripening in the construction of sol based structures with increased isotropic macroporosity or anisotropic macroporosity gradients. The net effect of Ostwald ripening is depicted Figure 27.

Through the use of this effect, nanoparticles and/or smaller sols, which have higher surface area and positive curvature, are preferentially dissolved and deposited in areas of lower or negative curvature. This invention has the

advantage of being able to form unique porosities off of a preformed surface. Specifically, the preferential treatment of smaller nanoparticles and sols over larger ones allows for the creation of a predetermined pattern of pores with regard to pore shape, pore diameter, pore volume, or specific surface area, For example, if the preformed surface is a membrane (e.g., 0.2 μm polypropylene or 0.2 μm anodized alumina) unique porosities can be prepared having changes in pore diameter from high-to-low, low-to-high, repeated porosity profiles, or any possibility therein to create unique porous devices that can be used for sample prep, sample concentrations. solvent purification, ultracentrifugation membranes, dialysis membranes, salt-bridges or other applications

If the preformed surface is a fully porous particle this approach can be used to create new fully porous particles with unique properties. For example the preformed fully porous particle may have pore diameters that may be advantageous for certain applications (i.e., 5 50 Angstroms used for desalting) while the larger pore(s) can be used for another application (i.e., reversed-phase protein or peptide separations). The end result it a separation device that performs more than one separation in either a simultaneously or sequential manner.

In another example when the preformed fully porous particle has wider pore diameters (e.g., >1000 Angstrom) this approach can be used to create additional porosity within the same particle diameter. In this approach the wider pores are acting as a scaffold for the internal pores.

This approach can be used to increase surface porosity at the outer surface of the particle. This creates differences in external film mass transfer, and improves diffusion into the porous network. Such approaches may have utility in column separations as well as sample preparation devices.

When the preformed surface is a fully porous particle this approach can be used to create new morphology particles. Through variation of the method of this invention, spherical performed particles can be modified to form non-spherical particles, oblong particles, dumbbell-shaped particles, granular particles or agglomerated materials. Such materials can be used advantageously in chromatography to create new column packing materials that acceptable efficiency with lower column pressure. Such controlled morphology particles may provide much of the benefits of monolithic materials, without the synthetic complexity, shrinkage, or the reproducibility concerns of monoliths.

Alternatively, when the preformed surface is a fully porous non-spherical particle this approach can be used to create more spherical or even highly spherical particles. Improvements in particle size distributions can also be realized.

When the preformed surface is a monolith this approach can be used to create new monoliths with unique properties. The use of a compliant porous layer on the exterior of a preformed monolith may allow improved cladding or column fabrication. The use of an organofunctional containing external layer may allow a unique means for improved wall attachment. The use of this invention on a monolith may allow for improved porosity control. For example an open monolith that contains little mesoporosity and almost all macroporosity can benefit from this technique as acting as a three-dimensional scaffold for the formation of a mesoporous or porous framework.

When the preformed surface is an open scaffold (e.g., wire mesh, glass wool, fiber mesh), new porous materials and devices can be formed that have unique porosity. One particular aspect of this invention is when the preformed surface is a flexible tube or wire. Using layer by layer deposition by dip-coating, one can prepare new monolithic materials that are flexible or have an annular structure. Such materials may be useful for microsampling, DBS-alternatives, Sample prep for LC/MS and as SPME devices.

When the preformed surface is a capillary wall (e.g., glass walled capillaries, alumina surface microfluidic devices, ceramic microfluidic devices, titania microfluidic devices, plastic capillaries or microfluidic devices, this invention can be utilized to modify the wall structure (e.g., change square channels to have rounded corners or have more circular cross-sections. Alternatively this approach can be controlled to create new porous layer open tubular. One concern about traditional methods of creating silica PLOT columns is the need to use elevated temperatures to remove the polyelectrolyte and other binding chemicals - as well as to sinter or mechanically strengthen the porous layer.

This invention allows for a unique means of creating hybrid materials through redistribution of the dissolved silicate species. When a mixture of hybrid sols and silica sols are used, the hybrid network is more resistance to base treatment, while the silica sols dissolve more readily. This can be used homogeneously or heterogeneously. In one aspect of the invention we can create specific layers or areas of increased hybrid or silica content within the porous layer.

In a particular embodiment, the invention allows for a unique means of creating controlled porosity in a superficially porous material.

## Core and Shell materials

The invention provides porous materials, particles and/or monoliths comprising a core and one or more layers of a chromatographic surface material surrounding the core.

In certain embodiments, the porous material of the invention a substantially narrow particle size distribution. In certain other embodiments, the 90/10 ratio of particle sizes is from 1.00-1.55. In specific embodiments, the 90/10 ratio of particle sizes is from 1.00-1.10 or from 1.05-1.10. In other specific embodiments, the 90/10 ratio of particle sizes is from 1.10-1.55; from 1.10-1.50; or from 1.30-1.45.

In certain embodiments, the porous material of the invention, wherein the material has chromatographically enhancing pore geometry. That is, in some embodiments, the superficially porous material of the invention has only a small population of micropores.

In one embodiment, the porous material of the invention does not have chromatographically enhancing pore geometry. In another embodiment, the HPCM of the invention has chromatographically enhancing pore geometry.

In certain embodiments, the porous material of the invention has a surface area of about 25 to 1100 $m^2$/g; about 80 to 500 $rn^2$/g; or about 120 to 330 $rn^2$/g.

In other embodiments, the porous material of the invention a pore volume of about 0.15 to 1.7 $cm^3$/g; or about 0.5 to 1.3 $cm^3$/g.

In certain other embodiments, the porous material of the invention is non-porous.

In yet other embodiments, the porous material of the invention has a micropore surface area of less than about 110 $m^2$/g; less than about 105 $m^2$/g; less than about 80 $m^2$/g; or less than about 50 $m^2$/g.

In still yet other embodiments, the porous material of the invention has an average pore diameter of about 20 to 1500Å; about 50 to 1000Å; about 100 to 750Å; or about 150 to 500Å.

In the instances above, measurements of pore volume, surface area, pore diameter and the like, the measurement refers to the outermost surface of the chromatographic material.

In certain embodiments of the inventinon, each layer of the one or more layers of a chromatographic surface material independently comprises one or more nanoparticles. In some emobodiments, each nanoparticle of the one or more nanoparticles is independently an inorganic material or an inorganic/organic hybrid material.

In certain embodiments, the materails used in each layer of the chromatographich suraface material may be a mixture of more than one type of material.

In particular embodiments, each nanoparticle of the one or more nanoparticles has a average diameter of 1-400 nm, or of 5-200 nm..

In certain embodiments, each layer of the one or more layers of a chromatographic surface material independently comprises nanoparticles of two or more different average diameters. In particular embodiments, each layer indiependelty comprises nanoparticles different average diameters, wherein the two different avaerage diameters is a larger average diameter and a smaller average diameter. In specific embodiments, the diameter ratio of the nanoparticles having the larger average diameter to the nanoparticles having the smaller average diameter in each layer is independetly greater than 1.75; in the range of 1.75 to 100, or in the range of 2-50. In other specfic embodiments, wherein the weight ratio of the nanoparticles having the larger average diameter to the nanoparticles having the smaller average diameter in each layer is indepdendently from about 19:1 to 0.05:1; from about 15:1 to about 0.25:1; or from about 10:1 to about 0.5:1.

As noted in Rekeler (US 3709664), "The properties of the silica gel obtained, particularly the porosity characteristics, are discussed in terms of pore volume (PV), surface area (SA), and average pore diameter (PD), where PD = 4PV / SA Determinations of the values for the various properties are made by nitrogen absorption-desorption techniques well known in the art and described in detail in the Journal of the American Chemical Society, Volume 60, Page 309 (1938), Journal of Catalysis," Volume 2, Page 111 (1955)."

As such, it is well known in the art that particle porosity can be characterized using nitrogen sorption analysis and characterized in terms of TPV, SSA and APD. The correlation of physical attributes, APD ~ 4TPV/SSA follows a cylinder pore model with is most applicable with materials having well-formed and opened pore structures. This model does not accurately fit closed or not-well formed pore structures. Nitrogen sorption analysis works best for pores less than about 500 Angstroms in APD. Such a technique is well suited for characterization of meso- and micropores, but is not suitable for characterization of macroporous materials or materials containing large voids.

## Core materials

As discussed above, in order to prepare the inventive materials, a core material is utilized. The core material has a primary surface which is then altered by the chromatographic surface material to provide a chromatographic material having a predetermined pore size, shape, or composition.

In certain embodiments the core material is a nonporous core. a substantially nonporous core, a fully porous core, or a suferficially porous core. In most instances a nonporous core or a substantially nonporous core is utilizied. In specfiic embodiments, the core material is a solid material. That is, in certain embodiments the core material is not hollow.

In certain embodiments, when a nonporous or substantially nonporous core is used, the core material is silica; silica coated with an inorganic/organic hybrid surrounding materia; a magnetic core material; a magnetic core material coated with silica; a high thermal conductivity core material; a high thermal conductivity core material coated with silica; a composite material; an inorganic/organic hybrid surrounding material; a composite material coated with silica; a magnetic core material coated with an inorganic/organic hybrid surrounding material; or a high thermal conductivity core material coated with an inorganic/organic hybrid surrounding material.

In certain instances, the core material can be an inorganic/organic hybrid material. Similarly, in instances

described above, the core may have a surrounding material made of an inorganic/organic hybrid material. In certain embodiments the inorganic/organic hybrid material has the formula:

$$(SiO_2)_d/[R^2((R)_p(R^1)_qSiO_t)_m] \qquad (I)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_1$-$C_{18}$ heteroaryl; or absent; wherein each $R^2$ is attached to two or more silicon atoms;
p and q are each independently 0.0 to 3.0,
t is 0.5, 1.0, or 1.5;
d is 0 to about 30;
m is an integer from 1-20; wherein R, $R^1$ and $R^2$ are optionally substituted; provided that:

(1) when $R^2$ is absent, m=1 and $t = \frac{(4-(p+q))}{2}$, when $0<p+q \leq 3$; and

(2) when $R^2$ is present, m=2-20 and $t = \frac{(3-(p+q))}{2}$, when $p+q \leq 2$;

the formula:

$$(SiO_2)_d/[(R)_p(R^1)_qSiO_1)] \qquad (II)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
d is 0 to about 30;
p and q are each independently 0.0 to 3.0, provided that when p+q=1 then t=1.5; when p+q=2 then t=1; or when p+q=3 then t=0.5;

the formula:

$$(SiO_2)_d/[R^2((R^1)_1SiO_1)_m] \qquad (III)$$

wherein,

$R^1$ is $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, C3-C18 cycloalkyl, $C_1$-$C_{18}$ heterocycloalkyl, $C_5$-$C_{18}$ aryl, $C_1$-$C_{18}$ heteroaryl; or absent; wherein each $R^2$ is attached to two or more silicon atoms;
d is 0 to about 30;
r is 0, 1 or 2, provided that when r=0 then t=1.5; when r=1 then t=1; or when r=2, then t=0.5; and
m is an integer from 1-20;

the formula:

$$(A)_x(B)_y(C)_z \qquad (IV)$$

wherein the order of repeat units A, B, and C may be random, block, or a combination of random and block; A is an organic repeat unit which is covalently bonded to one or more repeat units A or B *via* an organic bond; B is an organosiloxane repeat unit which is bonded to one or more repeat units B or C via an inorganic siloxane bond and which may be further bonded to one or more repeat units A or B via an organic bond; C is an inorganic repeat unit which is bonded to one or more repeat units B or C via an inorganic bond; x and y are positive numbers. and z is a non negative number. wherein x +y + z = 1. In certain embodiments, z = 0, then $0.002 \leq x/y \leq 210$, and when $z \neq 0$, then

$0.0003 \leq y/x \leq 500$ and $0.002 \leq x/(y+z) \leq 210$; or the formula:

$$(A)_x(B)_y(B^*)_{y^*}(C)_z \qquad (V)$$

wherein the order of repeat units A, B, B*, and C may be random, block, or a combination of random and block; A is an organic repeat unit which is covalently bonded to one or more repeat units A or B via an organic bond; Bis an organosiloxane repeat unit which is bonded to one or more repeat units B or B* or C via an inorganic siloxane bond and which may be further bonded to one or more repeat units A or B via an organic bond, B* is an organosiloxane repeat unit which is bonded to one or more repeat units B or B* or C via an inorganic siloxane bond, wherein B* is an organosiloxane repeat unit that does not have reactive (i.e., polymerizable) organic components and may further have a protected functional group that may be deprotected after polymerization; C is an inorganic repeat unit which is bonded to one or more repeat units B or B* or C via an inorganic bond; x and y are positive numbers and z is a non negative number, wherein $x + y + z = 1$. In certain embodiments, when $z = 0$, then $0.002 \leq x/(y+y^*) \leq 210$, and when $z \neq 0$, then $0.0003 \leq (y+y^*)/z \leq 500$ and $0.002 \leq x/(y+y^*+z) \leq 210$.

In instances where the core material is coated with an inorganic/organic hybrid surrounding material, the surrounding material may be porous, nonporous or substantially nonporous and the primary surface of the core material is to be considered the outermost surface of the surrounding material.

In certain embodiments the core materials are composite materials. Composite materials describe the engineered materials of the invention composed of one or more components described herein in combination with dispersed nanoparticles, wherein each component/nanoparticle remains separate and distinct on a macroscopic level within the finished structure. The composite material of the present invention is independent of form, and may be monolithic or particulate in nature. Moreover, the short-hand convention used herein to describe a composite material containing a dispersed nanoparticle, $Np/(A)_w(B)_x(C)_y$, may be understood as follows: the symbolic representation to the left of the slash mark represents the dispersed nanoparticle, and the symbolic representations to the right of the slash mark represent the components that comprise the material that the nanoparticle (noted on the left of the slash mark) is dispersed within. In certain embodiments, the composite materials of the present invention may be nanocomposites, which are known to include, at least, for example, nano/nano-type, intra-type, inter-type, and intra/inter-type. (Nanocomposites Science and Technology, edited by P.M. Ajayan, L.S. Schadler, P.V. Braun, Wiley-VCH (Weinheim, Germany), 2003). The term "nanoparticle" is a microscopic particle/grain or microscopic member of a powder/nanopowder with at least one dimension less than about 100 nm, *e.g.,* a diameter or particle thickness of less than about 100 nm (0.1 pm), which may be crystalline or noncrystalline.

Nanoparticles have properties different from, and often superior to those of conventional bulk materials including, for example, greater strength, hardness, ductility, sinterability, and greater reactivity among others. Considerable scientific study continues to be devoted to determining the properties of nanomaterials, small amounts of which have been synthesized (mainly as nano-size powders) by a number of processes including colloidal precipitation, mechanical grinding, and gas-phase nucleation and growth. Extensive reviews have documented recent developments in nano-phase materials: Gleiter, H. (1989) "Nano-crystalline materials," Prog. Mater. Sci. 33:223-315 and Siegel, R. W. (1993) "Synthesis and properties of nano-phase materials." Prog. Mater. Sci. Eng. A168:189-197. In certain embodiments, the nanoparticles comprise oxides or nitrides of the following: silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, and mixtures thereof. In certain embodiments, the nanoparticles of the present invention are selected from diamonds, zirconium oxide (amorphous, monoclinic, tetragonal and cubic forms), titanium oxide (amorphous, anatase, brookite and rutile forms), aluminum (amorphous, alpha, and gamma forms), and boronitride (cubic form). In particular embodiments, the nanoparticles of the present invention are selected from nano-diamonds, silicon carbide, titanium dioxide (anatase form), cubic-boronitride, and any combination thereof. Moreover, in particular embodiments, the nanoparticles may be crystalline or amorphous. In particular embodiments, the nanoparticles are less than or equal to 100 nm in diameter, *e.g.,* less than or equal to 50 nm in diameter, *e.g.,* less than or equal to 20 nm in diameter.

Moreover, it should be understood that the nanoparticles that are characterized as dispersed within the composites of the invention are intended to describe exogenously added nanoparticles. This is in contrast to nanoparticles, or formations containing significant similarity with putative nanoparticles, that are capable of formation in situ, wherein, for example, macromolecular structures, such as particles, may comprise an aggregation of these endogenously created.

Nanoparticles are of great scientific interest as they are effectively a bridge between bulk materials and atomic or molecular structures. A bulk material should have constant physical properties regardless of its size, but at the nano-scale this is often not the case. Size- dependent properties are observed such as quantum confinement in semiconductor particles. surface plasmon resonance in some metal particles and superparamagnetism in magnetic materials.

In certain embodiments, the composite materials include magnetic materials, materials having a high thermal

conductivity, or mixtures thereof. Similarly, in certain embodiments, the cores themselves are magnetic materials, materials having a high thermal conductivity or mixtures thereof.

Materials having a high thermal conductivity, high thermal conductivity cores or a high thermal conductivity additives are defined as materials having a thermal conductivity greater than 20 W/(m·K). In various embodiments the additive has a thermal conductivity ranges from: about 20 W/(m·K) to not more than 3500 W/(m·K); about 100 W/(m·K) to not more than 3300 W/(m·K); and 400 W/(m·K) to not more than 3000 W/(m·K). This high thermal conductivity additive can be a 0.1-8 μm core particle, nanoparticle additives, or a metal oxide precursor. In various embodiments the high thermal conductivity additive includes (but is not limited to) aluminum, copper, gold, and diamonds.

A high thermal diffusivity additive is defined as an additive used in a superficially porous particle having a thermal diffusivity greater than 20 $mm^2/s$. In various embodiments the additive has a thermal diffusivity ranges from: about 20 $mm^2/s$ to not more than 2000 $mm^2/s$; about 100 mm2/s to not more than 1600 $mm^2/s$; and 150 $mm^2/s$ to not more than 1400 $mm^2/s$. This high thermal conductivity additive can be a 0.1-8 μm core particle, nanoparticle additives, or a metal oxide precursor. In various embodiments the high thermal conductivity additive includes (but is not limited to) aluminum, copper, gold, and diamonds.

A magnetic material include materials that have a mass magnetization (a, magnetic moment per unit mass, magnetic saturation or saturation magnetization) at room temperature greater than 15 emu/g (A $m^2$/kg). This includes ferromagnetic and ferrimagnetic materials, including (but is not limited to): magnetite (ferrous ferric oxide); maghemite; yttrium iron garnet, cobalt, $CrO_2$; and ferrites containing iron and Al, Mg, Ni, Zn, Mn or Co). Magnetic core particles do not include other oxides of iron, including hematite and goethite, that have mass magnetization values less than 10 emu/g. Hematite (0.4 emu/g) is considered antiferromagnetic at room temperature.

In one embodiment, the cores are spherical. In a further embodiment, the spherical core has a non-crystalline or amorphous molecular ordering. In a further embodiment, the spherical core has a non-periodic pore structure.

In another embodiment, the core has an average size of about 0.1 μm to about 300 pm. In a further embodiment, the core has an average size of about 0.1 μm to about 30 pm. In a further embodiment, the core has an average size of about 0.5 μm to about 30 μm. In a further embodiment, the core has an average size of about 0.9 μm to about 10 μm. In a further embodiment, the core has an average size of about 1.0 μm to about 3.0 pm.

In certain embodiments, the core material of the invention a substantially narrow particle size distribution. In certain other embodiments, the $^{90}/_{10}$ ratio of particle sizes is from 1.00-1.55. In specific embodiments, the $^{90}/_{10}$ ratio of particle sizes is from 1.00-1.10 or from 1.05-1.10. In other specific embodiments, the $^{90}/_{10}$ ratio of particle sizes is from 1.10-1.55; from 1.10-1.50; or from 1.30-1.45.

In certain embodiments, the core is hydrolytically stable at a pH of about 1 to about 14. In one embodiment, the core is hydrolytically stable at a pH of about 10 to about 14. In another embodiment, the core is hydrolytically stable at a pH of about l to about 5.

***Synthesis of Core Materials.***

In one aspect, the core material can be any commercial core material. In other embodiments, the core material can be synthesized using standard protocols. In certain instances, particular approaches may be used to prepare a spherical, substantially spherical or highly spherical core material which is non-porous or substantiall non-porous.

In one approach spherical silica or hybrid non-porous cores are prepared following standard protocols. A superficially porous layer is formed using two or more of the following; TEOS, a thermally degradable organofunctional silane (*e.g.*, acetoxypropyltrialkoxysilane or bromoethyltrialkoxysilane) along with a more thermally stable hybrid silanes, such as (but not limited to) phenylene bridged silanes. In this process lower temperature thermal treatment (<500°C) is performed to degrade the thermally degradable organofunctional silane as a means to introduce porosity, while maintaining the more thermally stable hybrid group. The temperature is determined by TGA experiments performed in air. Additional steps of classification, pore modification, acid treatment and bonding are performed, as detailed herein.

In another approach, spherical hybrid non-porous cores are prepared following standard protocols. A superficially porous layer is prepared using a surfactant or a mixed surfactant approach using one or more silanes that include (but is not limited to) TEOS, a lower temperature degradable organofunctional silane (*e.g.*, acetoxypropyltrialkoxysilane or bromoethyltrialkoxysilane), ethylene bridged alkoxysilanes, or phenylene bridged alkoxysilanes. The surfactant is removed using an acid ethanol process (*e.g.*, hydrochloric acid in ethanol). Alternatively, the surfactant is removed by thermal treatment (<500°C) at a temperature that preserves the hybrid group, while removing the surfactant. This temperature is determined by TGA experiments performed in air. Alternatively the surfactant is removed by oxidation (*e.g.*, ozonolysis). Alternatively, one or more of the surfactants used in this process are selected from the group of acid labile, base labile, or other labile surfactants. These labile surfactants can be reacted and removed later by selecting the correct chemical conditions (*e.g.*, acid hydrolysis, base hydrolysis, reduction or oxidation, hydrogenation or hydrogenolysis). Additional steps of classification, pore modification, acid treatment and bonding are performed, as detailed above.

In another approach, spherical silica or hybrid non-porous cores are prepared following standard protocols. Separately a hybrid sol (<100 nm) solution is prepared using one or more silanes that include (but is not limited to) TEOS, lower temperature degradable organofunctional silane (e.g., acetoxypropyltrialkoxysilane or bromoethyltrialkoxysilane), ethylene bridged alkoxysilanes, or phenylene bridged alkoxysilanes. A uniform superficially porous layer is then prepared in a layer-by-layer approach using a suitable positively charged polyelectrolyte. Suitable polyelectrolytes include (but is not limited to) linear, branched, and block polymers containing one or more of the following groups; alkyl, cycloalkyl, aryl, ethylene oxide groups along with one or more of the following groups; primary, secondary, tertiary and quaternary amino groups, pyrrolidone, pyridine, and imidazole. The polyelectrolyte is removed by thermal treatment (<500°C) at a temperature that preserves the hybrid group, while removing the polyelectrolyte. This temperature is determined by TGA experiments performed in air. Alternatively the polyelectrolyte is removed by ozonolysis. Additional steps of classification, pore modification, acid treatment and bonding are performed, as detailed herein.

**Chromatographic Surface Material**

The materials of the invention have one or more layers of a chromatographic surface material applied to the core material. In certain embodiments, one or more layers of chromatographic surface material are a porous inorganic/organic hybrid material; a porous silica or a porous composite material.

In certain aspects, the materials of the invention have a rough surface. In still other aspects, the materials of the invention have a smooth surface.

In certain embodiments, each porous layer is independently from 0.02 μm to 5 μm. in thickness as measured perpendicular to the surface of the nonporous core.

In other embodiments, each porous layer is independently from 0.06 μm to 1 μm in thickness as measured perpendicular to the surface of the nonporous core.

In still other embodiments, each porous layer is independently from 0.20 μm to 0.70 μm in thickness as measured perpendicular to the surface of the nonporous core.

In certain embodiments, the materials of the invention have between 1 and 30 layers of chromatographic surface material. In other embodiments between 2 and 5 layers of chromatographic surface material. In still others 1 or 2 layers of chromatographic surface materials.

In certain embodiments, the composition of each layer of chromatographic shell material is independently chosen.

Each layer of chromatographic shell material independently has pores having an average diameter of about 20 - 1500 Å; about 25-600 Å; about 60-350 Å; about 80-300 Å; or about 90-150 Å.

In still other embodiments, each layer of chromatographic shell material independently has an average pore volume of about 0.1-1.50 $cm^3/g$; about 0.11-0.50 $cm^3/g$; of about 0.09-0.45 $cm^3/g$; or of about 0.17-0.30 $cm^3/g$.

In yet other embodiments, each layer of chromatographic shell material independently has a pore surface area between about $10m^2/g$ and $1100m^2/g$; about $10m^2/g$ and $400m^2/g$; between about $15m^2/g$ and $300m^2/g$; or between about $60m^2/g$ and $200m^2/g$.

***Hybrid chromatographic surface materials***

In certain embodiments, the chromatographic surface material which may be layered onto the core may be independently derived from:

condensation of one or more polymeric organofunctional metal precursors, and/or polymeric metal oxide precursors on the surface of the core, or

application of partially condensed polymeric organofunctional metal precursors, a mixture of two or more polymeric organofunctional metal precursors, or a mixture of one or more polymeric organofunctional metal precursors with a polymeric metal oxide precursors on the surface of the core.

In certain aspects, the inorganic portion of the hybrid material is independently selected from the group consisting of alumina, silica, titania, cerium oxide, or zirconium oxides, and ceramic materials.

Alternatively, the hybrid material may independently be derived from:

condensation of one or more organofunctional silanes and/or tetraalkoxysilane on the surface of the core, or

application of partially condensed organofunctional silane, a mixture of two or more organofunctional silanes, or a mixture of one or more organofunctional silanes with a tetraalkoxysilane (*i.e.,* tetraethoxysilane, tetramethoxysilane)

on the surface of the core.

In other aspects, the hybrid material may independently comprise from about 0-100 mol% hybrid material. The inorganic portion of the surrounding material may independently be alumina, silica, titanium oxide, cerium oxide, zirconium oxide or ceramic materials or a mixture thereof.

In specific aspects, the inorganic portion of the hybrid material may independently be present in an amount ranging from about 0 molar % to not more than about 25 molar %, wherein the pores of the surrounding material are substantially disordered. Similarly, the inorganic portion of the surrounding material may independently be present in an amount ranging from about 25 molar % to not more than about 50 molar %, wherein the pores of the surrounding material are substantially disordered, and wherein the hybrid layer material may or may not independently possesses a chromatographically enhancing pore geometry (CEPG). In certain embodiments, the inorganic portion of the hybrid layer material may independently be present in an amount ranging from about 50 molar % to not more than about 75 molar %, wherein the pores of the hybrid layer material are substantially disordered, and wherein the hybrid layer material independently possesses a chromatographically enhancing pore geometry (CEPG). In still other embodiments, the inorganic portion of the hybrid layer material may independently be present in an amount ranging from about 75 molar % to not more than about 100 molar %, wherein the pores of the hybrid layer material are substantially disordered, and wherein the hybrid layer material may or may not independently possesses a chromatographically enhancing pore geometry (CEPG).

In still other aspects, the inorganic portion of the hybrid material may independently be present in an amount ranging from about 0 molar % to not more than about 100 molar %; specifically, 0%-10%, 0%-5%, 0%-4%, 0%-3%, 0%-2%, 0%-1%, 1%-10%, 1%-5%, 1 %-4%, 1 %-3%, 1 %-2%, 5%-100%, 10%-100%, 15%-100%, 20%-100%, 25%-100%, 30%-100%, 35%-100%, 40%-100%, 45%-100%, 55%-100%, 60%-100%, 65%-100%, 70%-100%, 75%-100%, 80%-100%, 81%-100%, 82%-100%, 83%-100%, 84%-100%, 85%-100%, 86%-100%, 87%-100%, 88%-100%, 89%-100%, 90%-100%, 91%-100%, 92%-100%, 93%-100%, 94%-100%, 95%-100%, 96%-100%, 97%-100%, 98%-100%, or 99%-100%.

In some aspects, the hybrid material may comprise a material of formula I:

$$(SiO_2)_d/[R^2((R)_p(R^1)_qSiO_l)_m] \qquad (I)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_1$-$C_{18}$ heteroaryl; or absent; wherein each $R^2$ is attached to two or more silicon atoms;
p and q are each independently 0.0 to 3.0;
t is 0.5, 1.0, or 1.5;
d is 0 to about 30;
m is an integer from 1-20; wherein R, $R^1$ and $R^2$ are optionally substituted;

provided that:

when $R^2$ is absent, m=1 and $t = \frac{(4-(p+q))}{2}$, when 0<p+q ≤ 3; and

(2) when $R^2$ is present, m=2-20 and $t = \frac{(3-(p+q))}{2}$, when p+q ≤ 2;.

In other aspects, the hybrid layer material may comprise a material of formula II:

$$(SiO_2)_d/[(R)_p(R^1)_qSiO_1)] \qquad (II);$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
d is O to about 30;
p and q are each independently 0.0 to 3.0, provided that when p+q=1 then t=1.5; when p+q=2 then t=1; or when p+q=3

then t=0.5.

In still other aspects, the hybrid material may comprise a material of formula III:

$$(SiO_2)_d/[R^2((R^1)_1SiO_1)_m] \quad (III)$$

wherein,

$R^1$ is $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, C3-C18 cycloalkyl, $C_1$-$C_{18}$ heterocycloalkyl, $C_5$-$C_{18}$ aryl, $C_1$-$C_{18}$ heteroaryl; or absent; wherein each $R^2$ is attached to two or more silicon atoms;
d is O to about 30;
r is 0, 1 or 2, provided that when r=O then t=1.5; when r=1 then t=1; or when r=2, then t=0.5; and
m is an integer from 1-20;

In yet aspects, the hybrid material may comprise a material of formula IV:

$$(A)_x(B)_y(C)_z \quad (IV)$$

wherein the order of repeat units A, B, and C may be random, block, or a combination of random and block;

A is an organic repeat unit which is covalently bonded to one or more repeat units A or B *via* an organic bond;
B is an organosiloxane repeat unit which is bonded to one or more repeat units B or C via an inorganic siloxane bond and which may be further bonded to one or more repeat units A or B via an organic bond;
C is an inorganic repeat unit which is bonded to one or more repeat units B or C via an inorganic bond; and
x and y are positive numbers and z is a non negative number, wherein $x + y + z = 1$. In certain embodiments, when $z = 0$, then $0.002 \leq x/y \leq 210$, and when $z \neq 0$, then $0.0003 \leq y/z \leq 500$ and $0.002 \leq x/(y+z) \leq 210$.

In still yet other aspects, the hybrid material may comprise a material of formula V:

$$(A)_x(B)_y(B^*)_{y^*}(C)_z \quad (V),$$

wherein the order of repeat units A, B, B*, and C may be random, block, or a combination of random and block;

A is an organic repeat unit which is covalently bonded to one or more repeat units A or B via an organic bond;
B is an organosiloxane repeat units which is bonded to one or more repeat units B or B* or C via an inorganic siloxane bond and which may be further bonded to one or more repeat units A or B via an organic bond;
B* is an organosiloxane repeat unit which is bonded to one or more repeat units B or B* or C via an inorganic siloxane bond, wherein B* is an organosiloxane repeat unit that does not have reactive *(i.e.,* polymerizable) organic components and may further have a protected functional group that may be deprotected after polymerization;
C is an inorganic repeat unit which is bonded to one or more repeat units B or B* or C via an inorganic bond; and
x and y are positive numbers and z is a non negative number, wherein $x + y + y^* + z = 1$. In certain embodiments, when $z = 0$, then $0.002 \leq x/(y+y^*) \leq 210$, and when $z \neq 0$, then $0.0003 \leq x/(y+y^*) \leq 500$ and $0.002 \leq x/(y+y^*+z) \leq 210$.

In certain aspects, $R^2$ in the formulas presented above may be present or absent.

In certain aspects, $R^1$ in the formulas presented above is $C_1$-$C_{18}$ alkyl group substituted by hydroxyl. In still other aspects, $R^1$ in the formulas presented above is hydroxypropyl. In still other aspects, the hydroxy substituted alkyl group is further functionalized by an isocyanate. In yet other aspects, the isocyanate is octadecyl isocyanate, dodecyl isocyanate, pentafluorophenyl isocyanate, 4-cyanophenyl isocyanate, 3-cyanophenyl isocyanate, 2- cyanophenyl isocyanate, phenyl isocyate, benzyl isocyanate, phenethyl isocyanate or diphenylethyl isocyante.

In certain embodiments, the organosiloxane is, without limitation, phenyltriethoxysilane; phenyltrimethoxysilane; phenylethyltriethoxysilane; phenylethyltrimethoxysilane; ethyltriethoxysilane; ethyltrimethoxysilane; methyltriethoxysilane; methyltrimethoxysilane diethyldiethoxysilane; diethyldimethoxysilane 1,4-bis(triethoxysilyl)benzene; 1,4-bis(trimethoxysilyl)benzene; 1,3-bis(triethoxysilyl)benzene; 1,3-bis(trimethoxysilyl)benzene; 1,8-bis(triethoxysilyl) octane; 1,8-bis(trimethoxysil yl)octane; 1,2-bis(trimethoxysilyl)ethane; 1,2-bis(methyldiethoxysilyl)ethane; 1,2-bis(methyldimethoxysilyl)etbane; vinyltriethoxysilane; vinyltrimethoxysilane; mercaptopropyltriroethoxysilane; mercaptopropyltriethoxysilane; 1,2-bis(triethoxysilyl)ethene; 1,2-bis(trimethoxysilyl)ethene; 1,1-bis(triethoxysilyl)ethane; 1,1-bis(trimethoxysilyl)ethane; 1,4-bis(triethoxysilylethyl)benzene; 1,4-bis(trirnethoxysilylethyl)benzene; 1,3-bis(triethoxysilylethyl )benzene; 1,3-bis(trimethoxysilylethyl)benzene; hexyltriethoxysilane; hexyltriroethoxysilane; chloropropyltriethoxysilane; chloropropyltrimethoxysilane; octadecyltrimethoxysilane; octadecyltriethoxysilane; octyltrimethoxysilane; octyltriethoxysilane; 3,3.3-trifluoropropyltrimethoxysilane; 3,3.3-trifiuoropropyltriethoxysilane; 3-cyanobutyltriethoxysilane; and 3-cyanobutyltrimethoxysilane alone or in a mixture with tetraethoxysilane or tetramethoxysilane.

In another embodiment, the organosiloxane is, without limitation, a substituted benzene, including (but not limited to) 1,4-bis(triethoxysilyl)benzene, 1,4-bis(trimethoxysilyl)benzene, 1,3-bis(triethoxysilyl)benzene, 1,3-bis(trimethoxysilyl)benzene, 1,3,5-tris(triethoxysilyl)benzene, 1,3,5-tris(trimethoxysilyl)benzene, and bis(4-triethoxysilylphenyl)diethoxysilane.

In another aspect, the invention provides materials as described herein wherein the hybrid layer material further comprises a nanoparticle or a mixture of more than one nanoparticles dispersed within the core.

In certain embodiments, the nanoparticle is present in <20% by weight of the nanocomposite, <10% by weight of the nanocomposite, or <5% by weight of the nanocomposite.

In other embodiments, the nanoparticle is crystalline or amorphous and may be silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, oxides thereof, or a nitride thereof. In particular embodiments, the nanoparticle is a substance which comprises one or more moieties selected from the group consisting of nano-diamonds, silicon carbide, titanium dioxide, cubic-boronitride.

In other embodiments, the nanoparticles may be less than or equal to 200 nm in diameter, less than or equal to 100 nm in diameter, less than or equal to 50 nm in diameter, or less than or equal to 20 nm in diameter.

***Inorganic chromatographic surface materials.***

In certain embodiments, the chromatographic surface materials are inorganic materials. In particular embodiments, the inorganic surface material maybe diamond, carbon black, graphite, a carbon nanotube, silicon carbide, or an oxide or nitride of aluminum, cerium, carbon black, carbon nanotubes, zirconium, barium, cerium, cobalt, copper, europium, gadolinium, iron, nickel, samarium, silicon, silver, titanium, zinc, or boron.

***Composite chromatographic surface materials.***

In certain embodiments, the chromatographic surface materials are composite materials. Composite materials describe the engineered materials of the invention composed of one or more components described herein in combination with dispersed nanoparticles, wherein each component/nanoparticle remains separate and distinct on a macroscopic level within the finished structure. The composite material of the present invention is independent of form, and may be monolithic or particulate in nature. Moreover, the short-hand convention used herein to describe a composite material containing a dispersed nanoparticle, $Np/(A)_w(B)_x(C)_y$, may be understood as follows: the symbolic representation to the left of the slash mark represents the dispersed nanoparticle, and the symbolic representations to the right of the slash mark represent the components that comprise the material that the nanoparticle (noted on the left of the slash mark) is dispersed within. In certain embodiments, the composite materials of the present invention may be nanocomposites, which are known to include, at least, for example, nano/nano-type, intra-type, inter-type, and intra/inter-type. (Nanocomposites Science and Technology, edited by P.M. Ajayan, L.S. Schadler, P.V. Braun, Wiley-VCH (Weinheim, Germany), 2003**).** The term "nanoparticle" is a microscopic particle/grain or microscopic member of a powder/nanopowder with at least one dimension less than about 100 $\mu$m, *e.g.,* a diameter or particle thickness of less than about 100 nm (0.1 $\mu$m), which may be crystalline or noncrystalline.

Nanoparticles have properties different from, and often superior to those of conventional bulk materials including, for example, greater strength, hardness, ductility, sinterability, and greater reactivity among others. Considerable scientific study continues to be devoted to determining the properties of nanomaterials, small amounts of which have been synthesized (mainly as nano-size powders) by a number of processes including colloidal precipitation, mechanical grinding, and gas-phase nucleation and growth. Extensive reviews have documented recent developments in nano-phase materials: Gleiter, H. (1989) "Nano-crystalline materials," Prog. Mater. Sci. 33:223-315 and Siegel, R. W. (1993) "Synthesis and properties of nano-phase materials," Mater. Sci. Eng. A168:189-197. In certain embodiments, the nanoparticles comprise oxides or nitrides of the following: silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, and mixtures thereof. In certain embodiments, the nanoparticles of the present invention are selected from diamonds, zirconium oxide (amorphous, monoclinic, tetragonal and cubic forms), titanium oxide (amorphous, anatase, brookite and rutile forms), aluminum (amorphous, alpha, and gamma forms), and boronitride (cubic form). In particular embodiments, the nanoparticles of the present invention are selected from nano-diamonds, silicon carbide, titanium dioxide (anatase form), cubic-boronitride, and any combination thereof. Moreover, in particular embodiments, the

nanoparticles may be crystalline or amorphous. In particular embodiments, the nanoparticles are less than or equal to 100 nm in diameter, *e.g.,* less than or equal to 50 nm in diameter, *e.g.,* less than or equal to 20 nm in diameter.

Moreover, it should be understood that the nanoparticles that are characterized as dispersed within the composites of the invention are intended to describe exogenously added nanoparticles. This is in contrast to nanoparticles, or formations containing significant similarity with putative nanoparticles, that are capable of formation in situ, wherein, for example, macromolecular structures, such as particles, may comprise an aggregation of these endogenously created.

Nanoparticles are of great scientific interest as they are effectively a bridge between bulk materials and atomic or molecular structures. A bulk material should have constant physical properties regardless of its size, but at the nano-scale this is often not the case. Size- dependent properties are observed such as quantum confinement in semiconductor particles, surface plasmon resonance in some metal particles and superparamagnetism in magnetic materials.

In certain embodiments, the composite materials include magnetic materials, materials having a high thermal conductivity, or mixtures thereof.

Materials having a high thermal conductivity, high thermal conductivity cores or a high thermal conductivity additive is defined as a material, core or additive used in a superficially porous particle having a thermal conductivity greater than 20 W/(m·K). In various embodiments the core or additive has a thermal conductivity ranges from: about 20 W/(m·K) to not more than 3500 W/(m·K); about 100 W/(m·K) to not more than 3300 W/(m·K); and 400 W/(m·K) to not more than 3000 W/(m·K). This high thermal conductivity core or additive can be a 0.1-8 μm core particle, nanoparticle additives, or a metal oxide precursor. In various embodiments the high thermal conductivity core or additive includes (but is not limited to) aluminum, copper, gold, and diamonds.

A high thermal diffusivity additive is defined as an additive used in a superficially porous particle having a thermal diffusivity greater than 20 $mm^2/s$. In various embodiments the additive has a thermal diffusivity ranges from: about 20 $mm^2/s$ to not more than 2000 $mm^2/s$; about 100 $mm^2/s$ to not more than 1600 $mm^2/s$; and 150 $mm^2/s$ to not more than 1400 $mm^2/s$. This high thermal conductivity additive can be a 0.1-8 μm core particle, nanoparticle additives, or a metal oxide precursor. In various embodiments the high thermal conductivity additive includes (but is not limited to) aluminum, copper, gold, and diamonds.

A magnetic material include materials that have a mass magnetization (ȯ, magnetic moment per unit mass, magnetic saturation or saturation magnetization) at room temperature greater than 15 emu/g (A $m^2$/kg). This includes ferromagnetic and ferrimagnetic materials, including (but is not limited to): magnetite (ferrous ferric oxide); maghemite; yttrium iron garnet, cobalt, $CrO_2$; and ferrites containing iron and Al, Mg, Ni, Zn, Mn or Co). Magnetic core particles do not include other oxides of iron, including hematite and goethite, that have mass magnetization values less than 10 emu/g. Hematite (0.4 emu/g) is considered antiferromagnetic at room temperature.

**Ionizable Modifier Surface Materials**

In certain embodiments of the invention, the invention provides, a chromatographic material having controlled porosity comprising one or more layers of chromatographic surface material wherein the chromatographic surface material comprises a hydrophobic surface group and one or more ionizable modifiers. In certain embodiments the ionizable modifier does not contain a Zwitterion or a quaternary ammonium ion moiety.

The composition of the chromatographic surface material and the chromatographic core material (if present) may be varied by one of ordinary skill in the art to provide enhanced chromatographic selectivity, enhanced column chemical stability, enhanced column efficiency, and/or enhanced mechanical strength. Similarly, the composition of the surrounding material provides a change in hydrophilic/lipophilic balance (HLB), surface charge (e.g., isoelectric point or silanol pKa), and/or surface functionality for enhanced chromatographic separation. Furthermore, in some embodiments, the composition of the chromatographic material may also provide a surface functionality for available for further surface modification.

The ionizable modifiers and the hydrophobic surface groups of the chromatographic surface materials of the invention can be prepared using known methods. Some of the ionizable modifier reagents are commercially available. For example silanes having amino alkyl trialkoxysilanes, methyl amino alkyl trialkoxysilanes, and pyridyl alkyl trialkoxysilanes are commercially available. Other silanes such as chloropropyl alkyl trichlorosilane and chloropropyl alkyl trialkoxysilane are also commercially available. These can be bonded and reacted with imidazole to create imidazolyl alkyl silyl surface species, or bonded and reacted with pyridine to create pyridyl alkyl silyl surface species. Other acidic modifiers are also commercially available, including, but not limited to, sulfopropyltrisilanol, carboxyethylsilanetriol, 2-(carbomethoxy) ethylmethyldichlorosilane, 2-(carbomethoxy)ethyltrichlorosilane, 2-(carbomethoxy)ethyltrimethoxysilane, n-(tri methoxysilylpropyl)ethylenediamine, triacetic acid, (2-diethylphosphatoethyl)triethoxysilane, 2-(chlorosulfonylphenyl)ethyltrichlorosilane, and 2-(chlorosulfonylphenyl)ethyltrimethoxysilane.

It is known to one skilled in the art to synthesize these types of silanes using common synthetic protocols, including grinard reactions and hydrosilylations. Products can be purified by chromatography, recrystallization or

distillation

Other additives such as isocyanates are also commercially available or can be synthesized by one skilled in the art. A common isocyanate forming protocol is the reaction of a primary amine with phosgene or a reagent known as Triphosgene.

In some embodiments the ionizable modifier contains a a carboxylic acid group, a sulfonic acid group, a phosphoric acid group, a boronic acid group, an amino group, an imido group, an amido group, a pyridyl group, an imidazolyl group, an ureido group, a thionyl-ureido group or an aminosilane group.

In other aspects the ionizable modifier reagent may be selected from groups formula (I)

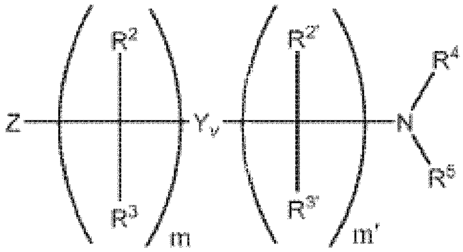

(I)

the formula (II):

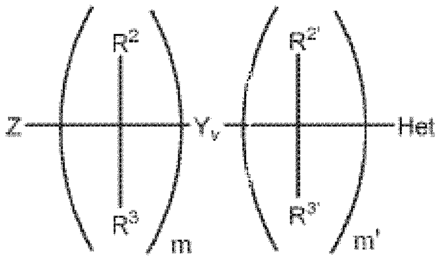

(II) ,

the formula (III):

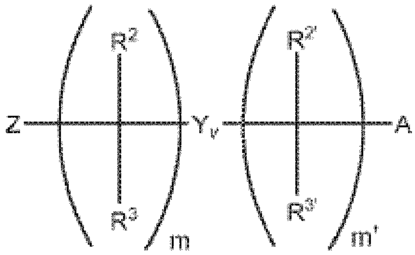

(III)

wherein

m is an integer from 1-8;
v is 0 or 1;
when v is 0, m' is 0;
when v is 1, m' is an integer from 1-8;
Z represents a chemically reactive group, including (but not limited to)

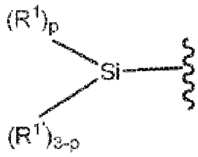

,

-OH, -OR<$^{6}$, amine, alkylamine, dialkylamine, isocyanate, acyl chloride, triflate, isocyanate, thiocyanate, imidazole

carbonate, NHS-ester, carboxylic acid, ester, epoxide, alkyne, alkene, azide, -Br, -Cl, or -I;
Y is an embedded polar functionality;
each occurrence of $R^1$ independently represents a chemically reactive group on silicon, including (but not limited to) -H, -OH-, -$OR^6$, dialkylamine, triflate, Br, C1, I, vinyl, alkene, or ··· $(CH_2)$m-Q;
each occurrence of Q is -OH, -$OR^6$, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
m" is an integer from 1-8
p is an integer from 1-3;
each occurrence of $R^1$ independently represents F, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl, fluoroalkyl, or fluoroaryl;
each occurrence of $R^2$, $R^{2'}$, $R^3$ and $R^3$ independently represents hydrogen, $C_1$-$C_{18}$ alkyl, $C_2$-$C_{18}$ alkenyl, $C_2$-$C_{18}$ alkynyl, $C_3$-$C_{18}$ cycloalkyl, $C_2$-$C_{18}$ heterocycloalkyl, $C_5$-$C_{18}$ aryl, $C_5$-$C_{18}$ aryloxy, or $C_4$-$C_{18}$ heteroaryl, -Z, or a group having the formula-Si(R')bR"$_a$ or -C(R') bR"$_a$;
a and b each represents an integer from 0 to 3 provided that a + b = 3;
R' represents a $C_1$ - $C_6$ straight, cyclic or branched alkyl group;
R" is a functionalizing group selected from the group consisting of alkyl, alkenyl, alkynyl, aryl, cyano, amino, diol, nitro, ester, a cation or anion exchange group, an alkyl or aryl group containing an embedded polar functionality and a chiral moiety;
$R^4$ represents hydrogen, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^5$ represents hydrogen, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
each occurrence of $R^6$ independently represents $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
Het represents a heterocyclic or heteroaryl ring system comprising at least one nitrogen atom; and
A represents an acidic ionizable modifier moiety or a dual charge ionizable modifier moiety.

In yet other embodiments, the inoizable modifier is aminopropyltriethoxysilane, aminopropyltrimethoxysilane, 2-(2-(trichlorosilyl)ethyl)pyridine, 2-(2-(trimethoxy)ethyl)pyridine, 2-(2-(triethoxy)ethyl)pyridine, 2-(4-pyridylethyl) triethoxysilane, 2-(4-pyridylethyl)trimethoxysilane,2-(4-pyridylethyl)trichlorosilane, chloropropyltrimethoxysilane, chloropropyltrichlorosilane, chloropropyltrichlorosilane, chloropropyltriethoxysilane,imidazolylpropyltrimethoxysilane, imidazolylpropyltriethoxysilane, imidazolylpropyl trichlorosilane, sulfopropyltrisilanol, carboxyethylsilanetriol, 2-(carbomethoxy)ethylmethyldichlorosilane, 2-(carbomethoxy)ethyltrichlorosilane, 2-(carbomethoxy)ethyltrimethoxysilane, n-(trimethoxysilylpropyl)ethylenediamine triacetic acid, (2-diethylphosphatoethyl)triethoxysilane, 3-mercaptopropyltriethoxysilane, 3-mercaptopropyltriroethoxysilane, bis[3-(triethoxysilyl)propyl]disulfide, bis[3-(triethoxysilyl)propyl]tetrasulfide, 2,2-diroetboxy-1-thia-2-silacyclopentane, bis(trichlorosilylethyl)phenylsulfonyl chloride, 2-(chlorosulfonylphenyl) ethyltrichlorosilane, 2-(chlorosulfonylphenyl)ethyltrimethoxysilane,2-(ethoxysulfonylphenyl)ethyltrimethoxysilane, 2-(ethoxysulfonylphenyl)ethyltrimethoxysilane,2-(ethoxysulfonylphenyl)ethyltrichlorosilane, sulphonic acid phenethyltrisilanol, (triethoxysilyl ethyl)phenyl phosphonic acid diethyl ester, (trimethoxysilyl ethyl)phenyl phosphonic acid diethyl ester, (trichlorosilyl ethyl)phenyl phosphonic acid diethyl ester, phosphonic acid phenethyltrisilanol, N-(3-trimethoxysilylpropyl)pyrrole, N-(3-triethoxysilylpropyl)-4,5-dihydrnimidazole, bis(methyldimethoxysilylpropyl)-N-methylamine, tris(triethoxysilylpropyl)amine, bis(3-trimethoxysilylpropyl)-N-methylamine, (N,N-diethyl-3-aminopropyl)trimethoxysilane, N-(hydroxyethyl)-N-methylaminopropyltrimethoxysil ane, 3-(N,N-dimethylaminopropyl)trimethoxysilane, bis(2-hydrnxyethyl)-3-aminopropyltriethoxysilane, N,N'-bis(hydroxyethyl)-N,N'-bis(triroethoxysil ylpropyl)ethylenediamine, or N,N-dimethyl-3-aminopropylmethyldimethoxysilane.

In certain embodiments, when the ionizable modifier is of the formula (III), the acidic ionizable modifiers is a protected or deprotected forms of trisilanol, trialkoxysilane or trichlorosilane; or a salt of sulfonic acid alkyl silanes, sulfonic acid phenylalkyl silanes, sulfonic acid benzylalkyl silanes, sulfonic acid phenyl silanes, sulfonic acid benzyl silanes, carboxylic acid alkyl silanes, carboxylic acid phenylalkyl silanes, carboxylic acid benzylalkyl silanes, carboxylic acid phenyl silanes, carboxylic acid benzyl silanes, phosphoric acid alkyl silanes, phosphonic acid phenylalkyl silanes, phosphonic acid benzylalkyl silanes, phosphonic acid phenyl silanes, phosphonic acid benzyl silanes, boronic acid alkyl silanes, boronic acid phenylalkyl silanes, boronic acid benzylalkyl silanes, boronic acid phenyl silanes, boronic acid benzyl silanes.

In certain embodiments, when the ionizable modifier is of the formula (III), the acidic ionizable modifiers is a protected or deprotected version or a salt of sulfonic acid alkyl isocyanates, sulfonic acid phenylalkyl isocyanates, sulfonic acid benzylalkyl isocyanates, sulfonic acid phenyl isocyanates, sulfonic acid benzyl isocyanates carboxylic acid alkyl isocyanates, carboxylic acid phenylalkyl isocyanates, carboxylic acid benzylalkyl isocyanates, carboxylic acid phenyl isocyanates, carboxylic acid benzyl isocyanates, phosphoric acid alkyl isocyanates, phosphonic acid phenylalkyl

isocyanates, phosphonic acid benzylalkyl isocyanates, phosphonic acid phenyl isocyanates, phosphonic acid benzyl isocyanates, boronic acid alkyl isocyanates, boronic acid phenylalkyl isocyanates, boronic acid benzylalkyl isocyanates, boronic acid phenyl isocyanates, or boronic acid benzyl isocyanates.

In certain embodiments, when the inoizable modifier reagent is selected from formula (III), A represents a dual charge ionizable modifier moiety. While not limited to theory; the dual charge ionizable modifier moiety has two sub-groups that can display opposite charges. Under some conditions the dual charge ionizable modifier moiety can act similarly to a zwitterions and ampholytes to display both a positive and negative charge and maintain a zero net charge. Under other conditions the dual charge ionizable modifier moiety may only have one group ionized and may display a net positive or negative charge. Dual charge ionizable modifier moieties include, but are not limited to, alkyl, branched alkyl, aryl, cyclic, polyaromatic, polycyclic, hertocyclic and polyheterocyclic groups that can display a positive charge (commonly on a nitrogen or oxygen atom), and a negative charge through an acidic group that includes a carboxylic, sulfonic, phosphonic or boronic acid. Alternatively, some metal containing complexes can display both positive and negative charges. Dual charge ionizable modifier moieties may also include, but are not limited to zwitterions, ampholyte, amino acid, aminoalkyl sulfonic acid, aminoalkyl carboxylic acid, mono and di-methylaminoalkyl sulfonic acid, mono and di-methylaminoalkyl carboxylic acid, pyridinium alkyl sulfonic acid, and pyridinium alkyl carboxylic acid groups. Alternatively the dual charge ionizable modifier moiety may be 2-(N-morpholino)ethanesulfonic acid, 3-(N-morpholino)propanesulfonic acid, 4-(2-hydroxyethyl)-1-piperazine ethanesulfonic acid), piperazine-N ,N'-bis(2-ethanesulfonic acid), N-cydohexyl-3-aminopropanesulfonic acid, N- cyclohexyl-2-hydroxyl-3-aminopropanesulfonic acid, 3-[(3-cholamidopropyl)dimethylammonio]-1-propanesulfonate, 6-Methyl-9, 10-didehydro-ergoline-8-carboxylic acid, phenolsulfonphthalein, betaines, quinonoids, N,N-bis(2-hydroxyethyl)glycine, and N-[tris(hydroxymethyl)methyl]glycine groups.

In some embodiments, the molar ratio of the hydrophobic surface group: ionizable modifier in the surface material of the invention is from about 4:1 to about 150:1; from about 20:1 to about 100:1; or from about 25:1 to about 100:1.

In other embodiments, the concentration of ionizable modifier in the surface material of the invention is less than about 0.5 $\mu mol/m^2$; less than about 0.4 $\mu mol/m^2$; less than about 0.3 $\mu mol/m^2$; from about 0.01 $\mu mol/m^2$ to about 0.5 $\mu mol/m^2$; from about 0.1 $\mu mol/m^2$ to about 0.4 $\mu mol/m^2$; or from about 0.2 $\mu mol/m^2$ to about 0.3 $\mu mol/m^2$.

In still another aspect, the surface material of the invention has a quantified surface coverage ratio, B/A, from about 2.5 to about 300 wherein A represents the ionizable modifier and B represents the hydrophobic group. In certain aspects, the quantified surface coverage ratio, B/A, is from about 3 to about 200, from about 4 to about 35 or from about 5 to about 22.

In another aspect, the hydrophobic surface group of the surface material of the invention is a C4 to C18 bonded phase. In certain aspects, the hydrophobic surface group is a C18 bonded phase. In still other aspects, the hydrophobic surface group is an embedded polar bonded phase. In other aspects, the hydrophobic surface group is an aromatic, phenylalkyl, fluoro-aromatic, phenylhexyl, or pentafluorophenylalkyl bonded phase. In another aspect, the hydrophobic surface group is a $C_4$-$C_{30}$, embedded polar, chiral, phenylalkyl, or pentafluorophenyl bonding or coating.

### *Core and Material Morphology*

A further improvement in permeability can be achieved if the particle shape is modified. For example, a uniform micron-sized doughnut, rod, dumbbell, star, or bent-rod-shaped cores is used in place of a highly spherical core. Additional shapes include (but not limited to) spirals, discoidal, concave disks, spools, rings, helix, saddles, cross, cube, derby, helix, cylinders, and tubes. Examples of dumbbell, doughnut, rod, spiral, and gyroid particles have been reported (Doshi, N. PNAS, 2009, 106, 51, 21495; Alexander, L. Chem. Commun., 2008, 3507; Naik, S. J. Phys. Chem. C 2007, 111, 11168; Pang, X. Microporous and Mesoporous Materials 85 (2005) 1; Kievsky, Y. IEEE Transactions on Nanotechnology, 2005, 4, 5, 490; Sugimoto, T. in Monodispersed Particles, (Elsevier Science BV, Amsterdam) 2001; Ozin, G. Adv. Mater., 1997, 9, 662).

Important factors for the non-spherical cores is that they be relatively uniform in dimensions, free-flowing, non-porous, and mechanically strong enough for use in HPLC and UPLC. The composition of these cores may be selected from (but is not limited to) silica, metal oxides, diamonds, heavily cross linked polymers, and hybrid materials. Improvements in core uniformity can be achieved through classification. A reduction in porosity can be achieved by pore filling with a similar or different composition (e.g., pore filling a silica material with a crosslinked polymer composition). Improvements in mechanical strength is achieved by increasing crosslinking with the same or different composition (e.g., creating a silica network within a polymer composition), or by calcination. For the latter, higher temperatures (e.g., >800°C) may be advantageously used.

In order to reduce undesired chromatographic interactions due to the core, a non-porous surface coating with a silica, hybrid, or polymeric composition may be advantageously used. This surface coating step may need to be repeated or performed in a growth-process to achieve the desired thickness. To ensure that the core morphology is not substantially modified, this step advantageoulsy provides a uniform surface layer. Calcination and surface rehydroxylation may be advantageoudly used at the end of this step.

A uniform silica or hybrid superficially porous layer may be formed from any one of the processes described herein. To ensure the core morphology is not substantially modified, this step advantageously yields a highly uniform porous layer. Additional steps of classification, calcination, pore modification, re-calcination, rehydroxylation and bonding are then performed (as required) as detailed above. These non-spherical superficially porous materials can be packed in chromatographic columns individually or as mixtures with other shapes, or with spherical particles. It is important to optimize column packing conditions for these mixed systems. Considerations of maintaining similar dispersion, bulk density and settling rates between the different materials need to be made.

Thus, in certain embodiments, the core material of the invention has specific core morphology. In certain embodiments, such core morphology is produced by using cores having the defined shape. In certain other embodiments, the core morphology refers to the specific defined shape of the product material of the invention.

In certain embodiments, the cores or the product material has a highly spherical, rod shaped, bent-rod shaped, toroid shaped or dumbbell shaped core morphology.

In certain other embodiments, the cores or the product material has a mixture of highly spherical, rod shaped, bent-rod shaped, toroid shaped or dumbbell shaped core morphologies.

***Material Properties.***

The material of the invention may have significantly higher thermal conductivity than fully porous silica particles of the same size. In certain embodiments, the superficially porous material of the invention have significantly higher thermal conductivity than superficially porous silica particles of the same size. Determination of particle thermal conductivity can be made by the method of Gritti and Guiochon [J. Chromatogr. A, 2010, 1217, 5137) taking into account differences in bulk material properties, pore volume, surface modification type and coverage.

The material of the invention have significantly improved chemical stability when exposed to high pH mobile phases unbonded, fully porous silica particles of the same size. In certain embodiments, the superficially porous material of the invention have significantly improved chemical stability when exposed to high pH mobile phases unbonded, superficially porous silica particles of the same size.

The material of the invention are capable of forming a packed beds with improved permeability as compared to fully porous silica particles of the same size. In certain embodiments, the superficially porous material of the invention are capable of forming a packed beds with improved permeability as compared to superficially porous silica particles of the same size. Improved permeability for a give particle size is observed as a decrease in column backpressure. Determination of permeability of packed beds can be made by inverse size exclusion chromatography.

The materials (which are particles) have an average particle size of the material is between 0.8-3.0 $\mu$m. Specifically, the average particle size of the material may be between 1.1-2.9 $\mu$m or between 1.3-2.7$\mu$m.

The materials have pores which have an average diameter of about 25-600 Å; about 60-350 Å; about 80-300 Å.; or about 90-150 Å.

The materials have an average pore volume of about 0.11-0.50 $cm^3$/g; about 0.09-0.45 $cm^3$/g; or about 0.17-0.30 $cm^3$/g.

The materials have a pore surface area between about 10 $m^2$/g and 400$m^2$/g.

**Surface Modification and bonding**

The materials of the invention may further be subject to further bonding or surface modifocation.

Thus, in one embodiment, the materials of the invention are bonded with a bonded phase. In certain such embodiments, the bonded phase is a C4 to C18 bonded phase. In certain aspects, the bonded phase is a C18 bonded phase. In still other aspects, the bonded phase has an embedded polar bonded phase. In other aspects, the bonded phjase is an aromatic, phenylalkyl, fluoro-aromatic, phenylhexyl, or pentatluorophenylalkyl bonded phase. In another aspect, the bonded is a $C_4$-$C_{30}$, embedded polar, chiral, phenylalkyl, or pentafluorophenyl bonding or coating.

In another embodiment, the material as described herein may be surface modified with a surface modifier having the formula $Z_a(R')_3Si-R''$, where Z = C1, Br, I, $C_1$ - $C_5$ alkoxy, dialkylamino or trifluoromethanesulfonate; a and b are each an integer from 0 to 3 provided that a + b = 3; R' is a $C_1$ - $C_6$ straight, cyclic or branched alkyl group, and R" is a functionalizing group.

In another embodiment, the materials have been surface modified by coating with a polymer.

In certain embodiments, R' is selected from the group consisting of methyl, ethyl, propyl, isopropyl, butyl, t-butyl, sec-butyl, pentyl, isopentyl, hexyl and cyclohexyl, In other embodiments, R' is selected from the group consisting of alkyl, alkenyl, alkynyl, aryl, cyano, amino, diol, nitro, ester, a cation or anion exchange group, an alkyl or aryl group containing an embedded polar functionality and a chiral moiety. In certain embodiments, R' is selected from the group consisting of aromatic, phenylalkyl, fluoroaromatic, phenylhexyl, pentafluorophenylalkyl and chiral moieties.

In one embodiment, R" is a $C_1$ - $C_{30}$ alkyl group. In a further embodiment, R" comprises a chiral moiety. In another

further embodiment, R" is a $C_1$ - $C_{20}$ alkyl group.

In certain embodiments, the surface modifier comprises an embedded polar functionality. In certain embodiments, such embedded polar functionality includes carbonate, amide, urea, ether, thioether, sulfinyl, sulfoxide, sulfonyl, thiourea, thiocarbonate, thiocarbamate, ethylene glycol, heterocyclic, or triazole functionalities. In other embodiments, such embedded polar functionality includes carbamate functionalities such as disclosed in U.S. Patent No. 5,374,755, and chiral moieties. Such groups include those of the general formula

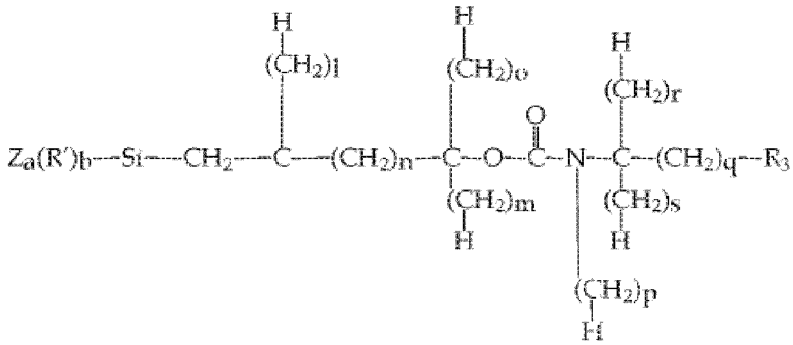

wherein l, m, o, r and s are 0 or 1, n is 0, 1, 2 or 3 p is 0, 1, 2, 3 or 4 and q is an integer from 0 to 19; $R_3$ is selected from the group consisting of hydrogen, alkyl, cyano and phenyl; and Z, R', a and b are defined as above. Advantageously, the carbamate functionality has the general structure indicated below:

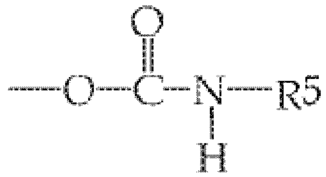

wherein $R^5$ may be, e.g., cyanoalkyl, t-butyl, butyl, octyl, dodecyl, tetradecyl, octadecyl, or benzyl, Advantageously, $R^5$ is octyl, dodecyl, or octadecyl.

In certain embodiments, the surface modifier is selected from the group consisting of phenylhexyltrichlorosilane, pentafluorophenylpropyltrichlorosilane, octyltrichlorosilane, octadecyltrichlorosilane, octyldimethylchlorosilane and octadecyldimethylchlorosilane. In some embodiments, the surface modifier is selected from the group consisting of octyltrichlorosilane and octadecyltrichlorosilane. In other embodiments, the surface modifier is selected from the group consisting of an isocyanate or 1,1'-carbonyldiimidazole (particularly when the hybrid group contains a $(CH_2)_3OH$ group).

In another embodiment, the material has been surface modified by a combination of organic group and silanol group modification.

In still another embodiment, the material has been surface modified by a combination of organic group modification and coating with a polymer. In a further embodiment, the organic group comprises a chiral moiety.

In yet another embodiment the material has been surface modified by a combination of silanol group modification and coating with a polymer.

In other embodiments, the material has been surface modified via formation of an organic covalent bond between the particle's organic group and the modifying reagent.

In still other embodiments, the material has been surface modified by a combination of organic group modification, silanol group modification and coating with a polymer.

In another embodiment, the material has been surface modified by silanol group modification.

## Methods of preparation (not claimed)

The disclosure provides a method for preparing a chromatographic material having controlled porosity.

Disclosed is a method for preparing a chromatographic material having controlled porosity comprising:

a. providing a chromatographic core material having a primary surface; and
b. applying to said primary surface one or more layers of chromatographic surface material,
to produce a chromatographic material having controlled porosity.

Also disclosed is a method for preparing a chromatographic material having controlled porosity comprising:

a. providing a chromatographic core material having a primary surface; and
b. applying to said surface a chromatographic surface material and an electrolyte;
c. removing the polyelectrolyte to form a resultant material having a surface; and
d. optionally, repeating steps b and c one or more time on surface of the resultant material,
to produce a chromatographic material having controlled porosity.

In embodiments in which a polyelectrolyte is utilized, each instance of the polyelectrolyte may be independently a linear, branched, and block polymers containing one or more alkyl, cycloalkyl, aryl, or ethylene oxide groups and one or more primary, secondary, tertiary and quaternary amino groups, pyrrolidone groups, pyridine groups, or imidazole groups, wherein each polyelectrolyte may be positively or negatively charged.

Subsequently, the polyelectrolyte may be removed by any method known in the part including, but not limited to. calcination, thermal treatment, chemical extraction, degradation, ozono

In certain embodiments, the method futher encompasses a post-synthetic processing step, wherein the post-synthetic processing step is endcapping, hydrothermal treatment, extraction, ozonolysis, lyophilization, pseudomorphic transformation, surrounding the chromatographic material in an inorganic surrounding material, surrounding the chromatographic material in an inorganic/organic hybrid surrounding material, drying, thermal treatment, dispersion, acid treatment, reaction with a hybrid functional group, surface modification, grinding, classification, sedimentation, or combinations thereof.

Of particular importance in controlling the porosity of the materials of the invention is the ability to modify the composition, pore diameter, pore volume, or specific surface area of each layer of chromatographic surface material. By doing so, the porosity can be controlled in a predetermined or desired pattern. In certain embodiments, the predetermined pattern may include an increase in average pore diameter, a decrease in average pore diameter, an increase in average pore volume, a decrease in average pore volume, an increase in specific surface area, a decrease in specific surface area, or combinations thereof. In such embodiments, the predetermined pattern is generally regarded as starting at the primary surface of the chromatographic core material and proceeding to the outermost surface of the chromatographic material. In certain embodiments, the predetermined pattern may be viewed outermost surface of the chromatographic to the primary surface of the chromatographic core material.

In certain embodiments the predetermined pattern maybe cone shaped, tapered, fluted, trumpeted, or another predetermined pattern having a single pattern from the core to the outermost surface or a repeating pattern from the core to the outermost surface. Such predetermined patterns can be seen, for example, in Figure 20.

**Approaches which will be useful in the methods are as follows.**

Approaches to the formation of superficially porous materials may be useful in the methods.

Each layer of chromatographic surface material is independently selected from is a porous inorganic/organic hybrid material, a porous silica, a porous composite material or mixtures thereof. In certain embodiments, each layer of thethe chromatographic core material may be silica; silica coated with an inorganic/organic hybrid surrounding materiamaterial; a magnetic core material; a magnetic core material coated with silica; a high thermal conductivity core material; a high thermal conductivity core material coated with silica; a composite material; an inorganic/organic hybrid surrounding material; a composite material coated with silica; a magnetic core material coated with an inorganic/organic hybrid surrounding material; or a high thermal conductivity core material coated with an inorganic/organic hybrid surrounding material.

In other embodiments, each layer of the chromatographic surface material may have the formula:

$$(SiO_2)_d/[R^2((R)_p(R^1)_qSiO_t)_m] \qquad (I)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_{5'}$-$C_{18}$ aryl, $C_1$-$C_{18}$ heteroaryl; or absent; wherein each $R^2$ is attached to two or more silicon atoms;
p and q are each independently 0.0 to 3.0,
t is 0.5, 1.0, or 1.5;
d is 0 to about 30;
m is an integer from 1-20; wherein R, $R^1$ and $R^2$ are optionally substituted; provided that:

(1) when $R^2$ is absent, m = 1 and $t = \frac{(4-(p+q))}{2}$, when 0<p+q≤3; and

(2) when $R^2$ is present, m = 2-20 and $t = \frac{(3-(p+q))}{}$ when p+q≤2;

the formula:

$$(SiO_2)_d/[(R)_p(R^1)_qSiO_1] \qquad (II)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_5$-$C_{18}$ heterocycloalkyl, $C_5$-$C_{18}$ aryl, $C_5$-$C_{18}$ aryloxy, or $C_1$-$C_{18}$ heteroaryl;
d is 0 to about 30;
p and q are each independently 0.0 to 3.0, provided that when p+q=l then t=l.5; when p+q=2 then t=l; or when p+q=3 then t=0.5;

the formula:

$$(SiO_2)_d[R^2((R^1)_rSiO_t)_m] \qquad (III)$$

wherein,

$R^1$ is $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_1$-$C_{18}$ heteroaryl; or absent; wherein each $R^2$ is attached to two or more silicon atoms;
d is 0 to about 30;
r is 0, 1 or 2, provided that when r=0 then t=l.5; when r=1 then t=1; or when r=2, then t=0.5; and
m is an integer from 1-20;

the formula:

$$(A)_x(B)_y(C)_z \qquad (IV)$$

wherein the order of repeat units A, B, and C may be random, block, or a combination of random and block; A is an organic repeat unit which is covalently bonded to one or more repeat units A or B via an organic bond; B is an organosiloxane repeat unit which is bonded to one or more repeat units B or C via an inorganic siloxane bond and which may be further bonded to one or more repeat units A or B via an organic bond; C is an inorganic repeat unit which is bonded to one or more repeat units B or C via an inorganic bond; x and y are positive numbers, and z is a non negative number, wherein x +y + z = 1. In certain embodiments, z = 0, then 0.002≤x/y≤210, and when z ≠ f. 0, then 0.00032≤y/z≤500 and 0.0022≤x/(y+z)≤210; or
the formula:

$$(A)_x(B)_y(B^*)_{y^*}(C)_z \qquad (V)$$

wherein the order of repeat units A, B, B*, and C may be random, block, or a combination of random and block; A is an organic repeat unit which is covalently bonded to one or more repeat units A or B via an organic bond; B is an organosiloxane repeat unit which is bonded to one or more repeat units B or B* or C via an inorganic siloxane bond and which may be further bonded to one or more repeat units A or B via an organic bond, B* is an organosiloxane repeat unit which is bonded to one or more repeat units B or B* or C via an inorganic siloxane bond, wherein B* is an organosiloxane repeat unit that does not have reactive *(i.e.,* polymerizable) organic components and may further have a protected functional group that may be deprotected after polymerization; C is an inorganic repeat unit which is bonded to one or more repeat units B or B* or C via an inorganic bond; x and y are positive numbers and z is a non negative number, wherein x +y + z = 1. In certain embodiments, when z = 0, then 0.002≤x/(y+y*)≤210, and when z≠0, then 0.0003≤(y+y*)/z≤500 and 0.002≤x/(y+y*+z)≤210.

In some embodiments of the invention, each layer of chromatographic surface material is applied using sols, a polyelectrolyte or a chemically degradable polymer, wherein:

a) the sols are inorganic sols, hybrid sols, nanoparticles, or mixtures thereof; and
b) the polyelectrolyte or chemically degradable polymer is removed from the material using chemical extraction, degradation, or thermal treatment at temperatures less than 500°C, or combinations thereof.

In certain embodiments, each layer of chromatographic surface material is applied by formation through an electrostatic or acid/base interaction of an ionizable group comprising the steps of:

a) prebonding the substantially nonporous core with an alkoxysilane that has an ionizable group,
b) treating the substantially nonporous core to sols that are inorganic, hybrid, nanoparticle, or mixtures thereof, that have been prebonded with an alkoxysilane that has an ionizable group of the opposite charge to the ionizable group on the surface of the core; and
c) forming additional layers on the material with sols that are inorganic, hybrid, nanoparticle, or mixtures thereof that have been prebonded with an alkoxysilane that has an ionizable group of opposite charge to the ionizable group of prior layer.

In particular embodiments, the prebonding of the core or sols includes washing with and acid or base, or a charged polyelectrolyte. In other embodiments, the prebonding of the core or sols includes chemical transformation of an accessible hybrid organic group.

In still other embodiments the accessible hybrid organic group is an aromatic group that can undergo sulfonation, nitration, amination, or chloromethylation followed by oxidation or nucleophillic displacement with amine containing groups to form ionizable groups. In yet other embodiments, the accessible hybrid organic group is an alkene group that can undergo oxidation, cross-metathesis, or polymerization to form ionizable groups. In specific embodiments, the accessible hybrid organic group is an thiol group that can undergo oxidation, radical addition, nucleophillic displacement, or polymerization to form ionizable groups.

In yet other embodiments, the prebonding of the substantially core or sols includes bonding with an alkoxysilane that has an ionizable group of formula 1,

$$R(CH_2)_nSi(Y)_{3-x}(R')_x \qquad \text{(formula 1)}$$

where n = 1-30, advantageously 2-3;
x is 0-3; advantageously 0;
Y represents chlorine, dimethylamino, triflate, methoxy, ethoxy, or a longer chain alkoxy group; R represent a basic group, including (but not limited to) $-NH_2$, $-N(R')H$, $-N(R')_2$, $-N(R')_3^+$, - $NH(CH_2)_mNH_2$, $-NH(CH_2)_mN(R')H$, $-NH(CH_2)_mN(R')_2$, $-NH(CH_2)_mN(R')_3^+$, pyridyl, imidizoyl, polyamine;
R' independently represents an alkyl, branched alkyl, aryl, or cycloalkyl group;
m is 2-6.

In still yet other embodiments, the prebonding of the core or sols includes bonding with an alkoxysilane that has an ionizable group of formula 2,

$$A(CH_2)_nSi(Y)_{3-x}(R')_x \qquad \text{(formula 2)}$$

where n = 1-30, advantageously 2-3;
x is 0-3; advantageously 0;
Y represents chlorine, dimethylamino, triflate, methoxy, ethoxy, or a longer chain alkoxy group; A represent an acidic group, including (but not limited to) a sulfonic acid, carboxylic acid, phosphoric acid, boronic acid, arylsulfonic acid, arylcarboxylic acid, arylphosphonic acid, and arylboronic acid.

R' independently represents an alkyl, branched alkyl, aryl, or cycloalkyl group.

In particular embodiments, each layer of chromatographic surface material is applied using a polyelectrolyte or a chemically degradable polymer.

In other embodiments, the polyelectrolyte or a chemically degradable is removed from the material by chemical extraction, degradation, or thermal treatment at temperatures less than 500°C, or combinations thereof.

In certain embodiments, each layer of chromatographic surface 1 material is applied using alkoxysilanes, organoalkoxysilanes, nanoparticles, polyorganoalkoxysiloxanes, or combinations thereof, comprising the steps of:

a) condensing siloxane precursors on the substantially nonporoous core in a reaction mixture comprising ethanol, water and ammonium hydroxideand optionally containing a non-ionic surfactant, an ionic surfactant, a polyelectrolyte or a polymer to form the chromatographic surface material and
b) introducing porosity is introduced through extraction, degradation, oxidation, hydrolysis, deprotection, or transformation of the hybrid group, ionic surfactant or non-ionic surfactant or a combination thereof.

In particular embodiments, the alkoxysilanes, organoalkoxysilanes, nanoparticles, polyorganoalkoxysiloxanes, or combinations thereof, are condensed on the substantially nonporous core in a solution comprising ethanol, water, ammonium hydroxide, an ionic surfactant; and an non-ionic surfactant.
In other embodiments, the ionic surfactant is $C_{10}$-$C_{30}N(R)_3{}^+X$, where R is methyl, ethyl, propyl, alkyl, fluoroalkyl; X is a halogen, hydroxide, or of the form $R'SO_3{}^-$ or $R'CO_2{}^-$ where R' is methyl, ethyl, butyl, propyl, isopropyl, tert-butyl, aryl, tolyl, a haloalkyl or a fluoroalkyl group.
In yet other embodiments, the ionic surfactant is octadecyltrimethylammonium bromide, octadecyltrimethylammonium chloride, hexadecyltrimethylammonium bromide, hexadecyltrimethylammonium chloride, dodecyltrimethylammonium bromide, or dodecyltrimethylammonium chloride.
In particular embodiments, the concentration of ionic surfactant is maintained in the reaction solution between 5-17 mM; or in certain embodiments between 8-14 mM.
In other embodiments, the non-ionic surfactant is a diblock or triblock copolymer. In certain embodiments, the copolymer is (PEO)x(PPO)y(PEO)x,
wherein

PEO is a polyethylene oxide repeat unit,
PPO is a polypropylene oxide repeat unit,
x is an integer between 5-106,
y is an integer between 30-85.

In particular embodiments the triblock copolymer is Pluronic® P123, having $(PEO)_{20}(PPO)_{70}(PEO)_{20}$. In still other embodiments, the alkoxysilanes, organoalkoxysilanes, or combinations thereof, are condensed on the substantially nonporous core in a solution comprising:

ethanol, water, ammonium hydroxide or combinations thereof;
octadecyltrimethylammonium bromide; and
Pluronic® P123.

In certain embodiments, the alkoxysilane used is selected from the group of tetramethoxsilane or tetraethoxysilane.
In still other embodiments, the organosiloxane is selected from the group of phenyltriethoxysilane; phenyltrimethoxysilane; phenylethyltriethoxysilane; phenylethyltrimethoxysilane; ethyltriethoxysilane; ethyltrimethoxysilane; methyltriethoxysilane; methyltriethoxysilane, diethyldiethoxysilane; diethyldimethoxysilane 1,4-bis(triethoxysilyl)benzene; 1,4-bis(trimethoxysilyl)benzene; 1,3-bis(triethoxysilyl)benzene; 1 ,3-bis(trimethoxysilyl)benzene; 1,8-bis(triethoxysilyl)octane; 1,8-bis(trimethoxysilyl)octane; 1,2-bis(trimethoxysilyl)ethane; ,2-bis(triethoxysilyl)ethane; 1,2-bis(methyldiethoxysilyl)ethane; 1,2-bis(methyldimethoxysilyl)ethane; vinyltriethoxysilane; vinyltrimethoxysilane; mercaptoprnpyltrimethoxysilane; mercaptopropyltriethoxysilane; 1,2-bis(triethoxysilyl)ethene; 1,2-bis(trimethoxysilyl)ethene; 1,1-bis(triethoxysily])ethane; 1,1-bis(trimethoxysilyl)ethane; 1,4-bis(triethoxysilylethyl)benzene; 1,4-bis(trimethoxysilylethyl)benzene; 1,3-bis(triethoxysilylethyl)benzene; or 1,3-bis(trimethoxysilylethyl)benzene.
In yet other embodiments, the alkoxysilane used is tetraethoxysilane and the organoalkoxysilane used is 1,2-bis(triethoxysilyl)ethane.
In certain other embodiments, the concentration of octadecyltrimethylammonium bromide is maintained between 8-14 mM.
In certain other embodiments, the molar ratio of octadecyltrimethylammonium bromide and Pluronic® P123 is maintained at or above 1.30.
In still other embodiments, the molar ratio of alkoxysilane to organoalkoxysilane ranges between 30:1 to 1:30.
In certain embodiments, alkoxysilane, organoalkoxysilane, or combinations thereof are prediluted in ethanol. In certain such embodiments, prediluted ethanol solutions of alkoxysilane, organoalkoxysilane, or combinations thereof are added at a slow and constant rate to prevent fines generation, aggregation and agglomeration. In other such embodiments, prediluted ethanol solutions of alkoxysilane, organoalkoxysilane, or combinations thereof are added a rate between 5-500 $\mu$L/min.
In other embodiments, a secondary solution comprising ethanol, water, ammonium hydroxide, ionic surfactant

and non-ionic surfactant is added at a slow and constant rate to prevent fines generation, aggregation and agglomeration. In certain such embodiments the secondary solution comprising ethanol, water, ammonium hydroxide, ionic surfactant and non-ionic surfactant is added within a range between the rate required to maintain a uniform ratio of particle surface area ($m^2$) to reaction volume, to the rate required to maintain a uniform ratio of particle volume ($m^3$) to reaction volume.

In certain embodiments, the surfactant mixture is removed through one or more of the following; extractions with acid, water, or organic solvent; ozonolysis treatments, thermal treatments <500°C, or thermal treatments between 500-1000°C.

In still other embodiments, the surfactant mixture is removed through combination of acid extractions and ozonolysis treatments.

In certain embodiments, each layer of chromatographic surface material is applied using alkoxysilanes, organoalkoxysilanes, nanoparticles, polyorganoalkoxysiloxanes, or combinations thereof,: comprising the steps of:

a) condensing siloxane precursors on the substantially nonporoous core in a reaction mixture comprising ethanol, water or ammonium hydroxide to form a non-porous hybrid inorganic/organic shell material; and
b) introducing porosity is introduced through extraction, degradation, oxidation, hydrolysis, deprotection, or transformation of the hybrid group or a combination thereof.

In some such embodiments, the alkoxysilane used is selected from the group of tetramethoxsilane or tetraethoxysilane.

In other such embodiments, the organosiloxane is selected as one or more of the following from the group of phenyltriethoxysilane; phenyltrimethoxysilane; phenylethyltriethoxysilane; phenylethyltrimethoxysilane; ethyltriethoxysilane; ethyltrimethoxysilane; methyltriethoxysilane; methyltrimethoxysilane, dielhyldiethoxysilane; diethyldimethoxysilane 1,4-bis(triethoxysilyl)benzene; 1,4-bis(trimethoxysilyl)benzene; 1,3-bis(triethoxysilyl)benzene; 1,3-bis(trimethoxysilyl)benzene; 1,8-bis(triethoxysilyl)octane; 1,8-bis( trimethoxysilyl) octane; 1,2-bis(trimethoxysilyl)ethane; 1,2-bis(triethoxysilyl)ethane; 1,2-bis(methyldiethoxysilyl)ethane; 1.2-bis(methyldimethoxysilyl)ethane; vinyltriethoxysilane; vinyltrimethoxysilane; mercaptopropyl trimethoxysilane; mercaptopropyltriethoxysilane; 1,2-bis(triethoxysilyl)ethene; 1.2-bis(trismethoxysilyl)ethene; 1,1-bis(triethoxysilyl)ethane; 1,1-bis(trimethoxysilyl)ethane; 1,4-bis(triethoxysilylethyl) benzene; 1,4-bis(trimethoxysilylethyl)benzene; 1,1-bis(triethoxysilylethyl)benzene; or 1,3-bis(trimethoxysilylethyl)benzene, octadecyltrimethoxysilane, octadecyltriethoxysilane, octyltrimethoxysilane, octyltriethoxysilane, dodecyltrimethoxysilane, and dodecyltriethoxysilane.

In still other such embodiments, the alkoxysilane used is tetraethoxysilane and the organoalkoxysilane used is octadecyltrimethoxysilane.

In certain such embodiments, the alkoxysilane, one or more organoalkoxysilanes, or combinations thereof are prediluted in ethanol.

In some such embodiments, the prediluted ethanol solutions of alkoxysilane, one or more organoalkoxysilanse, or combinations thereof are added a slow and constant rate to prevent fines generation, aggregation and agglomeration.

In other such embodiments, prediluted ethanol solutions of alkoxysilane, one or more organoalkoxysilanes, or combinations thereof are added a rate between 5-500 μL/min.

In certain embodiments, a secondary solution comprising ethanol, water, and ammonium hydroxide is added at a slow and constant rate to prevent fines generation, aggregation and agglomeration.

In certain other embodiments, a secondary solution comprising ethanol, water, and ammonium hydroxide is added within a range between the rate required to maintain a uniform ratio of particle surface area ($m^2$) to reaction volume, to the rate required to maintain a uniform ratio of particle volume ($m^3$) to reaction volume.

In certain embodiments, porosity is introduced through extraction, degradation, hydrolysis, deprotection, or transformation of the hybrid group through one or more of the following; extractions with acid, water, or organic solvent; ozonolysis treatments, thermal treatments <500°C, or thermal treatments between 500-1000°C.

In still other embodiments, porosity is introduced through extraction, degradation, hydrolysis, deprotection, or transformation of the hybrid group through combination of acid extractions, ozonolysis treatments and/or thermal treatments <500°C.

In certain embodiments, each layer is applied using a mixture of formula XX.

$$(D)_d(E)_e(F)_f \qquad \text{(Formula XX)}$$

wherein,

a)

$$d+e+f = 1$$

b) D is one or more inorganic components upon initial condensation
c) E is one or more hybrid components upon initial condensation
d) F is one or more hybrid components upon initial condensation that can be further reacted to increase the porosity of the superficially porous layer.

In certain such embodiments, the precursor for the inorganic component upon initial condensation (D) is selected :from oxide, hydroxide, ethoxide, methoxide, propoxide, isopropoxide, butoxide, sec-butoxide, tert-butoxide, iso-butoxide, phenoxide, ethylhexyloxide, 2-methyl-2-butoxide, nonyloxide, isooctyloxide, glycolates, carboxylate, nitrate, chlorides, and mixtures thereof of silicon, titanium, zirconium, or aluminum.
In other such embodiments, the precursor for the inorganic component upon initial condensation (D) is selected from tetraethoxysilane, tetramethoxysilane, methyl titanium triisopropoxide, methyl titanium triphenoxide, titanium allylacetoacetatetriisopropoxide, titanium methacrylate triisopropoxide, titanium methacryloxyethylacetoacetate triisopropoxide, pentamethylcyclopentadienyl titanium trimethoxide, pentamethylcyclopentadienyl titanium trichloride, and zirconium methacryloxyethylacetoacetate tri-n-propoxide.
In still other such embodiments, the precursor for the hybrid component upon initial condensation (E) is selected from 1,2-bis(triethoxysilyl)ethane, 1,2-bis(trimethoxysilyl)ethane, 1,4-bis(triethoxysilyl)benzene, 1,4-bis(trimethoxysilyl) benzene, 1,3-bis(triethoxysilyl)benzene, 1,3-bis(trimethoxysilyl)benzene, 1,3,5-tris(triethoxysilyl)benzene, 1,3,5-tris(trimethoxysilyl)benzene, and bis(4-triethoxysilylphenyl)diethoxysilane.
In yet other such embodiments, the precursor for the hybrid component upon initial condensation that can be further reacted to increase the porosity of the superficially porous layer (F) is selected from phenyltrimethoxysilane, phenyltriethoxysilane, acetyloxyethyltrimethoxysilane; acetyloxyethyltriethoxysilane; chloroethyltriethoxysilane; chloroethyltrimethoxysilane; methacryloxypropyltrimethoxysilane; methacryloxypropyltriethoxysilane; bromoethyltrimethoxysilane; bromoethyltriethoxysilane; fluorotriethoxysilane; fluorotrimethoxysilane; and alkoxysilanes of the type:

$$(CH_3CH_2O)_{4-v}Si(OR^*)_v \qquad \text{(Formula XXb)}$$

wherein

R* was the corresponding octadecyl, dodecyl, octyl, 2-ethoxyethyl, or 3-ethyl-3-pentyl group,
v was an integer equal to 1 - 4,

In such embodiments, porosity is introduced by reaction of hybrid group F through protodesilylation, hydrolysis, deprotection, acid extraction, thermal treatment <500°C, oxidation, ozonolysis or decomposition.
Further disclosed but not claimed is a method to produce a material with increased hybrid content near the surface of the material by modifying a silica core with one more or more layers formed using an organosiloxane, a mixture of organosiloxane and alkoxysilane, polyorganoalkoxysilanes, a hybrid inorganic/organic surrounding material, or combination thereof.
Also disclosed is a method to produce a superficially porous hybrid material that has increased hybrid content near the external surface of the material by modifying a superficially porous material with one more or more layers formed using an organosiloxane, a mixture of organosiloxane and alkoxysilane, polyorganoalkoxysilanes, a hybrid inorganic/organic surrounding material, or combination thereof.
Further disclosed but not claimed is a method to produce a superficially porous hybrid particle that has increased hybrid content near the external surface of the particle by modifying a superficially porous particle with one more or more layers formed using an organosiloxane, a mixture of organosiloxane and alkoxysilane, polyorganoalkoxysilanes, a hybrid inorganic/organic surrounding material, or combination thereof.
Also disclosed but not claimed is a method to produce a superficially porous hybrid particle that has increased hybrid content near the external surface of the particle by modifying a superficially porous particle that is substantially silica (>90 molar%) with one more or more layers formed using an organosiloxane, a mixture of organosiloxane and alkoxysilane, polyorganoalkoxysilanes, a hybrid inorganic/organic surrounding material, or combination thereof.
Still further disclosed but not claimed is a method to produce a superficially porous hybrid particle that has increased hybrid content near the external surface of the particle comprising the steps of

a.) forming a superficially porous particle that is substantially silica (>90 molar%) and has a pore volume between 0.18-0.50 $cm^3/g$; and
b.) reducing the porosity of this particle by 0.01-0.20 $cm^3/g$ by modify this particle with one more or more layers formed using an organosiloxane, a mixture of organosiloxane and alkoxysilane, polyorganoalkoxysilanes, a hybrid inorganic/organic surrounding material, or combination thereof.

In certain embodiments the methods provide materials in which 1-15 layers are formed in the process. In other aspects, 2 -5 layers are formed. In still other 1-2 layers are formed.
In certain embodiments of the invention the each layer of the chromatographic surface material or the chromatographic material as a whole is optimized by acid extraction, classification, ozonolysis treatment, hydrothermal treatment, acid treatment or combinations thereof.
In yet other embodiments of the invention, the chromatographic material of the invention is further surface modified. In some aspects by coating with a polymer; coating with a polymer by a combination of organic group and silanol group modification; a combination of organic group modification and coating with a polymer; a combination of silanol group modification and coating with a polymer; formation of an organic covalent bond between the material's organic group and a modifying reagent; or a combination of organic group modification, silanol group modification and coating with a polymer.

**Alternative Approach to synthesis**

In applying the chromatographic surface material to the chromatographic core or to subsequent layers of chromatographic surface materials, a variety of approaches can be utilized.
The approaches described herein allows for the synthesis of narrow particle size distribution porous materials particles having a chromatographically enhanced pore geometry.
The processes involves the condensation of a tetraalkoxysilane (e.g., tetraethoxysilane or tetramethoxysilane) alone or co-condensed with a second organosilane through modification of a traditional Stöber-growth process. Listed below are non-limiting descriptions of this process.

**Method A:**

**Step 1)** Condensation of a tetraalkoxysilane with or without $(R^1)^a(R^2)_3(R^3)_cSi(OR^4)_d$ to form seed particles (0.2-10 $\mu$m) in the presence or absence of surfactants or pore structuring agents (including pore expanding molecules and polymers).
**Step 2)** Grow seed particles by condensation of a tetraalkoxysilane with or without $(R^1)_a(R^2)_b,(R^3)_cSi(OR^4)_d$ to form larger core particles (0.3-20 $\mu$m) in the presence or absence of surfactants or pore structuring agents (including pore expanding molecules and polymers).
**Step 3)** Further grow particles by co-condensation of a tetraalkoxysilane with $(R^1)^a(R^2)_3(R^3)_cSi(OR^4)_d$ to yield non-porous particles (0.4-20 pm) in the presence or absence of surfactants or pore structuring agents (including pore expanding molecules and polymers).
**Step 4)** Improve particle size distribution through particle classification techniques.
**Step 5)** Produce a porous silica particle by removal of organic group and or surfactants by thermal treatment.
**Step 6)** Pore structure modification using fluorine containing chemical techniques, including ammonium bifluoride and hydrofluoric acid.
**Step 7)** Pore structure modification by hydrothermal processing in the presence or absence of surfactants or pore structuring agents (including pore expanding molecules and polymers).
**Step 8)** Improve particle size distribution through particle classification techniques.
**Step 9)** Use of elevated temperature treatment (>600°C) to improve particle mechanical stability.
**Step 10)** Prepare the particle surface for modification by acid treatment (e.g., hydrochloric acid or hydrofluoric acid).
**Step 11)** Chemical modification of the particle surface.

**Method B:**

**Step 1)** Condensation of a tetraalkoxysilane with or without $(R^1)^a(R^2)_3(R^3)_cSi(OR^4)_d$ to form seed particles (0.2-10 $\mu$m) in the presence or absence of surfactants or pore structuring agents.
**Step 2)** Grow seed particles by condensation of a tetraalkoxysilane with or without $(R^1)^a(R^2)_3(R^3)_cSi(OR^4)_d$ to form larger core particles (0.3-20 $\mu$m) in the presence or absence of surfactants or pore structuring agents.
**Step 3)** Further grow particles by co-condensation of a tetraalkoxysilane with $(R^1)_a(R^2)_b(R^3)_cSi(OR^4)_d$ to yield non-porous particles (0.4-20 $\mu$m) in the presence or absence of surfactants or pore structuring agents (including pore expanding molecules and polymers).
**Step 4)** Improve particle size distribution through particle classification techniques.
**Step 5)** Produce a porous silica particle by removal of organic group and/or surfactants by thermal treatment or extraction techniques.

**Step 6)** Pore structure modification using fluorine containing chemical techniques, including ammonium bifluoride and hydrofluoric acid.

**Step 7)** Pore structure modification by pseudomorphic transformation in the presence of surfactants and/or pore structuring agents (including pore expanding molecules and polymers).

**Step 8)** Surfactant removal by extraction techniques or by calcination.

**Step 9)** Pore structure modification by hydrothermal processing in the presence or absence of surfactants or pore structuring agents (including pore expanding molecules and polymers).

**Step 10)** Improve particle size distribution through particle classification techniques.

**Step 11)** Use of elevated temperature treatment (>600°C) to improve particle mechanical stability.

**Step 12)** Prepare the particle surface for modification by acid treatment (e.g., hydrochloric acid or hydrofluoric acid).

**Step 13)** Chemical modification of the particle surface.

**Method C (Specific Version of Method A):**

**Step 1)** Condensation of $Si(OCH_2CH_3)_4$ to form seed particles (0.2-2 μm).

**Step 2)** Grow seed particles by condensation of $Si(OCH_2\text{-}CH_3)_4$ to form a larger core particle (0.3-7 μm).

**Step 3)** Further grow particles by co-condensation of $Si(OCH_2\text{-}CH_3)_4$ with $RSi(OR)_3$ (R = octyl or octadecyl and R' is methyl or ethyl) to yield non-porous particle (0.4-10 μm) in the presence or absence of a pore structuring agent (e.g., mesitylene or an alkane). Here R = octyl or octadecyl and R' is methyl or ethyl.

**Step 4)** Improve particle size distribution through particle classification techniques.

**Step 5)** Produce a porous silica particle by removal of organic group by thermal treatment (500-600°C in air).

**Step 6)** Pore structure modification using ammonium bifluoride (4-20 hours, 25-60°C).

**Step 7)** Pore structure modification by hydrothermal processing (7-20 hours, pH 5-7, 90-150°C).

**Step 8)** Improve particle size distribution through particle classification techniques.

**Step 9)** Use of elevated temperature treatment (800-1,000°C) to improve particle mechanical stability.

**Step 10)** Prepare the particle surface for modification using hydrofluoric acid treatment.

**Step 11)** Chemical modification of the particle surface using chlorosilanes coupling and endcapping protocols.

**Method D (Modified Core Particle):**

**Step 1)** <10 μm particles (*e.g.*, diamonds, zirconia, titania, iron oxides, cerium, cobalt, cobalt oxides, carbon, silica, silica carbide) are surface activated through treatment with acid, base, chemical reduction, chemical oxidation, or through attachment of a surface modifying group (*e.g.*, adsorption of an amine, surfactant, silane bond).

**Step 2)** Particles are grown by condensation of a tetraalkoxysilane with or without $(R^1)^a(R^2)_3(R^3)_cSi(OR^4)_d$ in the presence or absence of surfactants or pore structuring agents (including pore expanding molecules and polymers).

Step 3)Particle are further grown by co-condensation of a tetraalkoxysilane with $(R^1)^a(R^2)_3(R^3)_cSi(OR^4)_d$ to yield a non-porous particles in the presence or absence of surfactants or pore structuring agents (including pore expanding molecules and polymers).

**Step 4)** Improve particle size distribution through particle classification techniques.

**Step 5)** Produce a porous silica particle by removal of organic group and/or surfactants by thermal treatment or extraction techniques.

**Step 6)** Pore structure modification using fluorine containing chemical techniques, including ammonium bifluoride and hydrofluoric acid.

**Step 7)** Pore structure modification by pseudomorphic transformation in the presence of surfactants and/or pore structuring agents (including pore expanding molecules and polymers).

**Step 8)** Surfactant removal by extraction techniques or by calcination.

**Step 9)** Pore structure modification by hydrothermal processing in the presence or absence of surfactants or pore structuring agents (including pore expanding molecules and polymers).

**Step 10)** Improve particle size distribution through particle classification techniques.

**Step 11)** Use of elevated temperature treatment (>600°C) to improve particle mechanical stability.

**Step 12)** Prepare the particle surface for modification by acid treatment (e.g., hydrochloric acid or hydrofluoric acid).

**Step 13)** Chemical modification of the particle surface.

*Alternatives to Methods A-D*

Many alternatives within a Method A-D can be explored. For example, if particle are substantially uniform in size

after growth, further sizing steps may not be required. Other steps that may be avoided are the use of fluorine containing chemical modification step before pseudomorphic transformation, or the use of a higher temperature treatment to improve particle mechanical stability if the particles already have sufficient mechanical strength without the use of this step.

Method D may be useful for preparing superficially porous magnetic particles.

**In-Tank, In-Line, Or Off-Line Magnetic Capture Method**

As noted herein, the AMT process and the University of Cork process both require repeated in-process workups using centrifugation followed by redispersion during the formation of the superficially porous layer. The concerns with repeated centrifugation is aggregation/agglomeration, difficulty redispersing particles, product uniformity, and long labor times required for this process. Aggregation and agglomeration are extremely detrimental for this process. It is possible for aggregates/agglomerates to be further coated in both of these processes. By its nature repeated centrifugation allows for these un-aged, "green" materials to get close to each other. Excessive centrifugation time and g-forces can results in a tight bed structure that can be hard to redisperse. Filtration (including tangential filtration) is an alternative to centrifugation that allows for a less compact bed to be formed. Unfortunately the time period required to filter <3 μm materials that may be laden with sub-micron fines is prohibitive. These sub-micron fines can readily clog the filter material preventing complete filtration to occur.

There are also many methods available to redisperse particles, including sonication using sonic baths, in-line sonicators, in-tank sonicators, sonic horns, rotor-stator mixers, milling, low shear and high shear mixing (*e.g.*, saw-tooth impellers). Optimization of amplitude, frequency and pulse sequences is used for optimal sonication. Adjusting the conductivity, pH and surfactant mixture can also be used to optimally redisperse particles (through solvent washes, or controlled order of addition of reagents). One concern for these redispersion methods is the potential to harm the superficially porous layer. It is expected that elevated shears may result in a fracturing of the porous layer. The resulting material may have bare-spots, or non-uniform porous layers.

A further concerns is the long reaction times required for an iterative process, such as those described by AMT and the University of Cork. While such materials can be prepared on a laboratory and batch scale, the times required for these processes can exceed those typically used for the synthesis of fully porous particles.

Another concern for uniform shell processes such is the impact of reseeding. Reseeded particles (<0.5 μm) can emerge during the growth step. If they are not effectively removed, the will start to grow preferentially over the larger porous layer, solid core materials. At some point the two particle distributions can overlap. The end result of this. after further processing steps, is the overlapping mixture of superficially porous and fully porous particles. These overlapping mixture of particles are difficult to separate, quantify or understand the impact on chromatographic performance (including chromatographic reproducibility).

Thus, in an alternative approach, magnetic capture methods are used to collect magnetic core particles in place of centrifugation or filtration. These methods include in-tank, in-line, or off-line magnetic capture.

In-tank magnetic capture uses a removable magnetic rod (or alternatively an electromagnet) placed within a removable or permanent glass sleeve or baffle. In this approach the magnetic rod is placed within the glass sleeve during the time of capture. After the remaining reaction solution is emptied and a new wash or reaction solvent is added, the magnetic rod is removed and bound magnetic core particles are redispersed. Alternatively, an external magnet is placed on the side of the reactor allowing magnetic core particles to be captured on the reactor side-wall. After the remaining reaction solution is emptied and a new wash or reaction solvent is added, the external magnet is removed and bound magnetic core particles are redispersed.

The in-line magnetic capture method involves pumping the reaction solution in a recirculation loop through a collection container. This collection container is placed within a magnetic holding block. Magnetic core particles are collected in this container. After the remaining reaction solution is emptied and a new wash or reaction solvent is added, the collection container is removed from the magnetic holding block and the bound magnetic core particles are redispersed as they are pumped back into the reaction vessel. By using the appropriate sized collection container (advantageously containing one or more flat surfaces) this approach has an advantage in that it allows for good control of the surface area exposed to the magnetic field.

The off-line magnetic capture method is similar to filtration in that the reaction solution is transferred to a secondary vessel. In this secondary vessel, a magnetic field is applied to allow for the controlled collection of magnetic core particles. Reaction solution or wash solvents are removed by filtration, decanting, or by siphon. Magnetic core particles are redispersed in the appropriate solvent and transferred back to the reaction vessel.

During the magnetic capture step for all of these approaches, a loose collection of magnetic core particles is formed. These collections of core particles are less dense than the cake formed by excessive centrifugation. As a result these particles are easier to redisperse. The manner of redispersing magnetic core particles is similar to the approaches described above.

In this approach a non-porous magnetic core is used in place of a non-porous silica or hybrid core. This magnetic

core can contain (but is not limited to) magnetic forms of iron oxides, iron, metals, metal oxides, chromium dioxide, ferrites, or cobalt. Advantageously the magnetic core contains magnetite, maghemite. The magnetic core can exist as a pure metal or metal oxide or exist in combination with a second material that includes (but is not limited to) silica, hybrid, polymer, or non-magnetic materials. For example, a magnetic core can be formed by incorporating <100 nm magnetite or cobalt nanoparticles within non-porous silica or polymer particles. The magnetic nanoparticles can be homogeneously dispersed nanoparticles or dispersed clusters of nanoparticles within this material, adsorbed only to the surface, or contained only in the interior of the non-porous core particles. Alternatively 0.3-1.5 μm magnetite or cobalt particles can be used as the non-porous core. Magnetic capture methods are used in this process in place of centrifugation or filtration.

In order to reduce undesired chromatographic interactions due to the core, a non-porous surface coating with a silica, hybrid, or polymeric composition may be advantageously used. This surface coating step may be advantageously repeated or performed in a growth-process to achieve the desired thickness. Magnetic capture methods are used in this process in place of centrifugation or filtration. To ensure that the core morphology is not substantially modified, this step advantageously provides a uniform surface layer. Calcination and surface rehydroxylation may advantageously used at the end of this step.

A uniform silica or hybrid superficially porous layer may be formed from any one of the processes described above. To ensure the core morphology is not substantially modified, this step advantageously yield a highly uniform porous layer. Magnetic capture methods are used in this process in place of centrifugation or filtration. Additional steps of classification, calcination, pore modification, re-calcination, rehydroxylation and bonding are then performed (as required) as detailed above.

Considering the problem associated with reseeded particles for uniform layer processes such as the novel one described above or the University of Cork process, a magnetic core particle allows for a unique means to separate the porous layer materials from reseeded particles. This can be utilized in-process or during product workup.

The use of magnetic core particles as well as magnetic capture methods allows for a unique process of automating the synthesis of superficially porous particles. The use of in-tank magnetic capture (e.g., using electromagnets) allows for full automation of particle collection. Automated bottom valves and solvent addition valves, are used to fully automate synthesis conditions. In-tank or in-line particle size measurements are used to monitor reaction performance and determined reaction completion.

### *Separation Devices and Kits*

Another aspect provides a variety of separations devices having a stationary phase comprising the materials as described herein. The separations devices include, *e.g.,* chromatographic columns, thin layer plates, filtration membranes, sample cleanup devices and microtiter plates; packings for HPLC columns; solid phase extraction (SPE); ion-exchange chromatography; magnetic bead applications; affinity chromatographic and SPE sorbents; sequestering reagents; solid supports for combinatorial chemistry; solid supports for oligosaccharide, polypeptides, and/or oligonucleotide synthesis; solid supported biological assays; capillary biological assay devices for mass spectrometry, templates for controlled large pore polymer films; capillary chromatography; electrokinetic pump packing materials; packing materials for microfluidic devices; polymer additives; catalysis supports; and packings materials for microchip separation devices. Similarly, materials of the invention can be packed into preparatory, microbore, capillary, and microfluidic devices.

The materials of the invention impart to these devices improved lifetimes because of their improved stability. Thus, in a particular aspect, the invention provides a chromatographic column having improved lifetime, comprising

a) a column having a cylindrical interior for accepting a packing material, and
b) a packed chromatographic bed comprising a materials as described herein.

In another particular aspect, the invention provides a chromatographic device, comprising

a) an interior channel for accepting a packing material and
b) a packed chromatographic bed comprising a materials as described herein.

The invention also provides for a kit comprising the materials as described herein, as described herein, and instructions for use. In one embodiment, the instructions are for use with a separations device, e.g., chromatographic columns, thin layer plates, filtration membranes, sample cleanup devices, solid phase extraction device, microfluidic device, and microtiter plates.

The chromatographic materials of the invention can be used in a variety of chromatographic separation methods. As such, the devices and kits can also be utilized for such methods. Examples of chromatographic separation methods the materials of the invention can be used in include, but are not limited to, HPLC separations, normal-phase selarations, reversed-phase separations, chiral separations, HILIC separations, SFC separations, affinity separations, perfusive

separations, partially perfusive separations, and SEC separations.

**Examples**

The present invention may be further illustrated by the following non-limiting examples describing the chromatographic materials.

*Materials*

All reagents were used as received unless otherwise noted. Those skilled in the art will recognize that equivalents of the following supplies and suppliers exist and, as such, the suppliers listed below are not to be construed as limiting.

*Characterization*

Those skilled in the art will recognize that equivalents of the following instruments and suppliers exist and, as such, the instruments listed below are not to be construed as limiting.

The %C, %H, %N values were measured by combustion analysis (CE-440 Elemental Analyzer; Exeter Analytical Inc., North Chelmsford, MA) or %C by Coulometric Carbon Analyzer (modules CM5300, CM5014, UIC Inc., Joliet, IL). The specific surface areas (SSA), specific pore volumes (SPV) and the average pore diameters (APD) of these materials were measured using the multi-point $N_2$ sorption method (Micromeritics ASAP 2400; Micromeritics Instruments Inc., Norcross, GA). The SSA was calculated using the BET method, the SPV was the single point value determined for $P/P_0 > 0.98$ and the APD was calculated from the desorption leg of the isotherm using the BJH method. The median mesopore diameter (MPD) and mesopore pore volume (MPV) were measured by mercury porosimetry (Micromeritics AutoPore IV, Micromeritics, Norcross, GA). Scanning electron microscopic (SEM) image analyses were performed (JEOL JSM-5600 instrument, Tokyo, Japan) at 7 kV. Focused ion beam scanning electron microscopic (FIB/SEM) image analyses were performed by Analytical Answers Inc. (Woburn, MA) on an FEI Model 200 Focused Ion Beam instrument and a Hitachi S4800 Ultra-Field emission SEM. Particle sizes were measured using a Beckman Coulter Multisizer 3 analyzer (30 $\mu$m aperture, 70.000 counts; Miami, FL). The particle diameter (dp) was measured as the 50% cumulative diameter of the volume based particle size distribution. The width of the distribution was measured as the 90% cumulative volume diameter divided by the 10% cumulative volume diameter (denoted 90/10 ratio). Light scattering particle size measurements were measured using a Malvern Mastersizer 2000 in water. Particle size measurements of nanoparticles and Zeta-potential measurements were made using a Malvern ZetaSiser NanoSeries (model ZEN3600). Multinuclear ($^{13}$C, $^{29}$Si) CP-MAS NMR spectra were obtained using a Bruker Instruments Avance-300 spectrometer (7 mm double broadband probe). The spinning speed was typically 5.0-6.5 kHz, recycle delay was 5 sec. and the cross-polarization contact time was 6 msec. Reported $^{13}$C and $^{29}$Si CP-MAS NMR spectral shifts were recorded relative to tetramethylsilane using the external standards adamantane ($^{13}$C and $^{29}$Si CP-MAS NMR $\delta$ 38.55) and hexamethylcyclotrisiloxane ($^{29}$Si CP-MAS NMR, $\delta$ -9.62). Populations of different silicon environments were evaluated by spectral deconvolution using DMFit software. [Massiot, D.; Fayon, F.; Capron, M.; King, I.; Le Calvé, S.; Alonso, B.; Durand, J.-O.; Bujoli, B.; Gan, Z.; Hoatson, G. Magn. Reson. Chem. 2002, 40, 70-76]. Classification techniques are described, for example, in W. Gerhartz, et al. (editors) Ullmann's Encyclopedia of Industrial Chemistry, 5th edition, Volume B2: Unit Operations I, VCH Verlagsgesellschaft mbH, (Weinheim, Fed. Rep. Germ. 1988). Magnetic measurements were made using a vibrating sample magnetometer (ADE/DMS Model 880) by ArKival Technology Corporation (Nashua, NH). Phase characterization were made by Wide Angle X-Ray Powder Diffraction (XRPD) analysis (H&M Analytical Services, Inc. Allentown, N.J.), using a Bruker D4 diffractometer (Cu radiation at 40 KV/30 mA). Scans were run over the angular range of 10° to 90° 2-Theta with a step size of 0.02° and a counting time of 715 seconds per step.

**EXAMPLE 1**

Superficially porous silica layers (Scheme 1, Figure 28) were formed on nonporous silica core material, prepared by the general approach of Stöber (US 3,634,558; J. Coll. Lnterf. Sci., 1968, 26,62), using a polyelectrolyte layering process described by Wyndham (US 20130112605, US 20130206665), Kirkland (US 20070189944; 20080277346), Blue (J. Chromatogr. A, 2011, 1218 (44), 7989), and Brennan (J. Mater. Chem., 2012, 22, 13197). In this process a porous layer was formed in a layer-by-layer approach using alternating additions of polyelectrolyte and silica nanoparticles (or silica sols) (Muriithi, B. W. Ph.D. Thesis, University of Arizona, 2009, pp. 396). In this process only a single size of nanoparticles was used for each prototype.

As detailed in Wyndham (US 20130112605, US 20130206665), the polyelectrolyte was removed by thermal treatment in air at temperatures greater than 500-600°C (10-20 hours). To further strengthen these materials, a second thermal treatment at 825-1000°C for 10-20 hours was employed. A rehydroxylation step was performed using the process

described in Example 64 of Wyndham (US 20130112605, US 20130206665). Table 1 contains relevant synthetic parameters and characterization data. The core diameter was determined by Coulter Counter, number mode. The nanoparticle size was determined by Zetasizer. SEM was used to confirm nanoparticle size used in Products 1n-1r. Rho was estimated from SEM data. Some error is noted in this calculation for ultra-thin shells products (1m and 1p) that were estimated by this approach to be greater than 1. The MPD (131 Å, 308 Å) and MPV (0.28 $cm^3/g$, 0.09 $cm^3/g$) were measured by mercury porosimetry for Products 1j and 1n (respectively, shown in parenthesis).

**TABLE 1**

| Product | Core num, mode $dp_{core}$ (μm) | Nanoparticle $dp_{nanoparticle}$ (nm) | Rho | SSA ($m^2/g$) | SPV ($cm^3/g$) | APD (Å) | $\beta$ ($m^2/cm^3$) | *Apparent* $dp_{nanoparticle}$(nm) |
|---|---|---|---|---|---|---|---|---|
| 1a | 1.22 | 11 | 0.67 | 131 | 0.34 | 100 | 151 | 10 |
| 1b | 1.32 | 11 | 0.68 | 119 | 0.25 | 81 | 165 | 10 |
| 1c | 1.17 | 11 | 0.69 | 108 | 0.29 | 104 | 137 | 11 |
| 1d | 1.32 | 11 | 0.72 | 109 | 0.22 | 74 | 164 | 11 |
| 1e | 1.22 | 11 | 0.75 | 102 | 0.25 | 91 | 142 | 12 |
| 1f | 1.17 | 11 | 0.80 | 88 | 0.19 | 84 | 142 | 14 |
| 1g | 1.22 | 11 | 0.85 | 56 | 0.15 | 110 | 101 | 22 |
| 1h | 1.42 | 11 | 0.88 | 72 | 0.17 | 93 | 123 | 17 |
| 1i | 1.32 | 20 | 0.73 | 59 | 0.26 | 175 | 81 | 21 |
| 1j | 1.22 | 20 | 0.70 | 73 | 0.28 | 150 | 95 | 17 |
| 1k | 1.01 | 20 | 0.57 | 83 | 0.32 | 150 | 99 | 15 |
| 1l | 1.32 | 20 | 0.70 | 59 | 0.24 | 159 | 84 | 21 |
| 1m | 1.26 | 20 | 0.83 | 69 | 0.26 | 143 | 94 | 18 |
| 1n | 1.50 | 69 | 0.91 | 13 | 0.09 | 384 | 29 | 93 |
| 1o | 1.75 | 69 | 1.06 | 8 | 0.03 | 196 | 23 | 152 |
| 1p | 1.25 | 69 | 0.75 | 25 | 0.14 | 242 | 47 | 49 |
| 1q | 1.50 | 69 | 0.84 | 18 | 0.11 | 290 | 37 | 67 |
| 1r | 1.75 | 69 | 1.01 | 8 | 0.04 | 181 | 22 | 152 |

To better understand the impact of pore structure in a porous material, we examined physical properties changes across the radius of the particle distribution function. This distribution approach allows for correlation of points (including molecules, atoms, particles) as a function of distance from a center point. Such a technique has been used to assess distribution of chromatographic particles in a packed bed (Bruns, S. J. Chromatogr. A, 2012, 1268, 53). While often used to assess distributions or ordering using tools such as image analysis or computational simulation, here we employ a simpler visual representation of this approach as it applies to porous media, in the understanding of changes in pore surface area and pore diameter from a central point.

Figure 1 displays the cross·-sectional geometry of a porous and superficially porous particle. The critical parameters of a superficially porous particle are defined as the particle center (c), the core diameter *(d),* the particle diameter *(d' or 2l),* the radius of the particle *(l).* the origin of porous layer along the radius (0), and the termination of the porous layer along the radius (1). The ratio of core diameter to particle diameter (denoted Rho) is defined as d/d'. In the case where there is no porous layer the Rho is 1.

The critical parameters for a fully porous particle are particle center (c), the particle diameter *(d'or 2l),* the radius of the particle *(l),* the center of the porous particle (0 = c), and the termination of the porous particle along the radius. As there is no core particle, the Rho for a fully porous particle is 0.

Figure 2 shows the expected surface area and pore diameter distribution along the radius. All parameters are normalized from a low state (0) to maximum value (1). The solid line represents the planned changes in surface area and pore diameter going from the core of the nonporous particle to the external particle surface. The dotted line represents expected deviation from this line near the surface of the core and the beginning of the porous layer. In contrast, fully porous

materials are expected to have uniform pore diameter and surface area from the center to the surface of the material.

Another important parameter is final particle size. As with fully porous particles, the use of chromatographic columns containing smaller particles *(e.g.,* <2 μm in diameter) is expected to yield higher column efficiency and peak capacity when used in gradient separations, when used on an appropriately configured liquid chromatographic system.

It is known in the art that a Rho of 0.6-0.8 is preferred for superficially porous particles used for chromatographic separations of small molecules. A Rho of 0.8-0.95 is preferred for superficially porous material used for chromatographic separations of large molecules (K. Horvath, J. Chromatogr. A, 2010, 1217 (41), 6373; G. Guiochon, J. Chromatogr. A, 2011, 1218 (15), 1915).

Another important parameter is average pore diameter (APD). A pore diameter between 70-130 Å is preferred for small molecule separation and for smaller bimolecule separations. When the APD is smaller than 70 Å, the resulting materials are often comprised of elevated amount of microporosity. When the APD is greater than 130 A, there resulting column is expected to display a significant loss in column phase ratio, retentivity, and capacity. Column phase ratio ($\beta$) is defined as shown in Equation 1 ($\varepsilon$ =interstitial porosity; $\rho$ = skeletal density of the stationary phase).

$$\beta = (1- \varepsilon) \cdot SSA / (SPV + (\varepsilon / \rho)) \quad \text{Equation 1}$$

Materials with APD greater than 120 Å are preferred for large molecule and biomolecule separations. For many reversed-phase separations of peptides and small proteins a pore diameter of 120-200 Å is preferred. For reversed-phase separations of many larger proteins a pore diameter between 150-450 Å is preferred. The separation of even larger biomolecules, such as vaccines, viruses, antibody-drug-conjugates, larger oligonucleotide and RNA separations, and virus like particles may require APD between 300-900 Å may be preferred. For ion-exchange separations of larger biomolecules the use of nonporous materials may be preferred (e.g., Rho = 1). The concern with using columns containing smaller APD materials is exclusion of the large molecule. However, if the APD is too for a given large molecule separation, the same concern emerges with loss in retentivity and column phase ratio.

The average pore diameter (APD) of a superficially porous material can be controlled by judicious selection of the nanoparticle size for the sol used in the layer-by-layer process. The impact of nanoparticle size on the surface area and pore diameter can be roughly estimated using the following equations 2-4.

$$SSA_{nanoparticle} = 6{,}000/(dp_{nanoparticle} \cdot \rho_{nanopmticle}) \quad \text{Equation 2}$$

$$SSA_{superfically\ porus\ particle} = w_{core} \cdot SSA_{core} + (1- w_{core}) \cdot SSA_{nanoparticle} \quad \text{Equation 3}$$

$$APD = 40{,}000\ SPV_{superfically\ porous\ particle} / SSA_{superfically\ porous\ particle} \quad \text{Equation 4}$$

As shown in Figure 3, as nanoparticle size increases the estimated SSA of these nanoparticles decrease greatly. When these different nanoparticles are then used in the synthesis of superficially porous material, different surface areas emerge. Larger nanoparticles lead to lower SSA and larger APD for the resulting superficially porous products.

Figure 4 shows the estimation of core material weight fraction with varying Rho and Figure 5 plots the estimated surface area for different superficially porous materials prepared with varied nanoparticle size. While following a similar trend as Figure 3, the SSA of the superficially porous material is further decreased due to the presence of the core material. Having a thinner porous layer thickness (e.g., higher Rho) also results in a lower SSA for the different materials. The change in Rho from 0.70 to 0.90 is expected to result in a two-fold reduction in the SSA for the superficially porous material.

As detailed in Figure 5 and 6, the resulting SSA for superficially porous products is estimated for materials made with different nanoparticle sizes. As shown in Figure 7, materials made with different nanoparticle sizes are expected to have different APD for the products. For different Rho materials made with a given nanoparticle size, one does not expect major differences in APD with Rho, for Rho less than about 0.95 *(e.g.,* 0<=Rho<=0.95). This is understood as shown in Equation 4, where SPV and SSA have a reciprocal relationship. As Rho decreases, both to SSA ($m^2/g$) and SPV ($cm^2/g$) increase. The result of this is APD is expected to be constant with Rho, when uniform porous layers are formed without variation in porosity. While not limited to theory, the exception to this is at higher Rho when the initial layers have formed upon the core surface. For higher Rho materials there may be a larger variation in porosity as the initial porous layer formed, resulting in differences in the APD.

Using Equations 2-4 we can estimate the apparent nanoparticle size for products in Table 1. For products 1a-1h, which used an 11 nm nanoparticle feed, we determined an average apparent silica nanoparticle size for the final products of 11.4 nm. For products 1i- 1j, which used a 20 nm nanoparticle feed, we determine an average apparent silica nanoparticle size of 17.7 nm. Figure 8 contains SSA data for Products 1a-1j, along with modeled SSA data. While not

limited by theory, it is understood that difference in nanoparticle sizes can be ascribed to difference in analytical techniques and calculations, necking between nanoparticles within the porous layer (e.g., increased coordination number of the porous network), mild ripening of the pore structure due to exposure to water, and/or modification of the porous layer during thermal treatments (e.g., viscous sintering).

There is a general trend in final products having a higher Rho having an apparent $dp_{nanoparticle}$ size, when prepared using the same size nanoparticles. For example, when looking at products formed from 11 nm nanoparticles (1a-1h), the lower Rho materials (Products 1a-1d) have good agreement between the apparent $dp_{nanoparticle}$ size (10-11 nm) and the size of nanoparticle used in the process. Higher Rho materials (Products 1f-1h), prepared using the same 11 nm nanoparticles, have higher $dp_{nanoparticle}$ size (14-22 nm). By examining the precursor to final thermal treatment of Product 1g, we determine a $dp_{nanoparticle}$ size of 17 nm. This is in better agreement with the other higher Rho materials. Product 1g had a 20% loss in surface area during the final thermal treatment step. This indicates that thinner shell materials (higher Rho) may have deviations from the model detailed above. These deviations are noted in the model of Figure 2 as the dotted trend line.

## EXAMPLE 2

Another method to modify the pore materials of porous media is hydrothermal treatment. By exposing porous materials to elevated temperatures and pH, a process of pore ripening can be utilized that results in a lowering of the SSA and increase in APD, as noted by Jiang (US 6,686,035; 7,223,473; 7,919,177) and Wyndham (WO 2008/103423). In this process the general approach of Example 1 was modified to include a hydrothermal treatment (20 hours) before the final thermal treatment, using the general method detailed by Jiang (US 6,686,035; 7,223,473; 7,919,177) and Wyndham (WO 2008/103423). See Scheme 2, Figure 28 for the process overview.

Table 2 contains relevant synthetic parameters and characterization data The precursor for Products 2a-2p was prepared using 11 nm silica nanoparticles. The precursors for Product 2q-2r were prepared using 20 nm silica nanoparticles. The Rho for these products were 0.70-0.73, except for Product 2n-2o (Rho = 0.86) and 2p (Rho = 0.93).Column Phase Ratio (β) was calculated using Equation l, The ratio of final to initial surface area (SSAfiSSAi) and pore diameter (APDf/APDi) was calculated for final products for Product 2a-2f, and after hydrothermal treatment for Products 2g-2m. Products 2a-2h, which employed mild hydrothermal conditions, had moderate increases in apparent nanoparticle size. More forcing conditions, such as higher temperatures (Products 2i, 2k-2p) and use of higher pH (Products 2.i-2r) showed larger decreases in SSA, increases in APD and increases in apparent silica nanoparticle size.

As noted in Example 1, for materials prepared with a single type of nanoparticle, one does not expected significant variation in porosity, surface are or pore diameter across the porous layer. While not limited by theory, this is understood that since a single sized nanoparticle was used the material before hydrothermal treatment is uniform from the core surface to the external surface of the material. The expected result of hydrothermal treatment is uniform increases in pore diameter and reduction in surface area.

Products 2a-2h had similar Rho and were prepared using a similar sized nanoparticles. Hydrothermal treatments were performed at the same temperature (100°C) using different pH conditions (pH 4-8). With increasing pH we observe general trends in the data; decrease in SSA (115-85 $m^2/g$), increase in APD (110-144 Å), decrease in $\beta$ (133-101 $m^2/cm^3$), decrease in *SSAf/SSAi* (0.84-0.50), increase in *APDf/APDi* (1.00-1.72.) and increase in apparent $dp_{nanoparticle}$ size (11-14 nm).

Product 2j-2m had similar Rho and were prepared using a similar sized nanoparticles. Hydrothermal treatments were performed at the same pH (0.3 M Tris, pH 9.8) using different temperature conditions (100-155°C). With increasing temperature we observe general trends in the data; decrease in SSA (70-34 $m^2/g$), increase in APD (108-334 Å), decrease in $\beta$ (110-43 $m^2/cm^3$), decrease in *SSAf/SSAi* (0.83-0.29), increase *APDf/APDi* (1.16-3.12) and increase in apparent $dp_{nanoparticle}$ size (17-36 nm). Similar trends with increasing temperature were also observed for Products 2f and 2i, as well as Products 2q and 2r.

Product 2n-2p were prepared using a similar sized nanoparticles. Hydrothermal treatments were performed at the same pH (0.2 M Tris, pH 80) and temperature conditions (160°C). For these products the Rho varied from 0.86-0.93. With increasing Rho we observe general trends in the data; decrease in SSA (15-7 $m^2/g$), decrease in SPV (0.12-0.04 $cm^3/g$) and decrease in $\beta$ (30-19 $m^2/cm^3$).

These differences observed are not only due to hydrothermal treatment, since higher Rho materials are expected to have lower SSA, SPV and $\beta$. As variation in Rho is not expected to have significant differences on APD, as noted in Example 1 and Fi[:,' 1Jre 2, deviations in this parameter for high Rho materials. To explore this further we need to review changes in SSA and APD relative to the precursor material. Since the nanoparticle size is the same for these products, and hydrothermal conditions were the same, we expect to have similar relative changes in *SSAf/SSAi* (0.24-0.25) and *APDf/APDi* (2.39-3.81). Products 2n-2p had good agreement in *SSAf/SSAi,* but deviations were observed for the thinnest shell, highest Rho material for *APDf/APDi.*

Products 2f and 2q were hydrothermal treated under the same conditions (0.2 M Tris, pH 8, 100°C). For these

products the Rho was similar but the nanoparticles used in the porous layer were 11 nm (Product 2f) and 20 nm (product 2q). With increasing nanoparticle size we observe general trends in the data; decrease in SSA (85-63 $m^2/g$), increase in APD (141-186 Å) and decrease in $\beta$ (102-78 $m^2/cm^3$). There is an increase in *SSAf*/*SSAi* (0.50-0.69) and a decrease in *APDf*/*APDi* (1.63-1.14) going from Product 2f and 2q. This is understood that using larger nanoparticles have lower nanoparticle surface area, and such materials change less during hydrothermal treatment under the same conditions.

The pore properties of Product 2r were compared with Product 1j. Both products used the same sized silica nanoparticles (20 nm) in the layering process, and had the same Rho (0.70). Product 1j did not have a hydrothermal treatment step, while Product 2r was hydrothermally treated at pH 8 and 160°C. Product 1j had higher SSA (73 $m^2/g$ vs. 43 $m^2/g$) and smaller APD (150 Å vs. 277 Å), and smaller apparent nanoparticle size (17 nm vs. 28 nm) than Product 2r. The differences in porosity can be confirmed by mercury porosimetry. The MPD (131 Å, 232 Å) is larger for Product 2r, while the MPV (0.28 $cm^3/g$, 0.29 $cm^3/g$) were similar for Products 1j and 2r (respectively, results shown in parenthesis).

The difference in pore properties between Product 1j and 2r can be visually observed in an HB/SEM image of the porous region, shown in Figure 9. These figures contain a normalized distance 0 $\rightarrow$ 1 of the porous layer along the radius of the particle - which if further detailed in Example 4. In this FIB/SEM comparison it can be clearly observed that Product 1j has is comprised of smaller nanoparticles (observed as lightened globular materials in the porous region defined in these images between 0 and 1), while the hydrothermally treated Product 2r is comprised of more interconnected, globular features. While we can still approximate the average nanoparticle size, this estimation does not fully describe the geometry of the interconnected porous layer. This image also shows improved interconnectivity between the porous layer in the nonporous core material (observed in the left side of these images) for the product having a hydrothermal treatment (Product 2r), which is expected to improve the mechanical and chemical properties of these materials. Both FIB/SEM show similar porosity (observed as the dark regions) from the core to the external surface (in the porous region defined in these images between 0 and 1). It is important to note that in the FIB/SEM analysis a surface coating needs to be applied, which is observed as the shaded material near the external surface of these images.

**TABLE 2**

| Product | Particle Size (um) | Condition | pH | Temp (°C) | SSA ($m^2/g$) | SPV ($cm^3/g$) | APD (Å) | $\beta$ ($m^2/cm^3$) | *SSAf/SSAi* | *APDf/APDi* | *Apparent* $dp_{nanoparticle}$ (nm) |
|---|---|---|---|---|---|---|---|---|---|---|---|
| 2a | 1.6 | 0.2 M Ammon. Acetate | 4.0 | 100 | 103 | 0.30 | 110 | 128 | 0.79 | 1.00 | 12 |
| 2b | 2.7 | 0.2 M Ammon. Acetate | 4.0 | 100 | 115 | 0.34 | 106 | 133 | 0.84 | 1.02 | 11 |
| 2c | 1.6 | 0.2 M Ammon. Acetate | 5.5 | 100 | 100 | 0.32 | 115 | 119 | 0.60 | 1.33 | 12 |
| 2d | 1.6 | 0.2 M Ammon. Acetate | 5.3 | 100 | 103 | 0.32 | 112 | 123 | 0.64 | 1.28 | 12 |

| | | | | | | | | | | | |
|---|---|---|---|---|---|---|---|---|---|---|---|
| 2e | 2.7 | 0.2 M Ammon. Acetate | 5.8 | 100 | 96 | 0.33 | 127 | 113 | 0.58 | 1.44 | 13 |
| 2f | 2.7 | 0.2 M TRIS | 8.0 | 100 | 85 | 0.32 | 141 | 102 | 0.50 | 1.63 | 14 |
| 2g | 2.7 | 0.2M Ammon. Acetate | 6.0 | 100 | 91 | 0.33 | 134 | 108 | 0.59 | 1.60 | 13 |
| 2h | 2.7 | 0.2M Ammon. Acetate | 6.5 | 100 | 85 | 0.32 | 144 | 101 | 0.55 | 1.72 | 14 |
| 2i | 2.7 | 0.2 M TRIS | 8.0 | 127 | 57 | 0.31 | 215 | 69 | 0.37 | 2.57 | 21 |
| 2j | 1.6 | 0.3 M TRIS | 9.8 | 100 | 70 | 0.2 | 108 | 110 | 0.83 | 1.16 | 17 |
| 2k | 2.7 | 0.3 M TRIS | 9.8 | 125 | 58 | 0.32 | 206 | 69 | 0.49 | 1.93 | 21 |
| 2l | 2.7 | 0.3 M | 9.8 | 140 | 43 | 0.31 | 278 | 52 | 0.36 | 2.60 | 28 |

| | | | | | | | | | | | |
|---|---|---|---|---|---|---|---|---|---|---|---|
| | | TRIS | | | | | | | | | |
| 2m | 2.7 | 0.3 M TRIS | 9.8 | 155 | 34 | 0.29 | 334 | 43 | 0.29 | 3.12 | 36 |
| 2n | 3.4 | 0.2 M TRIS | 8.0 | 160 | 15 | 0.12 | 346 | 30 | 0.25 | 3.81 | 35 |
| 2o | 2.3 | 0.2 M TRIS | 8.0 | 160 | 13 | 0.11 | 351 | 27 | 0.24 | 3.70 | 40 |
| 2p | 1.7 | 0.2 M TRIS | 8.0 | 160 | 7 | 0.04 | 232 | 19 | 0.25 | 2.39 | 31 |
| 2q | 1.8 | 0.2 M TRIS | 8.0 | 100 | 63 | 0.30 | 186 | 78 | 0.69 | 1.14 | 19 |
| 2r | 1.8 | 0.2 M TRIS | 8.0 | 160 | 43 | 0.27 | 277 | 57 | 0.47 | 1.70 | 28 |

**EXAMPLE 3**

The process of Example 1 was modified to use more than one type of silica nanoparticle in the formation of the porous layer (Scheme 3, Figure 28). In this process different sizes of nanoparticles were used for different steps in the layer-by-layer process of alternating additions of polyelectrolyte and nanoparticles. Table 3 contains relevant synthetic

parameters and characterization data. The median mesopore diameter (MPD) and mesopore pore volume (MPV) were measured by mercury porosimetry. Silica core diameters were determined by Coulter Counter, number mode. The nominal silica nanoparticle size was determined by Zetasizer, SEM was used to estimate nanoparticle size for ≥20 nm silica nanoparticles. Rho was determined from SEM data, except for Product 5d, which was estimated using Coulter Counter data.

An average nanoparticle size was determined for these reactions by averaging the nanoparticle size used across the multilayer process. For final products an apparent silica nanoparticle size was determined using Equations 2-4. Similar to Example 1, there is good agreement between the apparent and average nanoparticle size. However, this does not indicate that nanoparticles are distributed homogeneously in the porous layer.

Comparing the experiments 3a-3c one can see the geometric impact of layering nanoparticles of different sizes, showing the impact of increasing pore diameter from core surface to the surface of the material. Product 3a had four layers of 11 nm nanoparticles followed by two layers of 20 nm nanoparticles - resulting in a final product with a SSA of 76 $m^2/g$ and an APD of 131 Å. Product 3b differs in a third layer that was a single addition of 99 nm nanoparticles. The final resulting product with this additional layer of 99 nm nanoparticles had a SSA of 69 $m^2/g$ and an APD of 150 Å. While this amounts to less than a 10 $m^2/g$ difference in SSA, the pore diameter has increased by 29 Å - due the presence of the larger nanoparticles on the outside layer.

Product 3c is similar to products 3a in the first six layers, but has one additional external layer of 46 nm silica nanoparticles. The final resulting product with this additional layer of 46 nm nanoparticles had a SSA of 77 $m^2/g$ and an APD of 144 Å. While this amounts to no measurable change in SSA with product 5a, the pore diameter has increased by 13 Å - due the presence of the larger nanoparticles on the outside layer.

Furthermore one can compare products 3b and 3c that have the same layering process for the first six layers, and differ in silica nanoparticle size for the final external layer. Product 3b, having larger, 99 nm nanoparticles on the outer surface has lower SSA and higher APD, when compared to Product 3c, which has smaller 46 nm nanoparticles on the outer surface. One skilled in the art will conclude from this experiment that the outer surface of these materials has a larger pore diameter and reduced surface area.

Product 3f has larger nanoparticles on the first four layers, and a smaller nanoparticles on the outer layers. It is expected that such materials would have decreasing pore diameter from the core to the surface layer.

The differences in pore diameter can be further understood by looking at the nitrogen sorption pore diameter profiles (desorption, dV/dLog(D)) for Product 3a (Figure 10), Product 3c (Figure 11), Product 3e (Figure 12), Product 3f (Figure 14).

The pore diameter distribution of Product 3a, which comprised of 4 layers of 11 nm nanoparticles followed by 2 layers of 20 nm nanoparticles, has a shoulder towards the larger pore diameters which are situated on the outside of the porous shell. In contrast Product 3f, which was comprised of 4 layers of 20 nm nanoparticles followed by 2 layers of smaller 11 nm nanoparticles, has a shoulder in the pore diameter distribution toward smaller pores - which are situated on the outer side of the porous layer. When compared to the pore diameter distribution of Product 1j (Figure 14), which was comprised of six layers of 20 nm nanoparticles, a more uniform pore diameter distribution is observed - without any significant shouldering.

The pore diameter distribution of Product 3c and 3a also show geometric differences in porosity. As detailed above, the pore diameter distribution of Product 3a has a shoulder to the larger pore diameters. Product 3c was also formed with 4 layers of 11 nm nanoparticles followed by 2 layers of 20 nm nanoparticles, but followed this with a layer of 46 nm nanoparticles. The pore diameter distribution of Product 3c is significantly split with a mode pore diameter mode that is similar to product 3a, and a lesser mode at higher pore diameter. This is understood that pore diameters are increasing from the surface of the core material to the external surface as the layers progress from 11nm, 20nm and 46 nm nanoparticles.

The changes in porosity can also be observed in the FIB/SEM of Product 3e (Figure 13) and 3f (Figure 15). Produce 3e shows evidence of smaller nanoparticles close to the surface of the core material, and Product 3f shows evidence of smaller nanoparticles close to the external surface of the particle.

**TABLE 3**

| Product | Silica Core num, mode $dp_{core}$ (µm) | Layer Process #1 $dp_{nanoparticle}$ (nm)/ layers | Layer Process #2 $dp_{nanoparticle}$ (nm)/ layers | Layer Process #3 $dp_{nanoparticle}$ (nm)/ layers | Average $dp_{nanoparticle}$ (nm) | Rho | SSA ($m^2/g$) | SPV ($cm^3/g$) | APD (Å) | MPV ($cm^3/g$) | MPD (Å) | $\beta$ ($m^2/cm^3$) | *Apparent* $dp_{nanoparticle}$ (nm) |
|---|---|---|---|---|---|---|---|---|---|---|---|---|---|
| 3a | 1.22 | 11/4 | 20/2 | *na* | 14 | 0.74 | 76 | 0.25 | 131 | 0.23 | 106 | 106 | 14 |
| 3b | 1.22 | 11/4 | 20/2 | 99/1 | 26 | 0.63 | 69 | 0.26 | 150 | 0.24 | 123 | 94 | 22 |
| 3c | 1.22 | 11/4 | 20/2 | 46/1 | 19 | 0.64 | 77 | 0.28 | 144 | 0.25 | 127 | 100 | 19 |
| 3d | 1.22 | 11/2 | 46/4 | *na* | 34 | 0.67 | 46 | 0.22 | 217 | 0.20 | 208 | 69 | 30 |
| 3e | 1.22 | 11/2 | 20/4 | *na* | 17 | 0.71 | 73 | 0.28 | 150 | 0.24 | 127 | 95 | 16 |
| 3f | 1.22 | 20/4 | 11/2 | *na* | 17 | 0.67 | 80 | 0.27 | 132 | 0.25 | 113 | 106 | 17 |
| 3g | 1.50 | 22/1 | 69/3 | *na* | 57 | 0.90 | 9 | 0.07 | 343 | 0.12 | 822 | 21 | 39 |

**EXAMPLE 4**

We can apply the physical property distribution approach to estimate pore properties for selected products from

Example 1 and 3. This model includes the impacts of each layering step, and is based on Equations 2-4. Using particle size data from SEM, the growth at each layer can be estimated. Using an assumption of constant porosity within the porous layer, difference in surface area and pore diameter distributions can be plotted from the surface of the core (normalized distance 0) to the external surface of the material (normalized distance 1). Figure 16 shows the model for Product 3a. Figure 17 shows the model for Product 3e. For simplicity we removed the distance from center (c) to the core surface (0) and we did not include deviations in surface area or pore diameter in the region near the core surface. By considering the profile from 0 → 1 we are better able to later adopt this model to nonspherical cores. For nonspherical cores, the core surface (0) and material surface (1) are defined the same, a selected physical property distribution along the radius of the particle is orthogonal (90°) to the core surface.

In this model, the averaged apparent nanoparticle size from Example 1 and 3 were used. For example, non.-hydrothermally treated products prepared using 11 nm and 20 nm silica nanoparticles had average apparent nanoparticle size of 11.4 nm and 17.7 nm, respectively.

**EXAMPLE 5**

Additional materials are prepared using the process detailed in Example 3, Product 5a is a superficially porous particle based on a 2 μm nonporous silica core that uses one layer each of 11 nm, 20 nm, 35 nm and 75 nm silica nanoparticles, in that specific order. Product 5b is a superficially porous particle based on a 2 μm nonporous silica core that uses one layer each of 75 nm, 35 nm, 20 nm and 11 nm silica nanoparticles, in that specific order. Product 5c is a superficially porous particle based on a 2 μm nonporous silica core that uses three layers of 11 nm silica nanoparticles, followed by three layers of 20 nm silica nanoparticles, followed by three layers of 11 nm silica nanoparticles, in that order. The Rho for Products 5a-5c is 0.73. Results are modeled using the process detailed in Example 4, and are shown in Figure 18 and 19. For simplicity we removed the distance from center (c) to the core surface (0) from the x-axis, and we did not include deviations in surface area or pore diameter in the region near the core surface.

**EXAMPLE 6**

The approach detailed in Example 3-5 is used to create new porous materials having geometrically defined surface area and pore diameter, through judiceous selection of silica nanoparticles. In the instance where no nonporous core is used, a fully porous (*e.g.*, Rho = 0) materials can be achieved. Using this approach a variety of materials having a Rho between 0.0 and 0.95 can be prepared. Selected estimated pore diameters are illustrated in Figure 20. Such materials have uses in chromatographic separations (e.g., biomolecule separation, SEC, GPC) as well as uses in catalytic support, polymer additives, fuel cells, luminescence, selective membranes, optics, opltoelectronics, electronics, energy storage, sensors, and drug delivery.

**EXAMPLE 7**

Selected processes from Example 3 were modified to include a hydrothermal treatment (0.2 M TRIS, pH 8, 20 h) before the higher temperature thermal treatment using the general hydrothermal treatment process detailed in Example 2. Table 4 contains relevant synthetic parameters and characterization data. Column Phase Ratio ($\beta$) was calculated using Equation 1. The ratio of final to initial surface area (*SSAf*/*SSAi)* and pore diameter (*APDf*/*APDi*) was calculated for final products as compared to the corresponding products from Example 3 that did not have this additional hydrothermal treatment step.

While not limited by theory, it was expected that the nanoparticles comprising the differing layers would all be modified by hydrothermal treatment in a similar manner as the products containing just a single nanoparticle size did when treated under similar conditions in Example 2. The model detailed in Examples 3-4 could then be modified with these expected changes upon hydrothermal treatment to better predict the expected pore properties of these hydrothermally treated multilayered products. For example, Product 2f was prepared using 11 nm silica nanoparticles, and was hydrothermally processed at 100°C. The resulting product had a *SSAf*/*SSAi* of 0.50 and a *APDjlAPDi* of 1.63. The apparent nanoparticle size was 14 nm. Product 2q was prepared using 20 nm silica nanoparticles, and was hydrothermally processed at 100°C. The resulting product had a *SSAf*/*SSAi* of 0.69 and a *APDf*/*APDi* of 1.14. The apparent nanoparticle size was 19 nm. The increase in apparent nanoparticle size from 11.4 to 14 nm and 17nm to 19 nm fits within expectations for hydrothermal treatments performed under these conditions. The model detailed in Examples 3-4 was modified with these pore property changes to better estimate the surface properties of products of Product 7a, 7c, 7e and 7f. Products 7a, 7c,7e, and 7g were all hydrothermally treated under similar conditions (100°C), and all resulted in similar ranges of SSA (60-65 $m^2/g$), APD (167-185 Å), $\beta$ (76-84 $m^2/cm^3$), *SSAf*/*SSAi* (0.78-0.82), and *APDf*/*APDi* (1.21-1.37). However, the apparent silica nanoparticle sizes for these products varied between 17-31.

In a similar manner it was expected that the model detailed in Examples 3-4 could be modified for materials

hydrothermally treated at 160°C, based on results from Example 2. Products 2n-p were prepared using 11 nm silica nanoparticles, and was hydrothermally processed at 160°C. The resulting product had a *SSAf/SSAi* of 0.24-0.225 and a *APDf/APDi* of 3.70-3.80. The apparent nanoparticle size was 35-40 nm. Product 2r was prepared using 20 nm silica nanoparticles, and was hydrothermally processed at 160°C. The resulting product had a *SSAf/SSAi* of 0.47 and a *APDf/APDi* of 1.70. The apparent nanoparticle size was 28 nm. While the larger increase in apparent nanoparticle size from 11.4 to 37 nm and 17.7 nm to 28 nm is expected for a higher temperature hydrothermal treatment, the larger increase for the smaller initial apparent nanoparticle size was not expected under these conditions. The model detailed in Examples 3-4 was modified with these pore property changes to better predict the surface properties of products of Product 7b, 7d, 7f. Products 7b, 7d,7f, and 7h were all hydrothermally treated under similar conditions (160°C), and all resulted in similar ranges of SSA (34-38 $m^2$/g), APD (259-315 Å), $\beta$ (47-54 $m^2/cm^3$) *SSAf/SSAi* (0.44-0.52), and *APDf/APDi* (1.92-2.40). However, the apparent silica nanoparticle sizes for these products varied between 21-43.

The modified model detailed in Example 3-4 for estimating APD provides good agreement (5-11% error) with the actual data for non-hydrothermally treated Products 1g, 1j, 3a (Figure 16), 3f and 3e (Figure 17). This model also provides good agreement (5-10% error) with hydrothermally treated Products 2q, 2r, 7a, 7e (Figure 21) and 7f (Figure 22). However, it did not provide acceptable agreement with hydrothermally treated Products 7b, 7g. 7h (15-18% error). Interestingly, further modification of the model to consider one less external porous layer resulted in improved agreement for Products 3f (2% error), Products 7g-h (8% error) and Product 7b (11% error). The calculated error in this model for Product 7b (4% error) and Product 7f (Figure 23, 5% error) was further reduced with the consideration that upon hydrothermal treatment the resulting products from the 11 nm nanoparticles did not contribute to APD. This assessment for Product 7f (Figure 22) is in better agreement with the FIB/SEM data described below than the original model (Figure 22).

The similarities in pore properties for materials hydrothermally treated under similar conditions does not indicate that these materials have a uniform porosity from the surface of the core material to the external surface of the particle. Since these materials were layered under similar conditions as materials from Example 3 (as indicated in Table 4), we expect that these product have variation in pore diameter and surface area profiles from the surface of the core material (normalized distance 0) to the external surface of the particle (normalized distance 1).

A better understanding of the differences in pore properties can be achieved by examining nitrogen sorption pore diameter profiles (desorption, dV/dLog(D)) for Products 7a and 7b (Figure 10); Products 7c and 7d (Figure 11); and Products 7e and 7f (Figure 12).

The pore diameter distributions of Products 7a and 7b can be directly compared with Product 3a (no hydrothermal treatment), as these materials had the same layering profiles. As noted above, Product 3a displays a primary mode pore diameter greater than 100 Å, and a shoulder towards larger pore diameters (<200 Å) on the outer porous layer. Hydrothermal treatment at 100°C resulted in a more uniform pore diameter distribution with a mode pore diameter around 200 Å, however hydrothermal treatment at 160°C gave rise to a shoulder distribution greater than 200 Å and a primary mode pore diameter between 400-500 Å.

In a similar manner the pore diameter distributions of Products 7c and 7d can be directly compared with Product 3c (no hydrothermal treatment), as these materials had the same layering profiles. As noted above, Product 3c displays a primary mode at lower pore diameters (greater than 100 Å), and secondary mode at higher pore diameter (around 200 Å). Upon Hydrothermal treatment at 100°C the resulting pore diameter distribution is more uniform, having a single mode pore diameter around 200 Å. However. hydrothermal treatment at 160°C gave rise to a secondary mode (greater than 200 Å) and a primary mode between 400-500 Å.

In a similar manner the pore diameter distributions of Products 7e and 7f can be directly compared with Product 3e (no hydrothermal treatment), as these materials had the same layering profiles. Product 3e, which was prepared with two layers of 11 nm nanoparticles followed by four layers of 20 nm nanoparticles, displays a single mode pore diameter below 200 Å. Upon Hydrothermal treatment at 100°C the resulting pore diameter distribution is still single modal but now around 200 Å. However, hydrothermal treatment at 160°C gave rise to a bimodal pore diameter distribution with a secondary mode around 200 Å and a primary mode greater than 300 Å.

In a similar manner the pore diameter distributions of Products 7g and 7h can be directly compared with Product 3f (no hydrothermal treatment), as these materials had the same layering profiles. Product 3f, which was prepared with four layers of 20 nm nanoparticles followed by two layers of 11 nm nanoparticles, displays a shoulder pore diameter distribution greater than 100 Å and a mode pore diameter below 200 Å. Upon hydrothermal treatment at 100°C the resulting pore diameter distribution is still single modal but now around less than 200 Å. Hydrothermal treatment at 160°C gave rise to a single-modal pore diameter distribution with a pore diameter mode less than or equal to 300 Å.

To better understand the geometric impact of hydrothermal processing, FIB/SEM were performed on Products 7f (Figure 13), Product 7g and 7h (Figure 15), with relevant FIB/SEM comparison to similar layering products formed without hydrothermal treatment (Products 3e and Product 3f).

As noted above the pore diameter distributions of a non-hydrothermally treated product formed by two layers of smaller nanoparticles followed by four layers of larger nanoparticles (Product 3e), has a FIB/SEM showing evidence of smaller nanoparticles close to the surface of the core material. A similarly layered product with a 160°C hydrothermal

treatment has a very different FIB/SEM. The FIB/SEM of product 7f displays an eroded gap between the surface of the core particle and the porous layer. This observed vacancy comprises the space formally filled with the two layers of 11 nm silica nanoparticles. While not limited by theory, it is apparent that the 11 nm silica nanoparticles dissolved preferentially over the larger silica nanoparticles - resulting in the formation of this vacancy section. This vacancy can be observed in the pore diameter distributions with the primary mode distribution of Product 7f greater than 300 Å. The observed secondary mode of Product 7f that is lower than 300 Å is similar in to the primary mode observed for other products that were hydrothermally treated at 160°C and were formed using 20 nm silica nanoparticles as the predominant layering material (e.g., Product 7h). This complete erosion of 11 nm silica nanoparticle was not observed in other Products that were formed using only this type of material (e.g., Products 2n-2p).

In a similar manner the pore diameter distributions of a non-hydrothermally treated product formed by four layers of larger nanoparticles followed by two layers of smaller nanoparticles (Product 3f), has a FIB/SEM showing evidence of smaller nanoparticles close to the external surface. A similarly layered product with a 100°C and 160°C hydrothermal treatments have different FIB/SEM. After 100°C hydrothermal treatments there are observed changes in the outer porous layer near the external surface, having a reduction in the observation of smaller silica nanoparticles. After a 160°C hydrothermal treatment the changes in the appearance of the porous layer by FIB/SEM between Product 7h and 3f is more transformational. The porous layer of Product 7h is a more open and is similar to the porous layer observed for Product 7f. However unlike product 7f there is excellent attachment of the porous layer with the core particle. This difference in core attachment between Product 7f and 7h is due to having no dissolution of smaller nanoparticles at the interface between the core an porous layer, as well as the fact that the conditions used for the 160°C hydrothermal treatment allow for excellent attachment between the core and porous layer.

The proposed model fitting pore properties provides good agreement with non-hydrothermally treated and some 100°C hydrothermally treatment materials comprised of different layered materials. However, several hydrothermally treated materials at 160°C did not follow the traditional model as well. Closer examination of pore diameter distributions and FIB/SEM allowed for a better understanding that smaller nanoparticles (e.g., 11 nm silica) may be preferentially react over the larger nanoparticles under these conditions resulting in overly erode and open sections from the surface of the core particle to the external surface of the particle. This is especially true for products that were prepared by layering 11 nm and larger nanoparticles, wherein the smaller nanoparticle are used in less than about 33% of the layers. While unexpected, we can use this preferential reaction to create new pore geometries that have chromatographic advantages for specific applications.

TABLE 4

| Product | Layering Process Same as Example | Temp (°C) | SSA ($m^2/g$) | SPV ($cm^3/g$) | APD (Å) | MPV ($cm^3/g$) | MPD (Å) | $\beta$ ($m^2/cm^3$) | *SSAf/SSAi* | *APDf/APDi* | *Apparent* $dp_{nanoparticle}$ (nm) |
|---|---|---|---|---|---|---|---|---|---|---|---|
| 7a | 3a | 100 | 60 | 0.27 | 180 | 0.25 | 137 | 80 | 0.79 | 1.37 | 17 |
| 7b | 3a | 160 | 34 | 0.25 | 315 | 0.26 | 278 | 47 | 0.45 | 2.40 | 25 |
| 7c | 3c | 100 | 60 | 0.29 | 185 | -- | -- | 76 | 0.78 | 1.28 | 20 |
| 7d | 3c | 160 | 34 | 0.25 | 313 | -- | -- | 47 | 0.44 | 2.17 | 21 |
| 7e | 3e | 100 | 60 | 0.28 | 181 | -- | -- | 78 | 0.82 | 1.21 | 31 |
| 7f | 3e | 160 | 38 | 0.26 | 288 | 0.27 | 248 | 52 | 0.52 | 1.92 | 43 |
| 7g | 3f | 100 | 65 | 0.28 | 167 | 0.27 | 135 | 84 | 0.81 | 1.27 | 31 |
| 7h | 3f | 160 | 36 | 0.22 | 259 | 0.23 | 213 | 54 | 0.45 | 1.96 | 37 |

## EXAMPLE 8

The process of Examples 1-7 is modified to introduce a mixture of nanoparticles within a given layer, based upon a 1.22 μm silica nonporous silica core particle. For example a mixture of 11 and 20 nm silica nanoparticles (denoted 11-20 followed by the weight percentage of 11nm nanoparticles). For selected materials a hydrothermal treatment (0.2 M TRIS, pH 8, 20 h) is used to modify pore structure. Table 4 contains relevant synthetic parameters.

**TABLE** 5

| Product | Layer Process #1 dpnanoparticle (nm)/ layers | Layer Process #2 dpnanoparticle (nm)/ layers | Hydrothermal Treatment (Y/N) | Temp (°C) |
|---|---|---|---|---|
| 8a | 20/4 | 11-20 (20%)/2 | N | na |
| 8b | 20/4 | 11-20 (20%)/2 | Y | 100 |
| 8c | 20/4 | 11-20 (20%)/2 | Y | 160 |
| 8d | 20/4 | 11-20 (50%)/2 | N | na |
| 8e | 20/4 | 11-20 (50%)/2 | Y | 100 |
| 8f | 20/4 | 11-20 (50%)/2 | Y | 160 |
| 8g | 20/4 | 11-20 (70%)/2 | N | na |
| 8h | 20/4 | 11-20 (70%)/2 | Y | 100 |
| 8i | 20/4 | 11-20 (70%)/2 | Y | 160 |
| 8j | 11-20 (20%)/2 | na | N | na |
| 8k | 11-20 (20%)/2 | na | Y | 100 |
| 81 | 11-20 (20%)/2 | na | Y | 160 |
| 8m | 11-20 (50%)/2 | na | N | na |
| 8n | 11-20 (50%)/2 | na | Y | 100 |
| 80 | 11-20 (50%)/2 | na | Y | 160 |
| 8p | 11-20 (70%)/2 | na | N | na |
| 8q | 11-20 (70%)/2 | na | Y | 100 |
| 8r | 11-20 (70%)/2 | na | Y | 160 |
| 8s | 11-20 (20%)/2 | 20/4 | N | na |
| 8t | 11-20 (20%)/2 | 20/4 | Y | 100 |
| 8u | 11-20 (20%)/2 | 20/4 | Y | 160 |
| 8v | 11-20 (50%)/2 | 20/4 | N | na |
| 8w | 11-20 (50%)/2 | 20/4 | Y | 100 |
| 8x | 11-20 (50%)/2 | 20/4 | Y | 160 |
| 8y | 11-20 (70%)/2 | 20/4 | N | na |
| 8z | 11-20 (70%)/2 | 20/4 | Y | 100 |
| 8aa | 11-20 (70%)/2 | 20/4 | Y | 160 |
| 8ab | 11-20 (20%)/4 | 20/2 | N | na |
| 8ac | 11-20 (20%)/4 | 20/2 | Y | 100 |
| 8ad | 11-20 (20%)/4 | 20/2 | Y | 160 |
| 8ae | 11-20 (50%)/4 | 20/2 | N | na |
| 8af | 11-20 (50%)/4 | 20/2 | Y | 100 |
| 8ag | 11-20 (50%)/4 | 20/2 | y | 160 |
| 8ah | 11-20 (70%)/4 | 20/2 | N | na |
| 8ai | 11-20 (70%)/4 | 20/2 | Y | 100 |
| 8aj | 11-20 (70%)/4 | 20/2 | Y | 160 |

**EXAMPLE 9**

A series of proteins with approximate size and molecular weight are shown in Table 6. from references **a** (J. Tencer, Kidney International, 1998, 53, 709), reference!! (U. Lund, Am. J. Physiol. Renal Physiol., 2003, 284, F1226), and reference **c** (E. M. Renkin, J.Gen.Physio., 1954, 38, 225), along with ranges of Pore Diameters of a porous material used in a separation device for these analytes. The recommended pore diameter for a porous material used in the chromatographic analysis of molecules that are less than about 5 KDa has been reported to be 60-120 Å, 5-50KDa has been reported to be 200-300 Å, and much larger pore diameters (1,000-4,000 Å) are required for larger vaccines or proteins (www.chem.agilent.com, Agilent Document 5990-9028EN). It is not clear how these recommended pore diameters were determined; as such there could be error in these recommendations. However there is a general understanding that while chromatographic analysis of a 5 KDa biomolecule on a L000-4,000 Å pore diameter material is possible, it will be greatly limited in phase ratio. retention, and capacity. In contrast, a chromatographic analysis of a large protein *(e.g.,* 970 KDa) on a 60 Å pore diameter material will not be successful, as the protein will be excluded from the pore structure of the separation material. Therefore there is an optimal range of pore structures for each biomolecule.

Another approach to determine optimal material pore diameter for a given molecule is to determine the exclusion limit. For example the exclusion limit in aqueous SEC for a 125 Å pore diameter material was 80 KDa, a 200 Å pore diameter material was 450 KDa, and a 200 Å pore diameter material was 1,500 KDa material (www.waters.com, Waters document 72000338EN, Rev. E, **2015)**

**TABLE 6**

| **Analyte** | **Molecular Weight** (KDa) | **Approximate Size** (Å) | **DMPD** (Å) |
|---|---|---|---|
| β2-microglobulin | 14 | 15[a] | 60-140 |
| orosomucoid | 42 | 28[a] | 120-260 |
| albumin | 66.4 | 36[a] | 150-330 |
| igG2a | 146 | 55[a] | 220-500 |
| a2-macroglobulin | 725 | 90[a] | 360-810 |
| Myoglobin | 19.6 | 19[b] | 80-180 |
| k-Dimer | 44 | 28[b] | 120-260 |
| Horseradish peroxidase | 49.9 | 31[b] | 130-280 |
| Neutral human serum albumin | 70 | 35[b] | 140-320 |
| Native human serum albumin | 69 | 36[b] | 150-330 |
| Urea | 0.06 | 2.7[c] | 20-30 |
| Glucose | 0.18 | 3.6[c] | 20-40 |
| Antipyrine | 0.19 | 4.0[c] | 20-40 |
| Sucrose | 0.34 | 4.4[c] | 20-40 |
| Maltose | 0.34 | 4.4[c] | 20-40 |
| Raffinose | 0.59 | 5.6[c] | 30-50 |
| Hemoglobin | 67 | 30[c] | 120-270 |

In order to obtain a better understanding of pore diameter requirements for a porous material used in the chromatographic analysis of biomolecules of different molecular weights and sizes, various models can be used. Reported models of protein sizes (D. Venturoli, Am. J. Physiol. Renal Physiol., 2005,288, F605) were used to fit the data in Table 6, as shown in Figure 24. Protein Size Model 2, which is based on based on globular protein model proposed by Rippe (Kidney Int. 1989, 35, 1234), has the best agreement with these results. The hard sphere Model 1, an alternative of the globular Model 3, and an equivalent sized polydisperse- dextran Model 4 do not provide adequate agreement with the reported biomolecule values. However, Model 4 is a good model to approximate the size of other polymers.

Using Model 2 in Figure 24, one can estimate sizes for different molecular weight proteins. For example, a 5 KDa protein is estimated to be 13 Å and a 6-50 KDa protein is estimated to be between 14-32 Å. Comparing the pore size for a porous material used in the chromatographic analysis of 5 KDa molecules (6-120 Å) to the estimated molecular size using Model 2, there is a 5-9 fold increase in recommended material pore size over the analyte size. Comparing the desirable

pore size for a porous material used in the chromatographic analysis of 50 KDa molecules (200-300 Å) to the estimated molecular size using Model 2, there is a 6- 10 fold increase in the recommended material pore size. The exclusion limit approach, noted above, there is a 3-4 fold increase in material pore size over the estimated analyte size, using Model 2. Another reference advises a 7-20 fold increase in material pore size over the analyte size (www.sge.com, SGE document TA-0136-H), based on an ultrafiltration sieving report (E. M. Renkin, J.Gen.Physio., 1954, 38, 225). Going forward we define Desirable Material Pore Diameter (DMPD) as a range in pore diameters that is 4-9 fold greater than the analyte size, having the lower level of this range estimating a potential exclusion limit for a given biomolecule (>10 KDa). DMPD for a given analyte is calculated as a 4-9 fold increase over the estimated analyte size, rounded to the nearest ten Angstroms, as tabulated in Table 6.

In a similar manner one can estimate sizes for other biomolecules, such as a Fab (55 KDa, 33 Å, 130-300 Å), Fab2 (bispecific, 110 KDa, 43 Å, 170-390 Å), Fab3 (trispecific, 165 KDa. 50 Å, 200-450 Å), Minibody (bivalent, 75 kDa, 37 Å, 150-340 Å), Tetrabody (tetravalent, 100 kDa, 41 Å, 170-370 Å), Triabody (trivalent, 75 kDa, 37 Å, 150-340 Å), Diabody (bispecific, 50 kDa, 31 Å, 130-290 Å), IgG1 (146 KDa, 48 Å, 170.-440 Å), IgG2 (146 KDa, 48 Å, 200-440 Å), IgG-3 (170 KDa, 50 A, 200-460 Å), IgG4 (146 KDa, 48A, 200-440 Å), IgM (970 KDa, 99 Å, 400-900 A), IgA1 (160 KDa, 49 Å, 200-450 Å), IgA2 (160 KDa, 49 Å, 200-450 A), sIgA (385 KDa, 69 Å, 280-621 Å), IgD (184 KDa, 52 Å, 210-470 A), and IgE (188 KDa, 52 Å, 210-470 Å), having different approximate molecular weights are estimated to have different approximate sizes, and DMPD, as indicated in parenthesis (approximate molecular weight, estimated molecular size, desirable material pore diameter range).

The approach of selecting the DMPD is used to modify Examples 1-7 by selected appropriate nanoparticle size(s) for chromatographic separations of specific biomolecule(s).

**EXAMPLE 10**

The approach of Example 3-9 is modified to DMPD for use in more than one molecule or biomolecule by using more than one type of silica nanoparticles in the formation of the porous layer, as shown in Scheme 5, Figure 28.

**EXAMPLE 11**

The approach of Examples 3, 7-10 is modified to DMPD for use in more than one molecule or biomolecule by using more than one type of silica nanoparticles in the formation of the porous layer, as shown in Scheme 6, figure 28. This process utilizes a hydrothermal processing step to modify the pore properties.

**EXAMPLE 12**

The approach of Example 3-11 is modified to DMPD for use in more than one molecule or biomolecule by using more than one type of silica nanoparticles in the formation of the porous layer. In this approach a dual-porosity zone material (superficially porous or fully porous) is prepared, as shown in Figure 25, with or without the use of a hydrothermal processing step. The inner porosity zone is prepared to have a thicker porous layer of a smaller pore diameter, and higher surface area. The outer porosity zone is prepared to have a thinner porous layer of higher pore diameter. The pore diameters are chosen by the approach detailed in Example 8 to greatly exclude larger analytes from the inner porosity zone. This has a thin, high pore diameter porous layer - which is similar to high Rho materials for larger proteins. The inner porosity zone is designed to have a thicker layer, allowing for higher retentivity and capacity for smaller molecules. As such this dual porosity material can be considered to have dual column phase ratio. The column phase ratio for smaller molecules, which can diffuse through both porosities zones, is based on the produce SSA and SPV. The column phase ratio for larger molecules that are excluded from the inner porosity zone needs to be estimated for the SSA and SPV of the outer porosity zone. Such estimations can be made using the approach detailed in Examples 1-7.

**EXAMPLE 13**

The approach of Example 12 is modified to produce a dual-porosity zone material, as detailed in Table 7, each approach applicable to fully porous (e.g., Rho= 0) and superficially porous material (e.g., Rho between 0.1-0.99), with or without the use of a hydrothermal processing step. Differentiation is shown along the porous layer distance (0→1) shown in Figure 22. In this table I = inner zone: O = outer zone.

**TABLE 7**

| Product | Pore Diameter (PD) Zone Differentiation (0→1) | Thickness Zone Differentiation (0→1) |
|---|---|---|
| 10 | I < 0 | I ≥ O |

(continued)

| Product | Pore Diameter (PD) Zone Differentiation (0→1) | Thickness Zone Differentiation (0→1) |
|---|---|---|
| 13a | I < O | I < O |
| 13b | I > O | I ≥ O |
| 103 | I > O | I < O |

**EXAMPLE 14**

The approach of Example 11-13 is modified to produce a tri-porosity zone material, each approach applicable to fully porous (*e.g.,* Rho= 0) and superficially porous material (*e.g.,* Rho between 0.1-0.99). Differentiation is shown along the porous layer distance (0→1) in pore diameters and zone thickness are possible. Material prepared by this approach have improved range of included analytes. and reduce sharp changes in chromatographic separation of complex mixtures (*e.g.*, peptides, proteins, RNA's, DNA's) for analytes that are partially or fully excluded from a specific pore diameter zone.

**EXAMPLE 15**

The approach in Example 1-14 is modified to include a hydrothermal treatment using the method of Wyndham (WO 2010/141426), Example 44-45 of Wyndham (US 20130112605, US 20130206665), or alternative modifications such as pore restructuring and pseudomorphic transformation can be performed (Wyndham, US 8,658,277).

**EXAMPLE 16**

The process of Example 1-15 is modified to replace the nonporous silica core material with an alternative core material composition. The alternative core material can be a monolith or particulate.

When the alternative core is a monolith it can be prepared by modification of processes detailed by Walter (US 7,250,214; US 8,404,346), Wyndham (US 2012055860), Jiang (US 8,791,220), Wyndham (US 8,697,765), Wyndham (US 8,658,277), Jung (US 8,680,311), Nakanishi (US 5,624.875), Nakanishi (US 6,207,098) or Guiochon (*J. Chromatogr. A,* **2007,** 1168, 101). Hybrid monoliths can have a chromatographically-enhancing or non-chromatographically-enhancing pore geometry, can have ordered or disordered pore structure, can have ordered or disordered macropores, can have crystalline or amorphous molecular ordering, can have variety of nonporous, microporous, mesoporous or macroporous pores, and can have different aspect ratios. Monoliths can be prepared outside of a chromatographic device, or can be synthesized within a chromatographic device (e.g., capillary tubing)

When the alternative core material is particulate, it can be spherical or non-spherical. Spherical core materials are formed following a modification of a reported process in Example 1 or by Barder (US 4,983,369), Unger (US 4,911,903, US 4,775,520), Anderson (US 5,425,930), core materials described in Examples 1-20 of Wyndham (US 20130112605, US 20130206665) and core materials described in Example 18 of Lauber (DE 102014019372). These core materials include, but are not limited to hybrid and inorganic compositions of nonporous particles (*e.g.*, Choi, J. Y.; Kim, C.H.; Kim, D. K J. Am. Ceram. Soc., 1998, 81, 1184-1188. Seog, I. S; Kim, C.H. J. Mat. Sci., 1993, 28, 3277-3282), pore filled porous materials, thermally treated porous materials, rod shaped materials (*e.g.,* Kievsky IEEE Transactions on Nanotechnology, 2005, 4, 5, 490), and magnetic materials (*e.g.,* Zhang, Functional Materials Letters, 2010, 3, 2, 125).

Non-spherical particulates, include (but are not limited to) rod-shaped, torroid, granular, spirals, capsules, rings, discoidal, concave disks, spools, rings, helix, saddles, cross, cube, derby, helix, cylinders, and tubes. Examples of dumbbell, doughnut, rod, spiral, and gyroid shaped materials have been reported (Doshi, N. PNAS, 2009, 106, 51, 21495; Alexander, L. Chem. Commun., 2008, 3507; Naik, S. J. Phys. Chem. C 2007, 111, 11168; Pang, X. Microporous and Mesoporous Materials 2005, 85, 1; Kievsky, Y. IEEE Transactions on Nanotechnology, 2005, 4, 5, 490; Sugimoto, T. in Monodispersed Particles, (Elsevier Science BV, Amsterdam) 2001**;** Ozin, G. Adv. Mater., 1997,9, 662).

The particle size of the core material is between 0.1-10 pm, alternatively between 0.5-4 μm, and alternatively between 1-3.5 μm.

The composition of these alternative core materials is comprised of one or more of the following: silica (0-100%), hybrid material (0-100%), polymer, polymerizable monomer, polyorganosiloxanes, nanoparticles (5-200 nm), ferromagnetic material, ferromagnetic material, diamonds, aluminum, gold, silver, iron, copper, titanium, niobium, zirconium, cobalt, carbon, graphene, graphite, silicon, silica carbide, cerium or any oxides thereof. The use of diamonds and gold allows for improved thermal conductivity of these materials. The use of ferromagnetic and ferrimagnetic material, includes (but is not limited to): magnetite (ferrous ferric oxide); maghemite; yttrium iron garnet, cobalt, $CrO_2$; and ferrites containing iron and Al, Mg, Ni, Zn, Mn or Co). These magnetic materials allow for magnetic capture and processing of these materials. Examples of polyorganosilanes include (but are not limited to) those included in Example 4 and Jiang (US 6,686,035;

7,223,473; 7,919,177) and Wyndham (US 20120141789). Examples of polymers include latexes, epoxides, methacrylates, styrene, divinyl benzene, polysaccharides, dendrigrafts, hyperbranched polymers, and others included in Polymer Handbook (4th edition, J. Brandrup; E. H. Immergut; E. A. Grulke; editors: Wiley: Hoboken, NJ, 1999). Examples of ferrimagnetic and ferromagnetic iron oxide rings and capsules have been reported (Wu, W. J. Phys. Chem. C 2010, 114, 16092; Jia, C.-J. J. Am. Chem. Soc. 2008, 130, 16968).

Alternative core materials can be further modified before use by one or more of the following: thermally treatment at 400-1,200°C for 10-40 hours to further reduce SPV in air, thermal treatment at 400-1,200°C for 10-40 under an inert or reducing atmosphere.

Alternatively core materials can be further modified by silica modification following the general process described by in US 4,983,369, US 4,911,903, Giesche (J. Eur. Ceram. Soc., 1994, 14, 189; J. Eur. Ceram. Soc., 1994, 14, 205) or Nozawa (Phys. Rev. E: Stat., Nonlinear, Soft Matter Phys., 2005, 72 (1), 011404). Alternatively the core materials can be modified by following a general process described in Example 13-15 of Wyndham (US 20130112605, US 20130206665).

Any agglomerated materials can be removed through grinding or classification. Products prepared by this approach have little to no porosity. Products prepared by this approach are free flowing and have little to no porosity.

**EXAMPLE 17**

The nanoparticles used in Examples 1-16 is modified to replace part or all of the nanoparticles (5-200 nm) used with nanoparticles, sols, or nanotubes (5-200 nm), including (but not limited to) hybrid, diamonds, aluminum, gold, silver, iron, copper, titanium, niobium, zirconium, cobalt, carbon, graphite, graphene, silicon, silica carbide, cerium or any oxides thereof, as detailed in Wyndham (US 20130112605, US 20130206665). The use of nanoparticles of diamonds allows for improved thermal conductivity of these materials. The use of ferromagnetic and ferrimagnetic nanoparticles, includes (but is not limited to): magnetite (ferrous ferric oxide); maghemite; yttrium iron garnet, cobalt, $CrO_2$; and ferrites containing iron and Al, Mg, Ni, Zn, Mn or Co). These magnetic materials allow for magnetic capture and processing of these materials. Hybrid nanoparticles are prepared by the condensation of hybrid inorganic/organic alkoxysilanes in the presence or absence of a tetraethoxysilane or tetramethoxysilane. Similar nanoparticle sizes can be achieved in this approach (*e.g.*, between 5 and 100 nm). Alternatively a hybrid nanoparicle can be formed by surface modifying preformed silica nanoparticles.

**EXAMPLE 18**

The nanoparticles used in Examples 1-17 is modified to replace part or all of the nanoparticles used with smaller size nanoparticles, nanotubes or molecular precursors (<5 nm), including (but not limited to) single wall, double wall or multiwall carbon nanotubes of carbon, silicon, diamonds, aluminum, gold, silver, iron, copper, titanium, niobium, zirconium, cobalt, carbon, graphite, graphene, silicon, silica carbide, cerium or any oxides thereof; fullerenes, buckminsterfullerenes (*e.g.*, buckeyballs); quantum dots; or polyhedral oligomeric silisesquioxanes (POSS), organically modified spherosilicates and spherosilicates. POSS are a unique class of multifunctional hybrids organic/inorganic cluster molecules, having a functional repeat unit of $RSiO^{1.5}$,, which have been utilized in composites, plastic additives, and coatings. Organically modified spherosilicates and spherosilicates are silica-based cluster molecules that been modified by reaction with organosilanes, or are stabilized with peripheral alkylamine or tetra-alkylammonium groups. POSS, organically modified spherosilicates, and spherosilicates are well known in the art, are commercially available (*e.g.*, Hybrid Plastics, Hattlesburg, MS), and come with a variety of different chemical and molecular structures, as well as different pendant groups that can be modified for incorporation within a material or modified for display of unique peripheral groups (Wyndham, K. D., Ph.D. Thesis, University of California, Irvine, 2000, pp. 256; www.hybridplastics.com document "POSS User's Guide: A guide to developing new products with POSS", Ver. 2.06).

Interval approaches can be performed as needed to modify porosity and change material properties. For example, a composite or layered material containing both diamonds and magnetite would be beneficial for thermal conductivity improvements and magnetic capture processing. A material that contains alumina or titania is suitable for glycopeptides, phosphopeptide and phospholipids separations. A material that contains ceria may be suitable for phospholipid and phosphatidylcholines separations.

**EXAMPLE 19**

The polyelectrolyte used in Examples 1-19 is modified to include one or more polyelectrolytes including (but not limited to): poly(vinylpyrrolidone), poly(diallydimethylammonium chloride), poly(diallydimethylammonium bromide), poly(diallydimethylammonium halide), polyethyleneimine, poly(allylamine hydrochloride), poly(allylamine hydrobromide), poly(allylamine hydrohalide), or any of the polyectrolytes detailed in Wyndham (US 20130112605, US 20130206665). The molecular weight of these polyelectrolytes vary between 2,000 and 500,000 Da.

## EXAMPLE 20

The polyelectrolyte used in Examples 1-19 is modified to include the use of chemically degradable polymers, including (but not limited to) polyethylene glycol, polypropylene glycol, polymethacrylate, polymethylmethacrylate, poly(acrylic acid), and polylactic acid based polymers containing pendant primary, secondary, or tertiary amino groups as detailed in Wyndham (US 20130112605, US 20130206665). For example, polyethylene glycol (PEG) based polyether amines are described in US 7,101,52, and others are commercially available as Jeffamine polyetheramines (Huntsman Corporation).

Different approaches are employed that do not require thermal treatment at or above 500°C. Polymethylmethacrylate networks can be decomposed using β-ray irradiation. Acrylate and methacrylate polymer backbones having thermally cleavable tertiary ester linkages can decompose between 180-200°C (Ogino, K. Chem. Mater, 1998, 10, 3833). Polyethylene glycol groups can be removed by oxidative degradation (Andreozzi, R. Water Research, 1996, 30, 12, 2955; Suzuki, J. J. Applied Polymer Science, 1976, 20, 1, 93) and microwave assisted template removal using nitric acid and hydrogen peroxide (Tian, B. Chem. Commun., 2002, 1186). A listing of other degradable polymer backbones and degradation mechanism is reported in Degradable Polymers: Principles and Applications (Editors G. Scott and D. Gilead, D., Chapman & Hall (Kluwer) 1995). Alternatively, surfactants and or polymers are removed by ozonolysis, or thermal treatment by the process of Examples 40-43 in Wyndham (US 20130112605, US 20130206665).

Further processing steps can be performed to further reduce and remove polymer content. Any agglomerated materials or fine materials can be removed through classification.

## EXAMPLE 21

The process of Example 1-20 is modified to replace the nonporous core material with an alternative core material that is a toroid-shaped or torus-shaped particle. The composition of this alternative core material is that same as those listed in Example 16.

Figure 26 displays the cross-sectional geometry of a superficially porous toroid-shaped or torus-shaped particle. The critical parameters of a superficially porous toroid particle are defined as $d^{l}$= diameter across the ring of material (2•*l*$^{l}$); $d^{2}$·= diameter across the nonporous core ring of material; $d^3$ = diameter across the internal vacant ring; $d^4$ = cross section particle diameter ($d^{4} = d^{3} + 2 \bullet d^{1} = d^{3} + 4 \bullet l^{l}$); $c^1$ = center of material ring (found at 1/2 $d^{l}$); *l* = radius across the center of the material ring ($c^1$) to surface of material ring (1) - also known as the minor toroid radius; 0 = origin of porosity along this radius; 1 = termination of the porous layer along this radius. The major toroid radius is defined as 1/2 $d^3 + d^3$. A toroid aspect ratio is defined as the major toroid radius divided by the minor toroid radius. The aspect ratio for a doughnut-shaped material is 2-3. For toroids, the calculation of Rho is $d^2/d^1$. In the case where there is no porous layer the Rho is 1.

The particle size of the alternative core torus-shaped or toroid-shaped material is between 0.1-10 μm, alternatively between 0.5-4 μm, and alternatively between 1-3.5 μm. The aspect ratio of the alternative core torus-shaped or toroid-shaped material is between 2-17, alternatively between 2.5-10, and alternatively between 2.7-5. The diameter across the nonporous core ring of the alternative core torus-shaped or toroid-shaped material ($d^2$) is between 0.1-5 μm, alternatively between 0.5-4 μm, and alternatively between 0.7-2 μm.

The resulting particle size of the superficially porous torus-shaped or toroid-shaped material is between 0.5-44 μm, alternatively between 0.1-10 μm, and alternatively between 1.3-4 μm. The aspect ratio of the alternative core toms-shaped or toroid-shaped material is between 2-13, alternatively between 2.1-10. and alternatively between 2.2-4. The diameter across the ring of this tours-shaped or toroid-shaped superficially porous material (d1) is between 0.1-14 μm, alternatively between 0.5-4 μm, and alternatively between 0.8-2 μm. The diameter across the internal vacant ring ($d^3$) is between 0.1-8.3 pm, alternatively between 0.3-3.5 pm, and alternatively between 0.8-2.5 μm. The resulting Rho of the superficially porous torus-shaped or toroid-shaped material is between 0.05-0.99, alternatively between 0.2-0.95, and alternatively between 0.5-0.9.

Superficially porous products having that are toroid-shaped or torus-shaped have advantages in chromatographic separations. While not limited to theory the first advantage of this geometry is increased permeability due to the presence of the internal vacant ring ($d^3$). Another advantage of this particle geometry is chromatographic efficiency should correlate better with the diameter across the ring section ($d^1$) of the superficially porous material (in toroid nomenclature this is the same as the minor diameter, or twice the minor radius) rather than particle diameter ($d^4$).

As such, it is possible to create higher efficiency toroid-shaped particles for use on existing UPLC and UHPLC systems, than would be otherwise possible using current, commercially available, spherical packing materials - where increased column pressures limit the particle size to greater than or equal to about 1.3 μm. It is important to note that column pressures with spherical packing materials is inversely proportional to with particle size squared, and is inversely proportional to particle size cubed at the optimal linear velocity. As such the use of smaller spherical particles allows for improved efficiency (linear trend with particle size), and significantly higher column pressures. Using toroid-shaped superficially porous particles it is possible to have diameters across the ring section ($d^1$) of 0.5-1.0 μm, with much lower

column pressures due to the presence of the internal vacant ring ($d^3$).

It is also possible to create toroid-shaped superficially porous particles that have similar efficiencies with commercially available, spherical packing materials (*e.g., $d^1$* between 1.6-2.6 μm) without the high column pressures associated with spherical packing materials. By controlling the diameter of the internal vacant ring ($d^3$), improved control of column pressure can be achieved. For example, through proper selection of a toroid-shaped core material, the resulting superficially porous columns can be produced with higher permeability than are currently possible with spherical packing materials - resulting in much lower column pressures. As such one can produce a UHPLC/UPLC (≤6000psi system pressure) performance with column pressures commonly associated with HPLC columns (≤ 6000psi system pressure). This allows for direct scaling of methods from low dispersion UHPLC/UPLC systems to more traditional HPLC systems. It is also possible to create toroid-shaped superficially porous particles that have similar efficiencies with commercially available, spherical packing columns with permeabilities that are greater than or equal to monolithic columns.

There are additional advantages to controlling column pressures for applications where pressure impacts retentivitiy (e.g., increased retention of peptides or proteins with increasing pressures. It also allows the possibility for extremely long columns to be used that can achieve extremely high column efficiencies. As such, longer microbore columns, linked microbore columns, or long capillary columns (10-2,000 cm) can be used to achieve efficiencies greater than 1 million theoretical plates. Such improvements in efficiencies have significant advantages in peptide mapping, proteomics, genomics, lipidomics, petrochemical analysis, and in LC, LC-MS, LC-MS/MS, and SFC.

There are many parameters that can be adjusted in the synthesis of superficially porous materials based on toroid-shaped or torus-shaped core materials. Each can be tuned to improve aspects of chromatographic performance, including (but not limited to): efficiency, resolution, column pressure. loadability, application required pore diameter. For example, **Table 8** has a constant internal void of the core material (1.5 μm) and superficially porous shell thickness (0.3 μm), with varied core ring thickness (0.1-4.5 μm). **Table 9** has a constant core material aspect ratio (4) and final Rho (0.70), with varied core ring thickness (0.1-2.5 μm). **Table 10** has a constant $d^1$ (1.0 μm) and Rho (0.70), with varied core particle diameter (2-10 μm). **Table 11** has a constant $d^1$ (1.0 μm) and Rho (0.70), with varied core particle diameter (2-10 μm).

Mechanical strength of a toroid-shaped or torus-shaped core material can be improved through selection of the core material, through densification at elevated temperatures, and through adjustment of the core material aspect ratio. A lower aspect ratio core material (*e.g.*, between 2-3) is expected to be more mechanically stronger than a higher aspect ratio core material (*e.g.*, between 10-15). A toroid-shaped or torus-shaped core material that is less brittle and more compliant is at times preferred over a core material that may more easily break during device packing or during a chromatographic run.

The toroid -shaped or torus-shaped core material needs to have strong attachment of the porous layer. When the composition of this core material is silica or hybrid - this can be achieved using the process detailed in Examples 1-20. When the core material is a polymer, a metal, or does not easily form a strong attachment (*e.g.*, covalent bonds) with the porous layer, the core materials can be further modified by silica modification following the general process described in Example 15 or as described in US 4,983,369, US 4,911,903, Giesche (J. Eur. Ceram. Soc., 1994, 14, 189; J. Eur. Ceram. Soc., 1994, 14, 205) or Nozawa (Phys. Rev. E: Stat., Nonlinear, Soft Matter Phys., 2005, 72 (1), 011404). Alternatively the core materials can be modified by following a general process described in Example 13-15 of Wyndham (US 20130112605, US 20130206665).

**Table 8**

| $d^2$ μm | $d^1$ μm | $d^3$ μm | $d^4$ μm | **Aspect Ratio** | **Rho** |
|---|---|---|---|---|---|
| 0.10 | 0.7 | 0.9 | 2.3 | 3.3 | 0.14 |
| 0.5 | 1.1 | 0.9 | 3.1 | 2.8 | 0.45 |
| 0.8 | 1.4 | 0.9 | 3.7 | 2.6 | 0.57 |
| 1.0 | 1.6 | 0.9 | 4.1 | 2.6 | 0.63 |
| 1.5 | 2.1 | 0.9 | 5.1 | 2.4 | 0.71 |
| 2.0 | 2.6 | 0.9 | 6.1 | 2.3 | 0.77 |
| 2.5 | 3.1 | 0.9 | 7.1 | 2.3 | 0.81 |
| 3.0 | 3.6 | 0.9 | 8.1 | 2.3 | 0.83 |
| 3.5 | 4.1 | 0.9 | 9.1 | 2.2 | 0.85 |
| 4.0 | 4.6 | 0.9 | 10.1 | 2.2 | 0.87 |
| 4.5 | 5.1 | 0.9 | 11.1 | 2.2 | 0.88 |

**Table 9**

| $d^2$ µm | $d^1$ µm | $d^3$ µm | $d^4$ µm | Aspect Ratio | Rho |
|---|---|---|---|---|---|
| 0.10 | 0.1 | 0.2 | 0.44 | 3.1 | 0.70 |
| 0.5 | 0.7 | 0.8 | 2.2 | 3.1 | 0.70 |
| 0.8 | 1.1 | 1.3 | 3.5 | 3.1 | 0.70 |
| 1.0 | 1.4 | 1.6 | 4.4 | 3.1 | 0.70 |
| 1.5 | 2.1 | 2.4 | 6.6 | 3.1 | 0.70 |
| 2.0 | 2.9 | 3.1 | 8.9 | 3.1 | 0.70 |
| 2.5 | 3.6 | 3.9 | 11.1 | 3.1 | 0.70 |

**Table 10**

| $d^2$ µm | $d^1$ µm | $d^3$ µm | $d^4$ µm | Aspect Ratio | Rho |
|---|---|---|---|---|---|
| 0.70 | 1.0 | 0.3 | 2.30 | 2.3 | 0.70 |
| 0.70 | 1.0 | 0.8 | 2.8 | 2.8 | 0.70 |
| 0.70 | 1.0 | 1.1 | 3.1 | 3.1 | 0.70 |
| 0.70 | 1.0 | 1.3 | 3.3 | 3.3 | 0.70 |
| 0.70 | 1.0 | 1.8 | 3.8 | 3.8 | 0.70 |
| 0.70 | 1.0 | 2.3 | 4.3 | 4.3 | 0.70 |
| 0.70 | 1.0 | 2.8 | 4.8 | 4.8 | 0.70 |
| 0.70 | 1.0 | 3.3 | 5.3 | 5.3 | 0.70 |
| 0.70 | 1.0 | 5.3 | 7.3 | 7.3 | 0.70 |
| 0.70 | 1.0 | 8.3 | 10.3 | 10.3 | 0.70 |

**Table 11**

| $d^2$ µm | $d^1$ µm | $d^3$ µm | $d^4$ µm | Aspect Ratio | Rho |
|---|---|---|---|---|---|
| 0.95 | 1.0 | 0.1 | 2.05 | 2.1 | 0.95 |
| 0.95 | 1.0 | 0.6 | 2.6 | 2.6 | 0.95 |
| 0.95 | 1.0 | 0.8 | 2.8 | 2.8 | 0.95 |
| 0.95 | 1.0 | 1.1 | 3.1 | 3.1 | 0.95 |
| 0.95 | 1.0 | 1.6 | 3.6 | 3.6 | 0.95 |
| 0.95 | 1.0 | 2.1 | 4.1 | 4.1 | 0.95 |
| 0.95 | 1.0 | 2.6 | 4.6 | 4.6 | 0.95 |
| 0.95 | 1.0 | 3.1 | 5.1 | 5.1 | 0.95 |
| 0.95 | 1.0 | 5.1 | 7.1 | 7.1 | 0.95 |
| 0.95 | 1.0 | 8.1 | 10.1 | 10.1 | 0.95 |

**EXAMPLE 22**

The products of Examples 1-21 can be further processed or modified by one or more of the following modification steps in Table 12, in any particular order or repetition. Representative references are provided for these general operations are provided in Table 12. Illustrative examples are provided for select references.

**TABLE 12**

| Process | Representative Reference |
|---|---|
| Additional porous layer formed by template synthesis | Wyndham (US 20130112605, US 20130206665)<br>Examples 28-38, 76 |
| Extraction | Wyndham (US 20130112605, US 20130206665)<br>Examples 40, 80 |
| Ozonolysis | Wyndham (US 20130112605, US 20130206665)<br>Examples 41, 81 |
| Lyophillization | Wyndham (US 20130112605, US 20130206665)<br>Examples 21, 73 |
| Hydrothermal treatment | Examples 2, 7, 10-11, 13-14;<br>Wyndham (US 20130112605, US 20130206665)<br>Examples 44, 45;<br>Jiang (US 6,686,035; 7,223,473; 7,919,177, US 8,778,453):<br>Wyndham (US 20120141789) |
| Psuedomorphic transformation | Example 14;<br>Wyndham (US 8,658,277) |
| Hybrid or inorganic surrounding material formation | Wyndham (US 20130112605, US 20130206665)<br>Examples 4, 13-16;<br>Wyndham (US 20120055860) Examples 1-16, 24, 36-38; |
| Drying | Wyndham (US 20130112605, US 20130206665)<br>Examples 1,5, 7-8, 10, 13, 28-30, 32, 40-41, 64, 73, 74, 79 |
| Thermal treatment | Wyndham (US 20130112605, US 20130206665)<br>Examples 17, 75 |
| Dispersion | Wyndham (US 20130112605, US 20130206665)<br>Examples 79 |
| Acid treatment | Wyndham (US 20130112605, US 20130206665)<br>Examples 64, 79<br>Wyndham (US 20120055860) Examples 17 |
| Reaction of hybrid functional groups | Wyndham (US 20120055860) Examples 18-19, 26, 34-35, 41<br>Jiang (US 6,686,035, US 7,223,473, US 7,919,177, US 8,778,453, us 8,791,220);<br>Walter (US 7,250,214, US 8,404,346) |
| Surface modification with silanes | Wyndham (US 20130112605, US 20130206665)<br>Examples 56; 65-67, 82-84.<br>Wyndham (US 20120055860) Examples 20-23, 25, 61-71<br>Jiang (US 6,686,035, US 7,223,473, US 7,919,177, US 8,778,453, US 8,791,220)<br>Walter (US 7,250,214, US 8,404,346) |
| Grinding or Classification | Examples 15, 19<br>Wyndham (US 20130112605, US 20130206665)<br>Examples 63 |
| Sedimentation | Wyndham (US 20130112605, US 20130206665)<br>Examples 64 |
| Used within a chromatographic device | Wyndham (US 20130112605, US 20130206665);<br>Jiang (US 6,686,035, US 7,223,473, US 7,919,177, US 8,778,453, US 8,791,220);<br>Walter (US 7,250,214, T.JS 8,404,346);<br>Benevides (US 8,845,892) |

**EXAMPLE 23**

Select materials from Examples 1-22 have silanol groups surface modified following the process of Wyndham (US 20130112605, US 20130206665), Jiang (US 6,686,035; 7,223,473; 7,919,177) and Wyndham (WO 2008/103423) with reagents including (but not limited to) of the type:

$$Z_a(R')_bSi\text{-}R.$$

where

Z=Cl, Br, I, $C_1$ -$C_5$ alkoxy, dialkylamino or trifluoromethanesulfonate;
a and b are each an integer from 0 to 3 provided that a+b=3;
R' is a $C_1$ -$C_6$ straight, cyclic or branched alkyl group, methyl, ethyl, propyl, isopropyl, butyl, t-butyl, sec-butyl, pentyl, isopentyl, hexyl and cyclohexyl
R is a functionalizing group selected from the group consisting of alkyl, alkenyl, alkynyl, aryl, cyano, amino, diol, nitro, ester, a cation or anion exchange group, a pyridyl group, a pentafluorophenylalkyl group, an alkyl or aryl group containing an embedded polar functionality, and a $C_1$ -$C_{30}$ alkyl group

Advantageouse silanol surface modification groups include (but are not limited to) octyltrichlorosilane, octadecyltrichlorosilane, octyldimethylchlorosilane, phenylhexyltrichlorosilane, n-butyldimethylchlorosilane, tert-butyldimethylchlorosilane, triisopropylchlorosilane, cyanopropyldiisopropylchlorosilane, pentafluorophenylpropyltrichlorosilane, 2-pyridylethyltrimethoxysilane, and octadecyldimethylchlorosilane

Alternatively, the materials are surface modified by forming an organic covalent bond between surface organic groups and the modifying reagent. Alternatively, the materials are surface modified by coating with a polymer. Alternatively, the materials are modified by a combination of organic group and silanol group modification. Alternatively, the materials are surface modified by a combination of silanol group modification and coating with a polymer. Alternatively, the materials are surface modified by a combination of organic group modification and coating with a polymer. Alternatively, the materials are surface modified by a combination of organic group modification, silanol group modification, and coating with a polymer.

**EXAMPLE 24**

Select unbounded materials from Examples 1-23 are modified with one more or more layers formed using an organosiloxane, a mixture of organosiloxane and alkoxysilane, polyorganoalkoxysilanes, a hybrid inorganic/organic surrounding material, or combination thereof. as described in Example 83 of Wyndham (US 20130112605, US 20130206665).

**EXAMPLE 25**

Select unbounded materials from Example 1-23 are modified with a hybrid inorganic/organic surrounding material resulting in $(SiO_2)_d/(O_{1.5}SiCH_2CH_2SiO_{1.5})$ where d is 0-30, a hybrid inorganic/organic surrounding material resulting in $(SiO_2)_d/(O_{1.5}SiCH_2CH_2SiO_{1.5})$ where d is 0-30, or combination thereof, as described in Example 83 of Wyndham (US 20130112605, US 20130206665).

**EXAMPLE 26**

Select materials from Example 1, 2, 3 and 7 were surface bonded with chlorosilanes containing C4 (*e.g.,* $C_4H_9$) or C8 (*e.g.,* $C_8H_{17}$) groups using the general approaches detailed in Examples 23-24 of Jiang (US 7,223,473), and Example 45 of Wyndham (US 20130112605, US 20130206665) or in Example 15 of Wyndham (US 2012141789), followed by endcapping (when applicable) using the general approach of Examples 23-24 of Jiang (US 7,223,473), and Example 16 of Wyndham (US 2012141789). Prototypes data is provided in Table 13. Surface coverage was determined by difference in %C data before and after surface modification

**Table 13**

| Product | Precursor | dp (μm) | SSA ($m^2$/g) | SPV (cc/g) | APD (Å) | Rho | Bonding | Coverage (μmol/ $m^2$) | Endcapped |
|---|---|---|---|---|---|---|---|---|---|
| 26a | 1n | 1.64 | 13 | 0.09 | 384 | 0.91 | C8 | 0.92 | Yes |

(continued)

| Product | Precursor | dp (μm) | SSA ($m^2/g$) | SPV (cc/g) | APD (Å) | Rho | Bonding | Coverage (μmol/ $m^2$) | Endcapped |
|---|---|---|---|---|---|---|---|---|---|
| 26b | 1n | 1.66 | 13 | 0.09 | 384 | 0.91 | C4 | 0.23 | No |
| 26c | 2r | 1.80 | 43 | 0.29 | 277 | 0.68 | C4 | 4.01 | Yes |
| 26d | 3g | 1.66 | 9 | 0.7 | 343 | 0.90 | C8 | 0.77 | Yes |
| 26e | 7h | 1.86 | 36 | 0.22 | 259 | 0.65 | C4 | 3.77 | Yes |

**EXAMPLE 27**

Select materials from Example 23 and 26 are packed into chromatographic columns and evaluated for chromatographic performance following the approach of Examples 25-27 of Jiang (US 7,223,473), Examples 17-19 and 33-34 of Wyndham (US 2012141789) and Examples 62-67 of Wyndham (US 20130319086).

**EXAMPLE 28**

Following the TFA, acetonitrile-water gradient approach detailed in Examples 62 and 64 of Wyndham (US 20130319086), a chromatographic separation of peptides was achieved for Product 26b packed into a chromatographic column (2.1x50 mm) . The Peptide mixture was the MassPREP Peptide Standard (Waters Corporation, Milford, MA, P/N 186002337), which contained the following: VO (allantoin), [1] RASG-1, [2] angiotensin Fragment 1-7, [3] bradykinin, [4] angiotensin 11, [5] angiotensin I, [6] renin substrate, [7] enolase T35, [8] enolase T37, and [9] melittin. The gradient was performed with mobile phases: (A) 0.05% TFA in water; (B) 0.05% TFA in 75:25 acetonitrile/water (v/v). The gradient profile was 0.93% to 66.7%, B in 30 min, 2 min hold in 66.7% B, and 100% A for 18 min at ambient temperature (0.2 mL/min) on an ACQUITY UPLC system (Waters Corporation, Milford, MA), having detection at 220 nm.

## Claims

1. A chromatographic material having controlled porosity, comprising a chromatographic core material having a primary surface and a plurality of layers of a chromatographic surface material, wherein each layer of the plurality of layers of a chromatographic surface material independently has an average pore diameter, measured using the method defined in the portion of the description entitled "Characterization", of 20 to 1500 Angstroms, wherein the average pore diameter of the plurality of layers of a chromatographic surface material varies in a predetermined pattern from the primary surface of the chromatographic core material to the outermost surface of the chromatographic material, wherein the predetermined pattern comprises an increase in average pore diameter from the primary surface of the chromatographic core material to the outermost surface of the chromatographic material, or wherein the predetermined pattern comprises a decrease in average pore diameter from the primary surface of the chromatographic core material to the outermost surface of the chromatographic material, wherein each layer of the plurality of layers of the chromatographic surface material independently has a specific surface area, measured using the method defined in the portion of the description entitled "Characterization", of 25 to 1100 $m^2/g$, and wherein the specific surface area of the plurality of layers of a chromatographic surface material varies in a predetermined pattern from the primary surface of the chromatographic core material to the outermost surface of the chromatographic material.

2. The chromatographic material of Claim 1, wherein the material is in the form of a particle.

3. The chromatographic material of Claim 1, wherein the material is in the form of a monolith.

4. The chromatographic material of Claim 1, wherein the material is in the form of a superficially porous material.

5. The chromatographic material of Claim 1, wherein the chromatographic core material is an inorganic material, an organic material, or an inorganic/organic hybrid material.

6. The chromatographic material of Claim 5, wherein the chromatographic core material has the formula:

$$(SiO_2)_d/[R^2((R)_p(R^1)_qSiO_t)_m] \qquad (I)$$

wherein,

R and $R^1$ are each independently $C_1$-$C_{18}$ alkoxy, $C_1$-$C_{18}$ alkyl, $C_1$-$C_{18}$ alkyl, $C_2$-$C_{18}$ alkenyl, $C_2$-$C_{18}$ alkynyl, $C_3$-$C_{18}$ cycloalkyl, $C_1$- $C_{18}$ heterocycloalkyl, $C_5$-$C_{18}$ aryl, $C_5$-$C_{18}$ aryloxy, or $C_1$-$C_{18}$ heteroaryl:
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$- $C_{18}$ heterocycloalkyl, $C_5$-$C_{18}$ aryl, $C_1$-$C_{18}$ heteroaryl; or absent; wherein each $R^2$ is attached to two or more silicon atoms;
p and q are each independently 0.0 to 3.0,
t is 0.5, 1.0, or 1.5;
d is 0 to about 30;
m is an integer from 1-20; wherein R, $R^1$ and $R^2$ are optionally substituted;
provided that;

(1) when $R^2$ is absent, m=1 and $t = \frac{(4-(p+q))}{2}$, when $0<p+q\leq 3$; and

(2) when $R^2$ is present, m=2-20 and $t = \frac{(3-(p+q))}{2}$, when $p+q \leq 2$;

the formula:

$$(S_iO_2)_d/[(R)_p(R^1)_qSiO_t] \qquad (II)$$

wherein,

R and $R_1$ are each independently $C_1$ -$C_{18}$ alkoxy, $C_1$ -$C_{18}$ alkyl, $C_1$ -$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$-$C_{18}$ heteroaryl;
d is 0 to about 30;
p and q are each independently 0.0 to 3.0, provided that when p+q=1 then t=1.5; when p+q=2 then t=1: or when p+q=3 then t=0.5; or

the formula:

$$(SiO_2)_d/[R^2((R^1)_r\ SiO_t)_m] \qquad (III)$$

wherein,

$R^1$ is $C_1$-$C_{18}$ alkoxy, $C_1$-$C_{18}$ alkyl, $C_1$-$C_{18}$ alkyl, $C_2$-$C_{18}$ alkenyl $C_2$-$C_{18}$ alkynyl, $C_3$-$C_{18}$ cycloalkyl, $C_1$-$C_{18}$ heterocycloalkyl, $C_5$-$C_{18}$ aryl, $C_5$-$C_{18}$ aryloxy, or $C_1$ -$C_{18}$ heteroaryl;
$R^2$ is $C_1$-$C_{18}$ alkyl, $C_2$-$C_{18}$ alkenyl, $C_2$-$C_{18}$ alkynyl, $C_3$-$C_{18}$ cycloalkyl, $C_1$-$C_{18}$ heterocycloalkyl, $C_5$-$C_{18}$ aryl, $C_1$-$C_{18}$ heteroaryl; or absent; wherein each $R^2$ is attached to two or more silicon atoms;
d is 0 to about 30;
r is 0, 1 or 2, provided that when r=0 then t=1.5; when r=1 then t=1 ; or when r=2, then t=0.5; and
m is an integer from 1-20.

**7.** The chromatographic material of Claim 1, wherein the predetermined pattern comprises an increase in specific surface area from the primary surface of the chromatographic core material to the outermost surface of the chromatographic material.

**8.** The chromatographic material of Claim 1, wherein the predetermined pattern comprises a decrease in specific surface area from the primary surface of the chromatographic core material to the outermost surface of the chromatographic material.

**9.** The chromatographic material of Claim 1, wherein at least one layer of the plurality of layers of a chromatographic surface material is an inorganic/organic hybrid material which comprises a hydrophobic surface group and plurality of ionizable modifiers, wherein the hydrophobic surface group of the surface material of the invention is a C4 to C18 bonded phase, a C18 bonded phase, an embedded polar bonded phase, an aromatic, phenylalkyl, fluoroaromatic, phenylhexyl, or pentafluorophenylalkyl bonded phase, or a C4-C30, embedded polar, chiral, phenylalkyl, or pentafluorophenyl bonding or coating, and wherein each ionizable modifier independently contains a carboxylic acid group,

a sulfonic acid group, an arylsulfonic group, a phosphoric acid group, a boronic acid group, an amino group, an imido group, an amido group, a pyridyl group, an imidazolyl group, an ureido group, a thionyl-ureido group or an aminosilane group.

**10.** The chromatographic material of Claim 1, wherein the material further comprises a surface modification and wherein the material has been surface modified by coating with a polymer by a combination of an organic group and a silanol group modification.

**11.** A chromatographic device, comprising

a) an interior channel for accepting a packing material and
a packed chromatographic bed comprising the chromatographic material of any one of Claims 1-10.

## Patentansprüche

**1.** Chromatographisches Material mit kontrollierter Porosität, umfassend ein chromatographisches Kernmaterial mit einer Primäroberfläche und einer Vielzahl von Schichten eines chromatographischen Oberflächenmaterials, wobei jede Schicht der Vielzahl von Schichten eines chromatographischen Oberflächenmaterials unabhängig einen mittleren Porendurchmesser von 20 bis 1500 Angström aufweist, gemessen nach dem im Abschnitt "Charakterisierung" der Beschreibung definierten Verfahren, wobei der mittlere Porendurchmesser der Vielzahl der Schichten eines chromatographischen Oberflächenmaterials in einem vorbestimmten Muster von der Primäroberfläche des chromatographischen Kernmaterials zur äußersten Oberfläche des chromatographischen Materials variiert, wobei das vorbestimmte Muster entweder eine Zunahme des mittleren Porendurchmessers von der Primäroberfläche des chromatographischen Kernmaterials zur äußersten Oberfläche des chromatographischen Materials umfasst, oder wobei das vorbestimmte Muster eine Abnahme des mittleren Porendurchmessers von der Primäroberfläche des chromatographischen Kernmaterials zur äußersten Oberfläche des chromatographischen Materials umfasst, wobei jede Schicht der Vielzahl der Schichten des chromatographischen Oberflächenmaterials unabhängig eine spezifische Oberfläche von 25 bis 1100 $m^2/g$ aufweist, gemessen nach dem im Abschnitt "Charakterisierung" der Beschreibung definierten Verfahren, wobei die spezifische Oberfläche der Vielzahl von Schichten eines chromatographischen Oberflächenmaterials in einem vorbestimmten Muster von der primären Oberfläche des chromatographischen Kernmaterials bis zur äußersten Oberfläche des chromatographischen Materials variiert.

**2.** Chromatographisches Material nach Anspruch 1, wobei das Material in Form eines Partikels vorliegt.

**3.** Chromatographisches Material nach Anspruch 1, wobei das Material in Form eines Monolithen vorliegt.

**4.** Chromatographisches Material nach Anspruch 1, wobei das Material in Form eines oberflächenporösen Materials vorliegt.

**5.** Chromatographisches Material nach Anspruch 1, wobei das chromatographische Kernmaterial ein anorganisches Material, ein organisches Material oder ein anorganisch/organisches Hybridmaterial ist.

**6.** Chromatographisches Material nach Anspruch 5, wobei das chromatographische Kernmaterial die Formel aufweist:

$$(SiO_2)_d/[R^2((R)_P(R^1)_qSiO_t)_m] \qquad (I)$$

wobei

R und $R^1$ jeweils unabhängig voneinander $C_1$-$C_{18}$-Alkoxy, $C_1$-$C_{18}$-Alkyl, $C_1$-$C_{18}$-Alkyl, $C_2$-$C_{18}$-Alkenyl, $C_2$-$C_{18}$-Alkinyl, $C_3$-$C_{18}$-Cycloalkyl, $C_1$-$C_{18}$-Heterocycloalkyl, $C_5$-$C_{18}$-Aryl, $C_5$-$C_{18}$-Aryloxy oder $C_1$-$C_{18}$-Heteroaryl sind;
$R^2$ $C_1$-$C_{18}$-Alkyl, $C_2$-$C_{18}$-Alkenyl, $C_2$-$C_{18}$-Alkinyl, $C_3$-$C_{18}$-Cycloalkyl, $C_1$-$C_{18}$-Heterocycloalkyl, $C_5$-$C_{18}$-Aryl, $C_1$-$C_{18}$-Heteroaryl ist; oder abwesend; wobei jedes $R^2$ an zwei oder mehr Siliziumatome gebunden ist;
p und q jeweils unabhängig voneinander 0,0 bis 3,0 sind,
t 0,5, 1,0 oder 1,5 ist;
d 0 bis etwa 30 ist;
m eine ganze Zahl von 1 bis 20 ist; wobei R, $R^1$ und $R^2$ optional substituiert sind;

vorausgesetzt, dass;

(1) wenn $R^2$ nicht vorhanden ist, m=1 und $t = \frac{(4-(p+q))}{2}$, wenn $0<p+q\leq 3$; und

(2) wenn $R^2$ vorhanden ist, m=2-20 und $t = \frac{(3-(p+q))}{2}$, wenn $p+q \leq 2$;

die Formel:

$$(SiO_2)_d/[(R)_p(R^1)_qSiO_t] \qquad (II)$$

wobei
R und $R_1$ jeweils unabhängig voneinander $C_1$-$C_{18}$-Alkoxy, $C_1$-$C_{18}$-Alkyl, $C_1$-$C_{18}$-Alkyl, $C_2$-$C_{18}$-Alkenyl, $C_2$-$C_{18}$-Alkinyl, $C_3$-$C_{18}$-Cycloalkyl, $C_1$-$C_{18}$-Heterocycloalkyl, $C_5$-$C_{18}$-Aryl, $C_5$-$C_{18}$-Aryloxy oder $C_1$-$C_{18}$-Heteroaryl sind;
d 0 bis etwa 30 ist;
p und q jeweils unabhängig voneinander 0,0 bis 3,0 sind, vorausgesetzt, dass wenn p+q=1, dann t=1,5; wenn p+q=2, dann t=1; oder wenn p+q=3, dann t=0,5; oder
die Formel:

$$(SiO_2)_d/[R^2((R^1)_r SiO_t)_m] \qquad (III)$$

wobei
$R^1$ $C_1$-$C_{18}$-Alkoxy, $C_1$-$C_{18}$-Alkyl, $C_1$-$C_{18}$-Alkyl, $C_2$-$C_{18}$-Alkenyl, $C_2$-$C_{18}$-Alkinyl, $C_3$-$C_{18}$-Cycloalkyl, $C_1$-$C_{18}$-Heterocycloalkyl, $C_5$-$C_{18}$-Aryl, $C_5$-$C_{18}$-Aryloxy oder $C_1$-$C_{18}$-Heteroaryl ist;
$R^2$ $C_1$-$C_{18}$-Alkyl, $C_2$-$C_{18}$-Alkenyl, $C_2$-$C_{18}$-Alkynyl, $C_3$-$C_{18}$-Cycloalkyl, $C_1$-$C_{18}$-Heterocycloalkyl, $C_5$-$C_{18}$-Aryl, $C_1$-$C_{18}$-Heteroaryl ist; oder abwesend; wobei jedes $R^2$ an zwei oder mehr Siliziumatome gebunden ist;
d 0 bis etwa 30 ist;
r 0, 1 oder 2 ist, vorausgesetzt, dass wenn r = 0, dann t = 1,5; wenn r=1, dann t=1; oder wenn r=2, dann t=0,5; und
m eine ganze Zahl von 1 bis 20 ist.

**7.** Chromatographisches Material nach Anspruch 1, wobei das vorbestimmte Muster eine Zunahme der spezifischen Oberfläche von der primären Oberfläche des chromatographischen Kernmaterials bis zur äußersten Oberfläche des chromatographischen Materials umfasst.

**8.** Chromatographisches Material nach Anspruch 1, wobei das vorbestimmte Muster eine Abnahme der spezifischen Oberfläche von der primären Oberfläche des chromatographischen Kernmaterials zur äußersten Oberfläche des chromatographischen Materials umfasst.

**9.** Chromatographisches Material nach Anspruch 1, wobei mindestens eine Schicht der Vielzahl von Schichten eines chromatographischen Oberflächenmaterials ein anorganisch/organisches Hybridmaterial ist, das eine hydrophobe Oberflächengruppe und eine Vielzahl von ionisierbaren Modifikatoren umfasst, wobei die hydrophobe Oberflächengruppe des erfindungsgemäßen Oberflächenmaterials eine C4- bis C18-gebundene Phase, eine C18-gebundene Phase, eine eingebettete polare gebundene Phase, eine fluorierte aromatische, Phenylalkyl-, Fluoraromat-, Phenylhexyl- oder Pentafluorphenylalkyl-gebundene Phase oder eine C4- bis C30-, eingebettete polare, chirale, Phenylalkyl- oder Pentafluorphenyl-Bindung oder -Beschichtung ist, und wobei jeder ionisierbare Modifikator unabhängig eine Carbonsäuregruppe, eine Sulfonsäuregruppe, eine Arylsulfonsäuregruppe, eine Phosphorsäuregruppe, eine Boronsäuregruppe, eine Aminogruppe, eine Imidogruppe, eine Amidogruppe, eine Pyridylgruppe, eine Imidazolylgruppe, eine Ureidogruppe, eine Thionyl-Ureidogruppe oder eine Aminosilangruppe umfasst.

**10.** Chromatographisches Material nach Anspruch 1, wobei das Material ferner eine Oberflächenmodifikation umfasst und wobei das Material durch Beschichtung mit einem Polymer mittels einer Kombination aus einer organischen Gruppe und einer Silanolgruppe oberflächenmodifiziert wurde.

**11.** Chromatographische Vorrichtung, umfassend

a) einen Innenkanal zum Aufnehmen eines Packungsmaterials und

ein gepacktes Chromatographiebett, umfassend das chromatographische Material nach einem der Ansprüche 1 bis 10.

## Revendications

**1.** Matériau chromatographique ayant une porosité régulée, comprenant un matériau de noyau chromatographique ayant une surface primaire et une pluralité de couches d'un matériau de surface chromatographique, dans lequel chaque couche de la pluralité de couches d'un matériau de surface chromatographique a indépendamment un diamètre de pore moyen, mesuré à l'aide de la méthode définie dans la partie de la description intitulée « Caractérisation », de 20 à 1 500 Angströms, dans lequel le diamètre moyen de pore de la pluralité de couches d'un matériau de surface chromatographique varie selon un schéma prédéterminé de la surface primaire du matériau de noyau chromatographique à la surface la plus externe du matériau chromatographique, dans lequel le schéma prédéterminé comprend une augmentation de diamètre moyen de pore de la surface primaire du matériau de noyau chromatographique à la surface la plus externe du matériau chromatographique, ou dans lequel le schéma prédéterminé comprend une diminution de diamètre moyen de pores de la surface primaire du matériau de noyau chromatographique à la surface la plus externe du matériau chromatographique, dans lequel chaque couche de la pluralité de couches du matériau de surface chromatographique a indépendamment une surface spécifique, mesurée à l'aide de la méthode définie dans la partie de la description intitulée « Caractérisation », de 25 à 1 100 $m^2$/g, et dans lequel la surface spécifique de la pluralité de couches d'un matériau de surface chromatographique varie selon un schéma prédéterminé de la surface primaire du matériau de noyau chromatographique à la surface la plus externe du matériau chromatographique.

**2.** Matériau chromatographique selon la revendication 1, dans lequel le matériau se présente sous la forme d'une particule.

**3.** Matériau chromatographique selon la revendication 1, dans lequel le matériau se présente sous la forme d'un monolithe.

**4.** Matériau chromatographique selon la revendication 1, dans lequel le matériau se présente sous la forme d'un matériau superficiellement poreux.

**5.** Matériau chromatographique selon la revendication 1, dans lequel le matériau de noyau chromatographique est un matériau inorganique, un matériau organique, ou un matériau hybride inorganique/organique.

**6.** Matériau chromatographique selon la revendication 5, dans lequel le matériau de noyau chromatographique a la formule :

$$(SiO_2)_d/[R^2((R)_p(R^1)_qSiO_t)_m] \qquad (I)$$

dans laquelle,

R et $R^1$ sont chacun indépendamment alcoxy en $C_1$-$C_{18}$, alkyle en $C_1$-$C_{18}$, alkyle en $C_1$-$C_{18}$, alcényle en $C_2$-$C_{18}$, alcynyle en $C_2$-$C_{18}$, cycloalkyle en $C_3$-$C_{18}$, hétérocycloalkyle en $C_1$-$C_{18}$, aryle en $C_5$-$C_{18}$, aryloxy en $C_5$-$C_{18}$, ou hétéroaryle en $C_1$-$C_{18}$ :
$R^2$ est alkyle en $C_1$-$C_{18}$, alcényle en $C_2$-$C_{18}$, alcynyle en $C_2$-$C_{18}$, cycloalkyle en $C_3$-$C_{18}$, hétérocycloalkyle en $C_1$-$C_{18}$, aryle en $C_5$-$C_{18}$, hétéroaryle en $C_1$-$C_{18}$ ; ou absents ; dans laquelle chaque $R^2$ est lié à deux atomes de silicium ou plus ;
p et q valent chacun indépendamment 0,0 à 3,0,
t vaut 0,5, 1,0 ou 1,5 ;
d vaut de 0 à environ 30 ;
m est un nombre entier allant de 1 à 20 ; dans laquelle R, $R^1$ et $R^2$ sont facultativement substitués ;

(4-(p+q)) à condition que ; (1) lorsque $R^2$ est absent, m = l et $t = \frac{(4-(p+q))}{2}$, lorsque $0 < p + q \leq 3$ ; et

(2) lorsque $R^2$ est présent, m = 2 à 20 et $t = \frac{(3-(p+q))}{2}$, lorsque $p + q \leq 2$ ;

la formule :

$$(S_lO_2)_d/[(R)_p(R^1)_qSiO_t] \qquad (II)$$

dans laquelle,
R et $R_1$ sont chacun indépendamment alcoxy en $C_1$-$C_{18}$, alkyle en $C_1$-$C_{18}$, alkyle en $C_1$-$C_{18}$, alcényle en $C_2$-$C_{18}$, alcynyle en $C_2$-$C_{18}$, cycloalkyle en $C_3$-$C_{18}$, hétérocycloalkyle en $C_1$-$C_{18}$, aryle en $C_5$-$C_{18}$, aryloxy en $C_5$-$C_{18}$, ou hétéroaryle en $C_1$-$C_{18}$ ;
d vaut de 0 à environ 30 ;
p et q valent chacun indépendamment de 0,0 à 3,0, à condition que, lorsque p + q = 1, alors t = 1,5 ; lorsque p + q = 2, alors t = 1 : ou lorsque p + q = 3, alors t =0,5 ; ou
la formule :

$$(SiO_2)_d/[R^2((R^1)_rSio_t)_m] \qquad (III)$$

dans laquelle,
$R^1$ est alcoxy en $C_1$-$C_{18}$, alkyle en $C_1$-$C_{18}$, alkyle en $C_1$-$C_{18}$, alcényle en $C_2$-$C_{18}$, alcynyle en $C_2$-$C_{18}$, cycloalkyle en $C_3$-$C_{18}$, hétérocycloalkyle en $C_1$-$C_{18}$, aryle en $C_5$-$C_{18}$, aryloxy en $C_5$-$C_{18}$, ou hétéroaryle en $C_1$-$C_{18}$ ;
$R^2$ est alkyle en $C_1$-$C_{18}$, alcényle en $C_2$-$C_{18}$, alcynyle en $C_2$-$C_{18}$, cycloalkyle en $C_3$-$C_{18}$, hétérocycloalkyle en $C_1$-$C_{18}$, aryle en $C_5$-$C_{18}$, hétéroaryle en $C_1$-$C_{18}$ ; ou absents ; dans laquelle chaque $R^2$ est lié à deux atomes de silicium ou plus ;
d vaut de 0 à environ 30 ;
r vaut 0, 1 ou 2, à condition que, lorsque r = 0, alors t = 1,5 ; lorsque r = 1, alors t = 1 ; ou lorsque r = 2, alors t = 0,5 ; et m est un nombre entier allant de 1 à 20.

7. Matériau chromatographique selon la revendication 1, dans lequel le schéma prédéterminé comprend une augmentation de surface spécifique de la surface primaire du matériau de noyau chromatographique à la surface la plus externe du matériau chromatographique.

8. Matériau chromatographique selon la revendication 1, dans lequel le schéma prédéterminé comprend une diminution de surface spécifique de la surface primaire du matériau de noyau chromatographique à la surface la plus externe du matériau chromatographique.

9. Matériau chromatographique selon la revendication 1, dans lequel au moins une couche de la pluralité de couches d'un matériau de surface chromatographique est un matériau hybride inorganique/organique qui comprend un groupe de surface hydrophobe et une pluralité de modificateurs ionisables, dans lequel le groupe de surface hydrophobe du matériau de surface de l'invention est une phase liée en C4 à C18, une phase liée en C18, une phase liée polaire incorporée, une phase liée aromatique, phénylalkyle, fluoro-aromatique, phénylhexyle, ou pentafluorophénylalkyle, ou une liaison ou un revêtement en C4-C30, polaire incorporé, chiral, phénylalkyle, ou pentafluorophényle, et dans lequel chaque modificateur ionisable contient indépendamment un groupe acide carboxylique, un groupe acide sulfonique, un groupe arylsulfonique, un groupe acide phosphorique, un groupe acide boronique, un groupe amino, un groupe imido, un groupe amido, un groupe pyridyle, un groupe imidazolyle, un groupe uréido, un groupe thionyl-uréido ou un groupe aminosilane.

10. Matériau chromatographique selon la revendication 1, dans lequel le matériau comprend en outre une modification de surface et dans lequel le matériau a été modifié en surface en le recouvrant d'un polymère par une combinaison d'un groupe organique et d'une modification de groupe silanol.

11. Dispositif chromatographique, comprenant

a) un canal intérieur destiné à accepter un matériau de garnissage et
un lit chromatographique garni comprenant le matériau chromatographique selon l'une quelconque des revendications 1 à 10.

FIG. 1

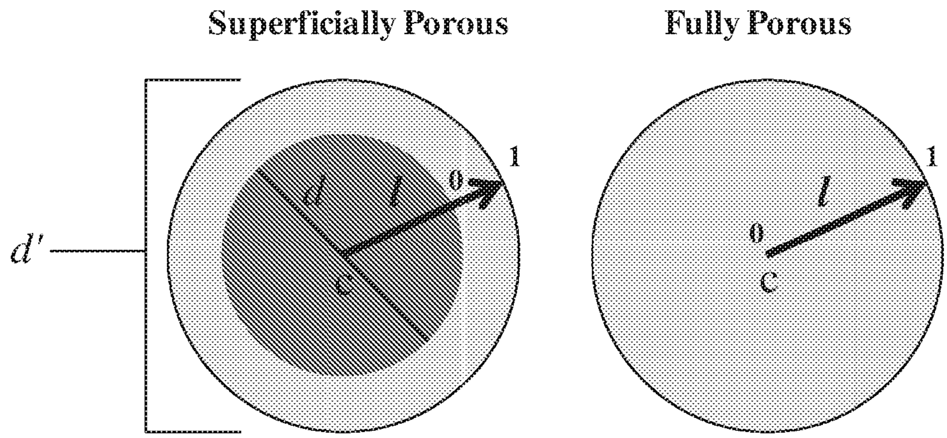
Superficially Porous
Fully Porous
d'
d
l
0
1
c
l
0
1
c

FIG. 2

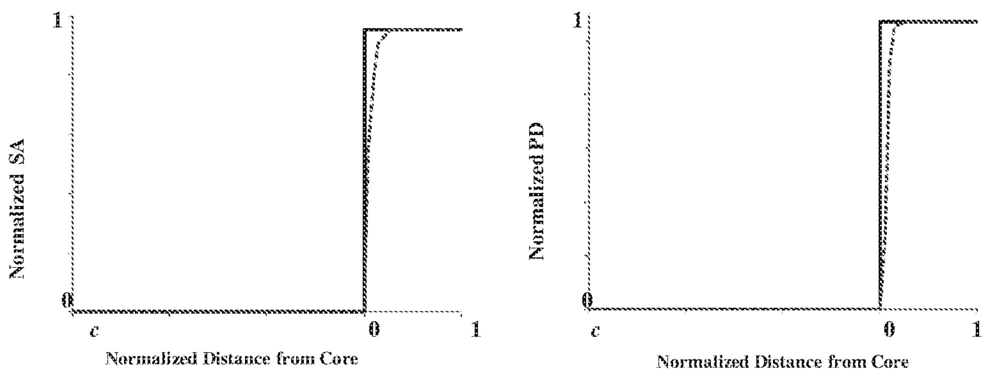
1
0
Normalized SA
c
0
1
Normalized Distance from Core
1
0
Normalized PD
c
0
1
Normalized Distance from Core

FIG. 3

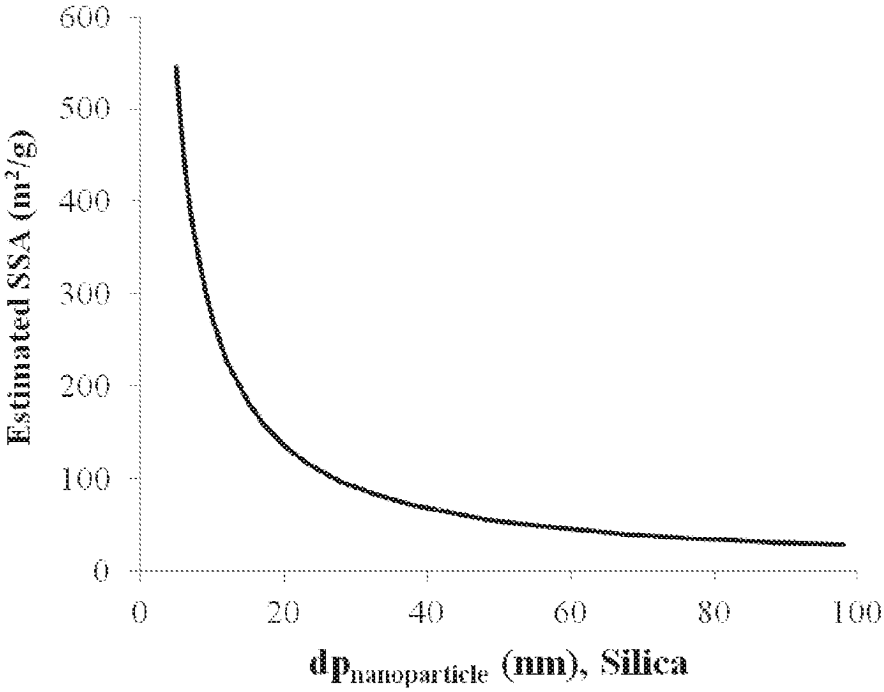
Estimated SSA ($m^2/g$)
600
500
400
300
200
100
0
0
20
40
60
80
100
$dp_{nanoparticle}$ (nm), Silica

FIG 4

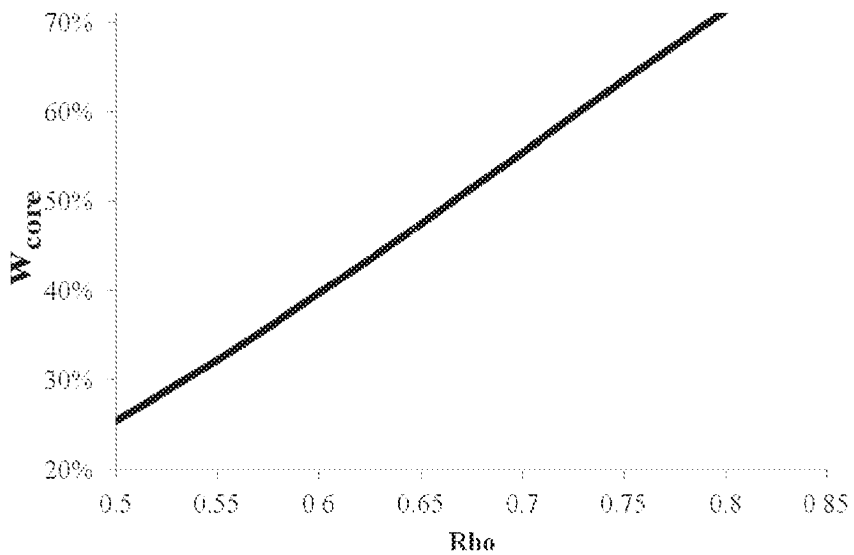
$W_{core}$
70%
60%
50%
40%
30%
20%
0.5
0.55
0.6
0.65
0.7
0.75
0.8
0.85
Rho

FIG. 5

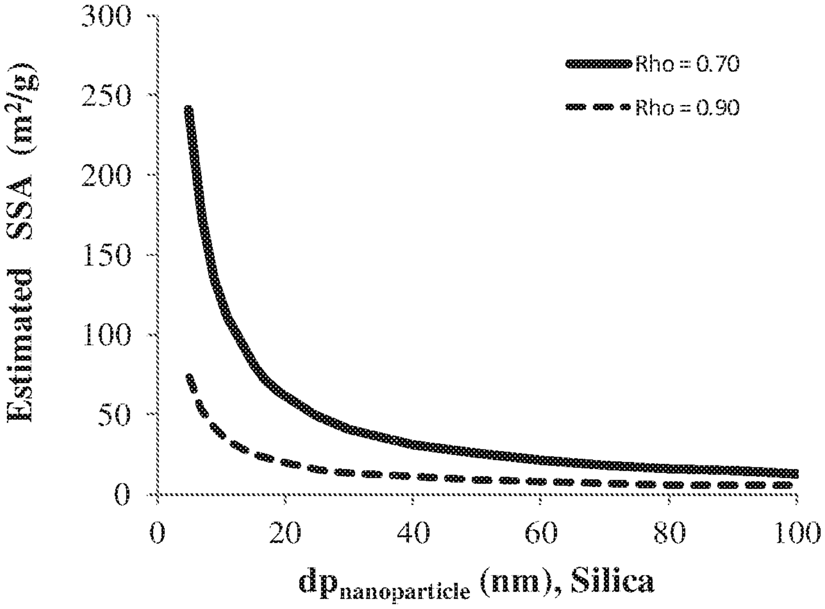
300
250
200
150
100
50
0
Estimated SSA (m2/g)
Rho = 0.70
Rho = 0.90
0
20
40
60
80
100
dpnanoparticle (nm), Silica

FIG. 6

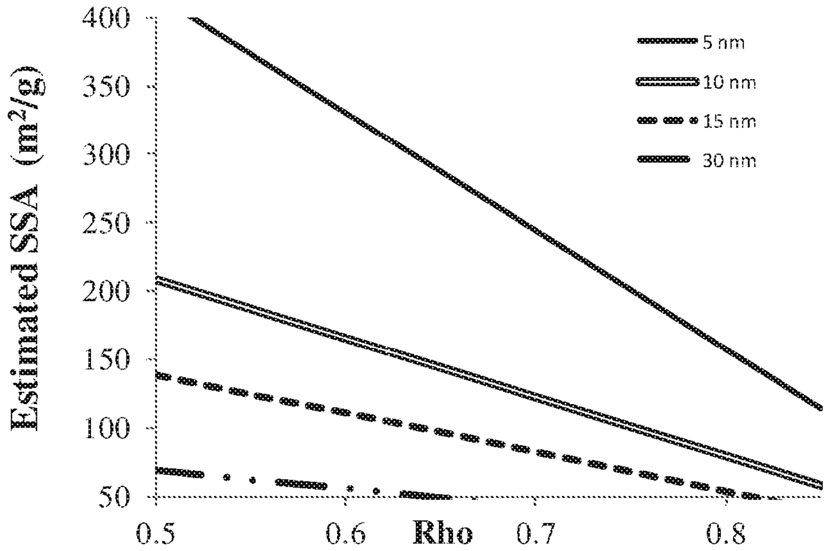
400
350
300
250
200
150
100
50
Estimated SSA (m2/g)
5 nm
10 nm
15 nm
30 nm
0.5
0.6
Rho
0.7
0.8

FIG. 7

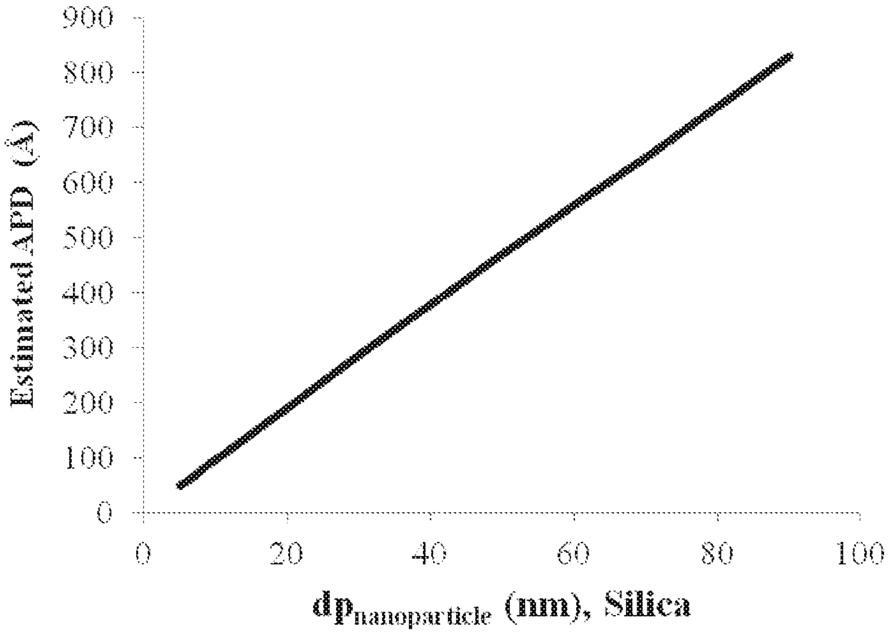
Estimated APD (Å)
900
800
700
600
500
400
300
200
100
0
0
20
40
60
80
100
dp$_{nanoparticle}$ (nm), Silica

FIG. 8

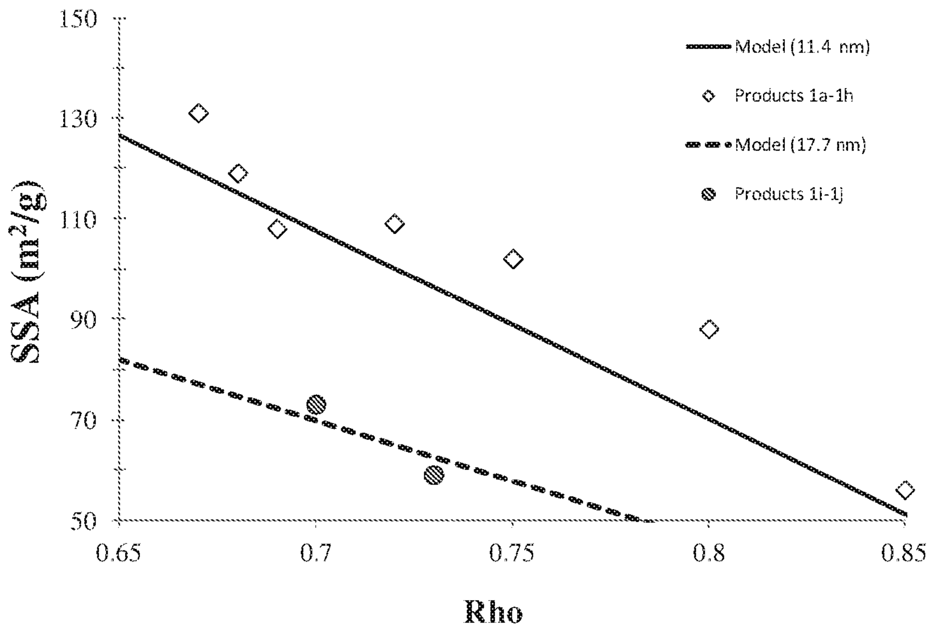
SSA (m$^2$/g)
150
130
110
90
70
50
0.65
0.7
0.75
0.8
0.85
Rho
Model (11.4 nm)
Products 1a-1h
Model (17.7 nm)
Products 1i-1j

FIG. 9

Product 1j    Product 2r

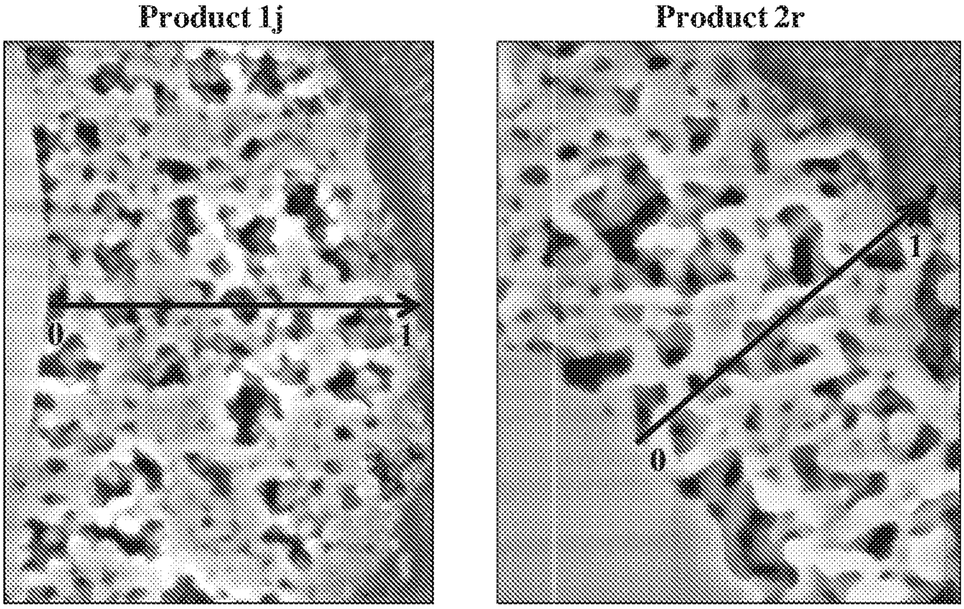


FIG. 10

Product 3a    Product 7a    Product 7b

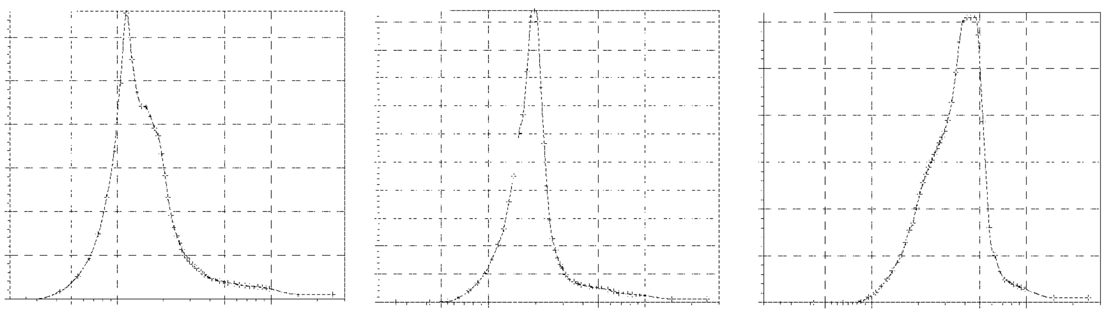

FIG. 11

Product 3c | Product 7c | Product 7d

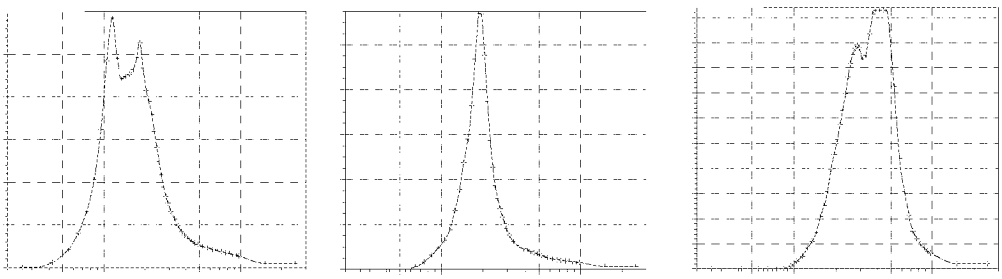

FIG. 12

Product 3e | Product 7e | Product 7f

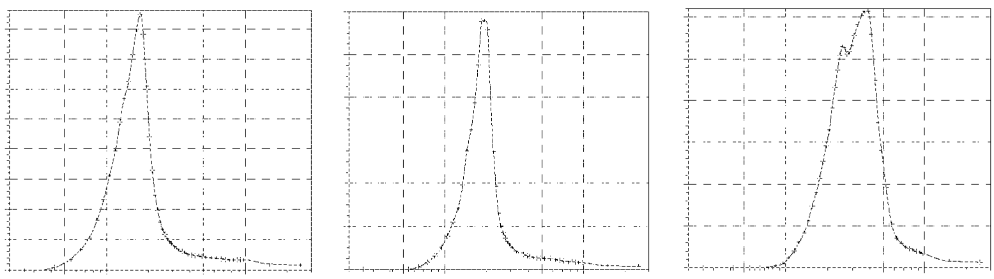

FIG. 13

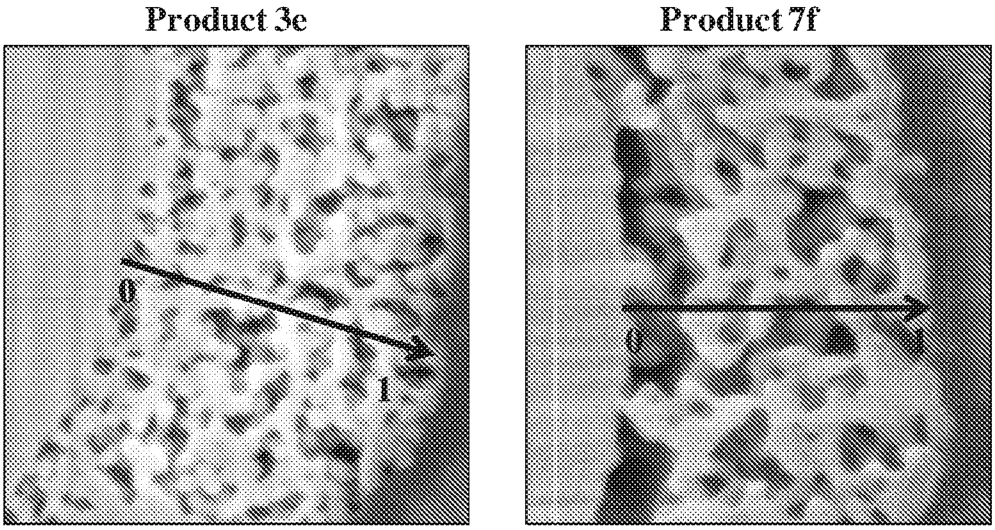


FIG. 14

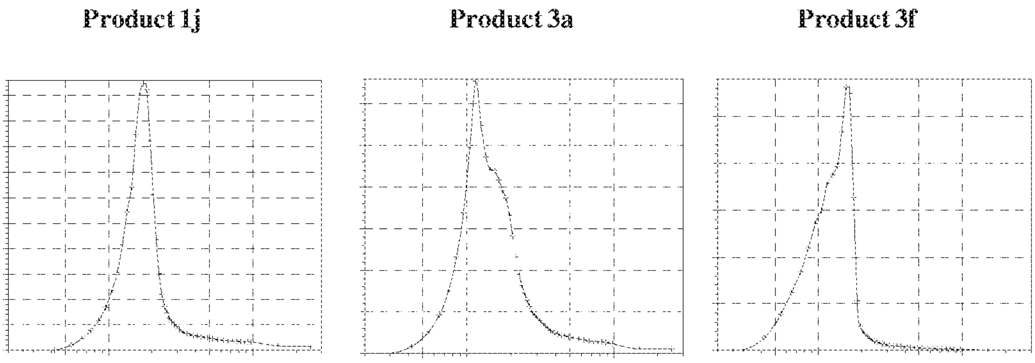

FIG. 15

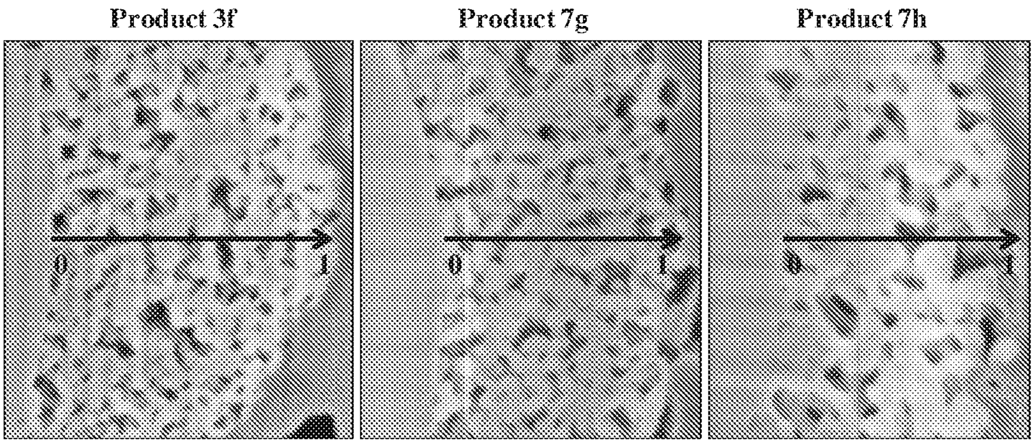

FIG. 16

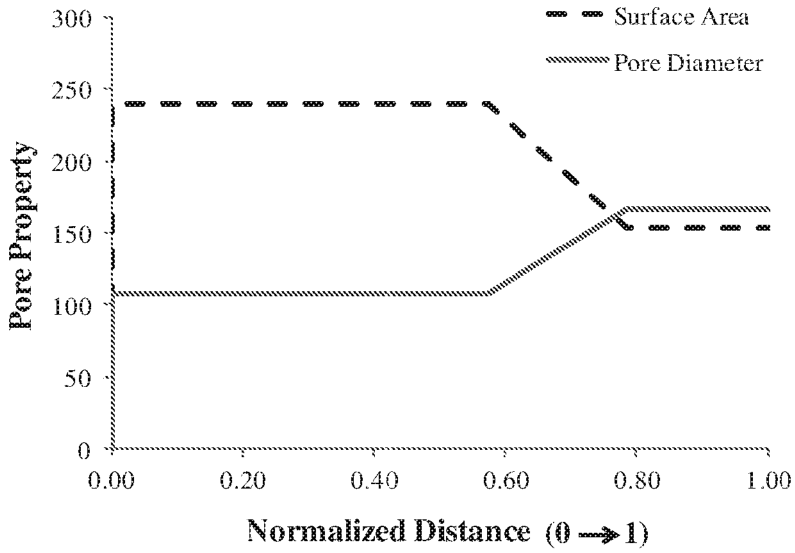
Surface Area
Pore Diameter
Pore Property
300
250
200
150
100
50
0
0.00
0.20
0.40
0.60
0.80
1.00
Normalized Distance (0 → 1)

FIG. 17

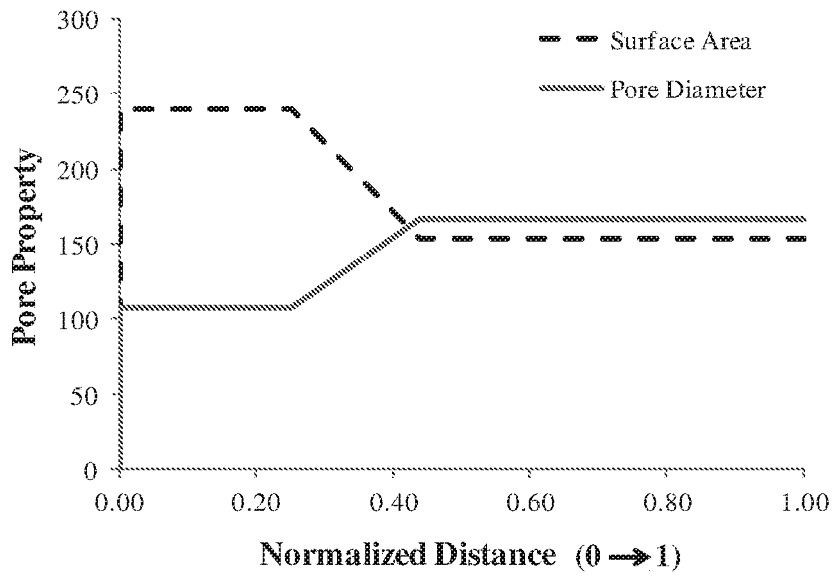
Surface Area
Pore Diameter
Pore Property
300
250
200
150
100
50
0
0.00
0.20
0.40
0.60
0.80
1.00
Normalized Distance (0 → 1)

FIG. 18

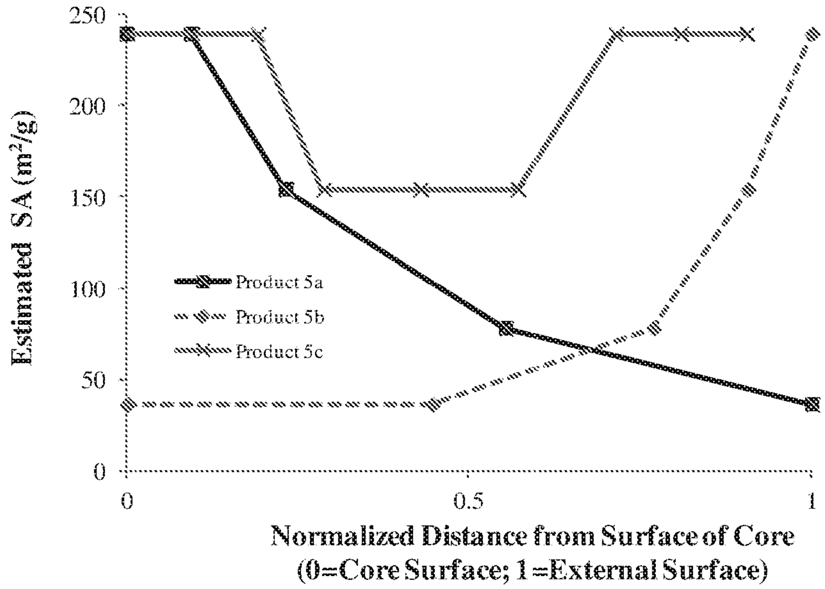
250
200
150
100
50
0
Estimated SA ($m^2/g$)
Product 5a
Product 5b
Product 5c
0
0.5
1
Normalized Distance from Surface of Core
(0=Core Surface; 1=External Surface)

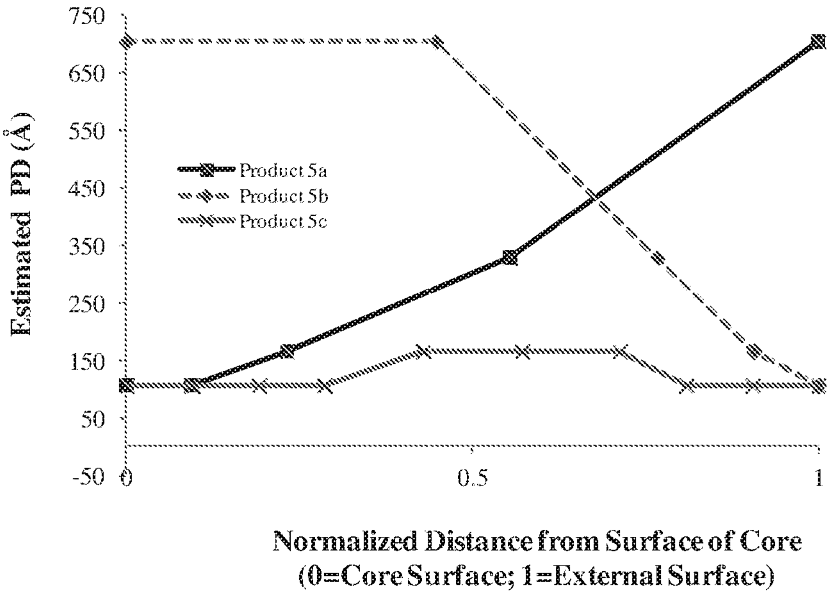
750
650
550
450
350
250
150
50
-50
Estimated PD (Å)
Product 5a
Product 5b
Product 5c
0
0.5
1
Normalized Distance from Surface of Core
(0=Core Surface; 1=External Surface)

FIG. 19

FIG. 20

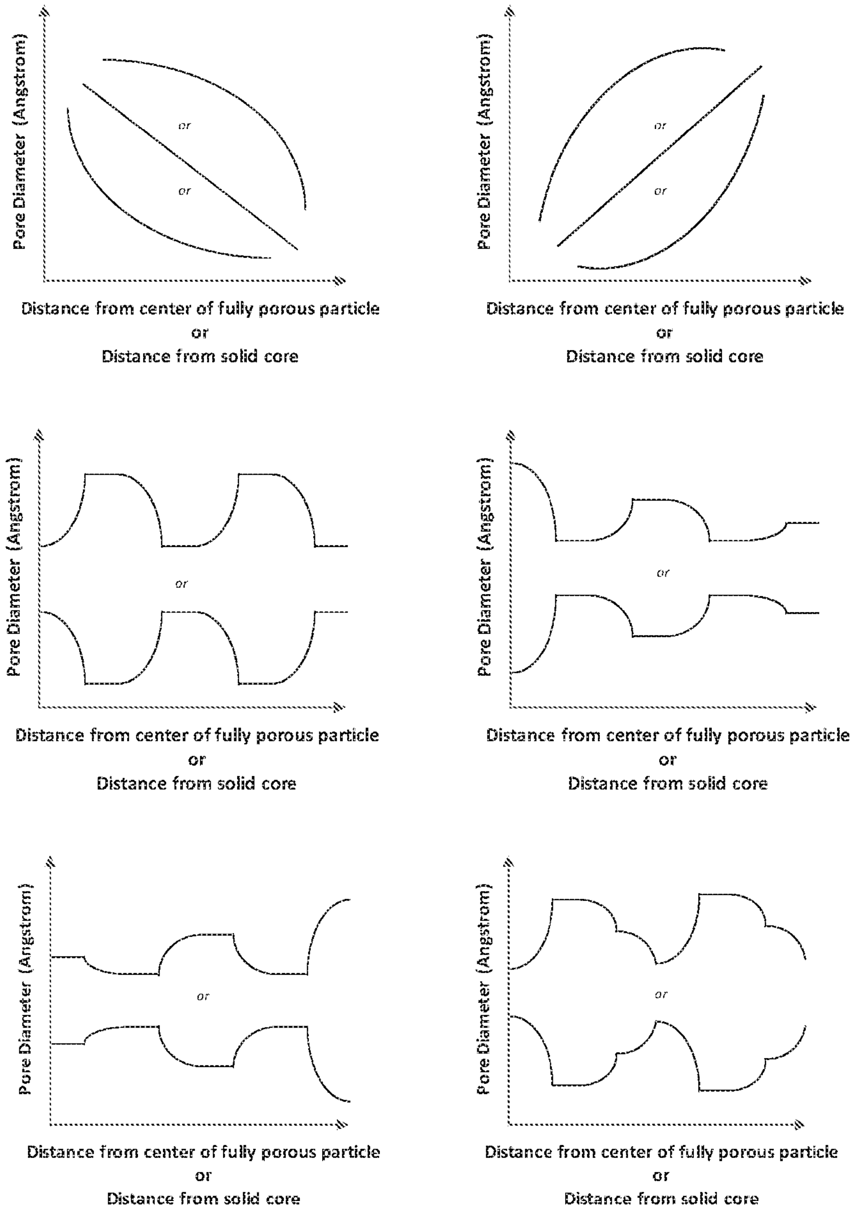
Pore Diameter (Angstrom)
or
or
Distance from center of fully porous particle
or
Distance from solid core
Pore Diameter (Angstrom)
or
or
Distance from center of fully porous particle
or
Distance from solid core
Pore Diameter (Angstrom)
or
Distance from center of fully porous particle
or
Distance from solid core
Pore Diameter (Angstrom)
or
Distance from center of fully porous particle
or
Distance from solid core
Pore Diameter (Angstrom)
or
Distance from center of fully porous particle
or
Distance from solid core
Pore Diameter (Angstrom)
or
Distance from center of fully porous particle
or
Distance from solid core

FIG. 21

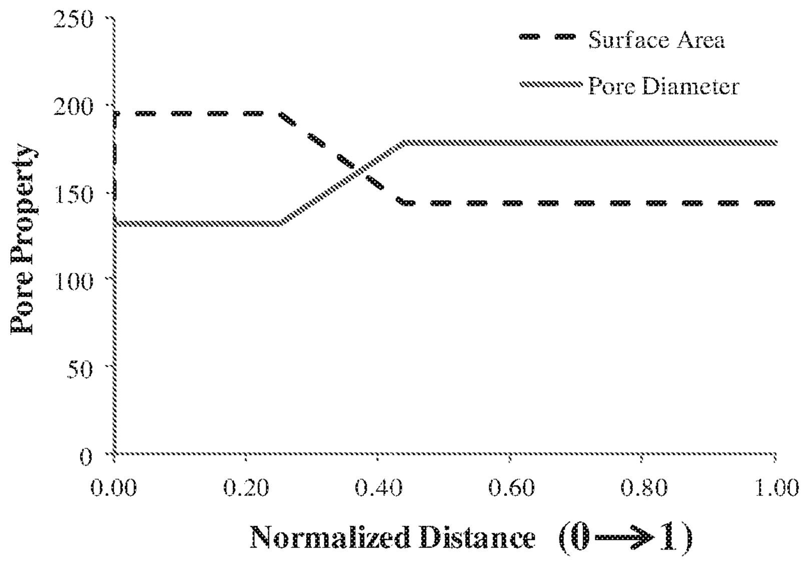
250
200
150
100
50
0
Pore Property
Surface Area
Pore Diameter
0.00
0.20
0.40
0.60
0.80
1.00
Normalized Distance (0→1)

FIG. 22

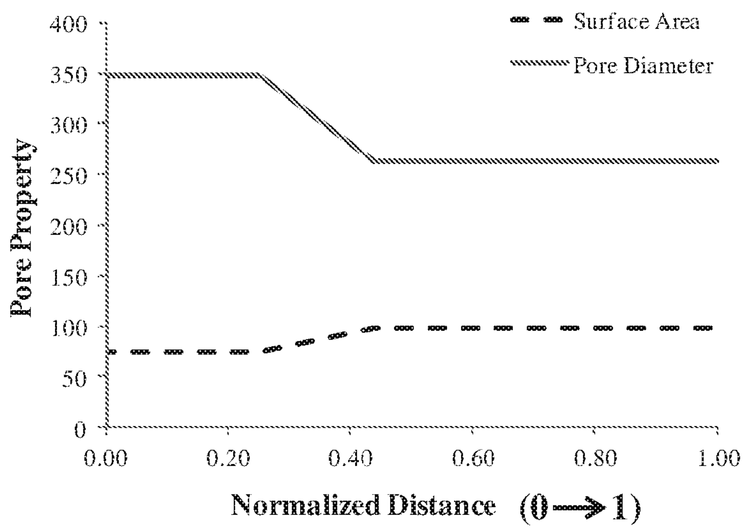
400
350
300
250
200
150
100
50
0
Pore Property
Surface Area
Pore Diameter
0.00
0.20
0.40
0.60
0.80
1.00
Normalized Distance (0→1)

FIG. 23

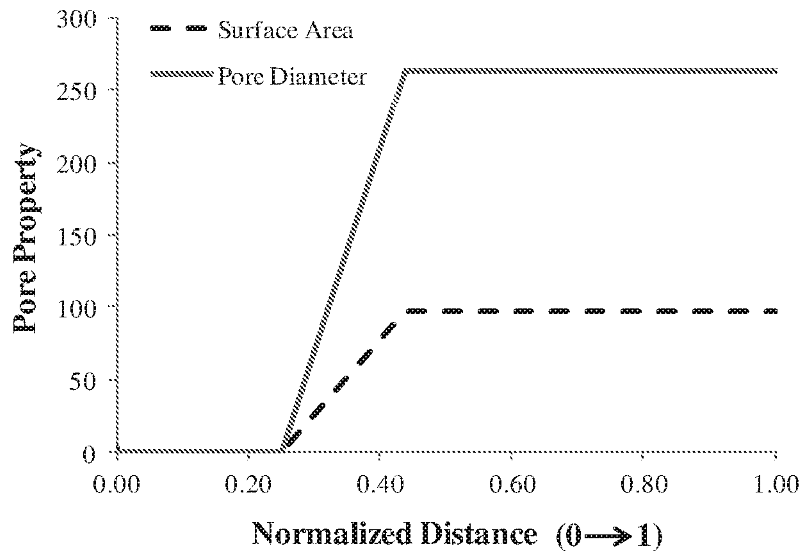
Surface Area
Pore Diameter
300
250
200
150
100
50
0
Pore Property
0.00
0.20
0.40
0.60
0.80
1.00
Normalized Distance (0⟶1)

FIG. 24

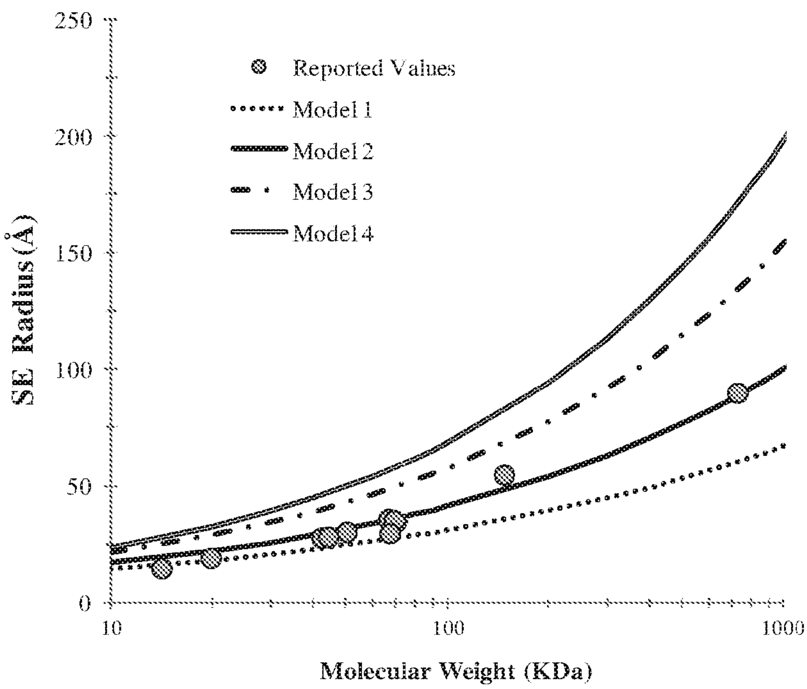
Reported Values
Model 1
Model 2
Model 3
Model 4
250
200
150
100
50
0
SE Radius (Å)
10
100
1000
Molecular Weight (KDa)

FIG. 25

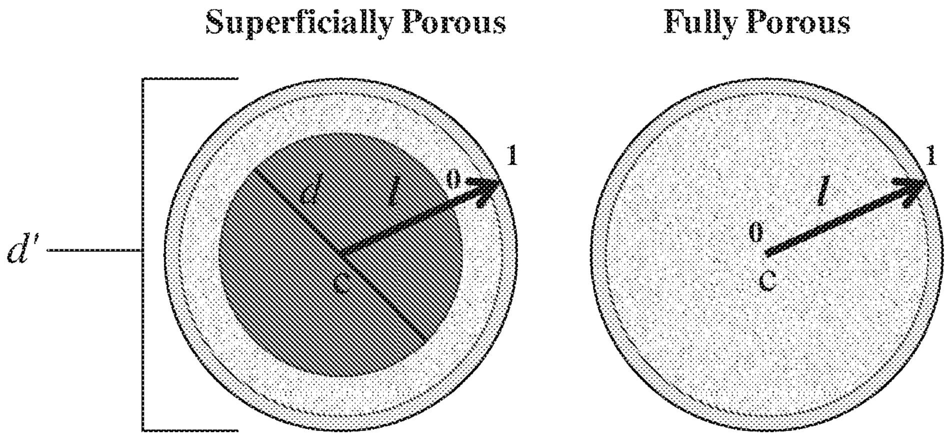
Superficially Porous
Fully Porous
d'
d
l
0
1
c
l
0
1
c

FIG. 26

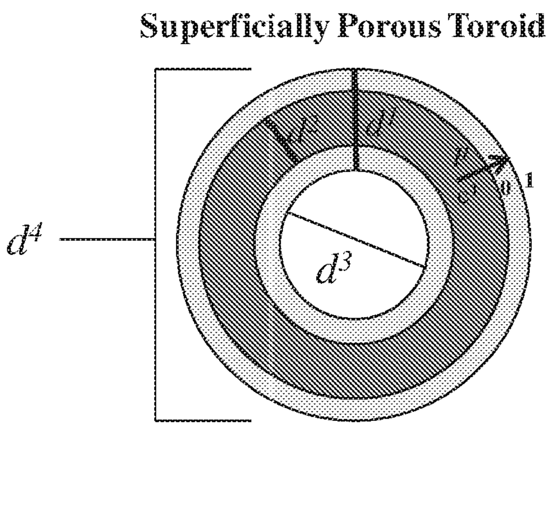
Superficially Porous Toroid
d⁴
d³
d¹
0
1

FIG. 27

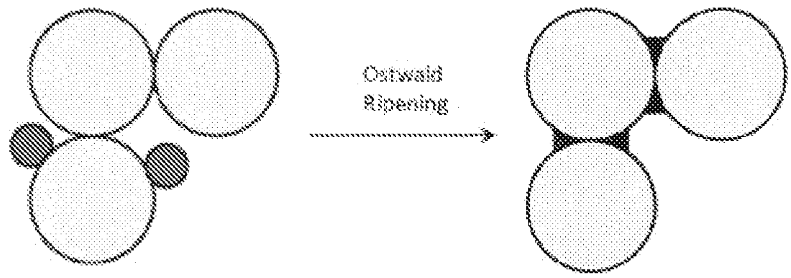

**FIG. 28**

**Scheme 1:** Process of forming superficially porous material.

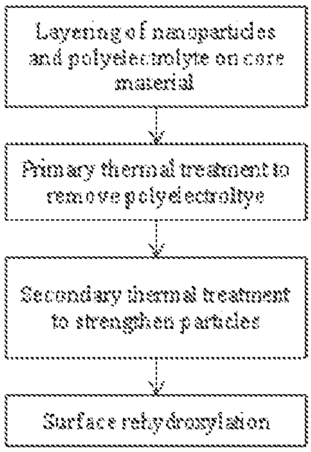


**Scheme 2:** Synthesis of superficially porous material with a hydrothermal treatment.

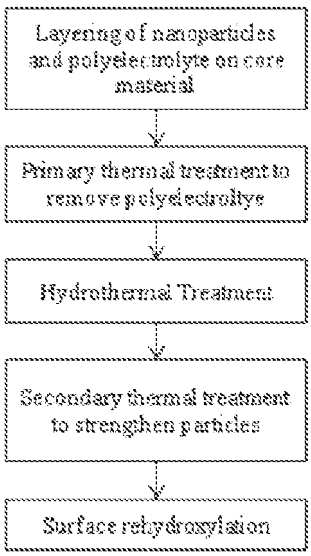

**FIG. 28 Cont.**

**Scheme 3:** Synthesis of superficially porous materials having different layers of different sized nanoparticles.

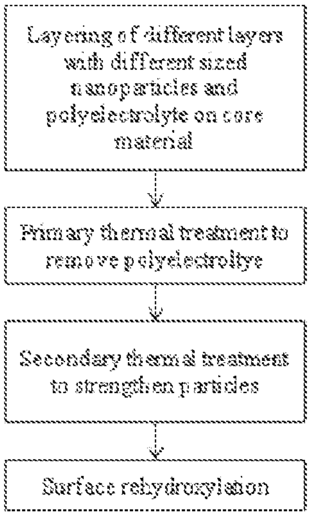


**Scheme 4**: Synthesis of superficially porous materials having different layers of different sized nanoparticles, with a hydrothermal treatment.

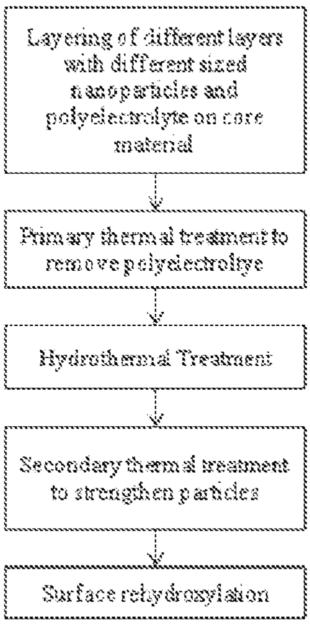

**FIG. 28 Cont.**

**Scheme 4**: Synthesis of superficially porous materials having different layers of different sized nanoparticles, with a hydrothermal treatment.

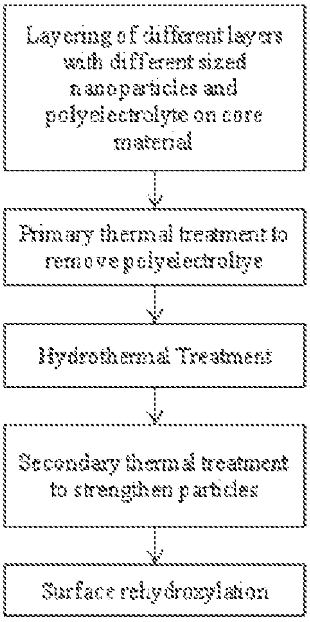

**FIG. 28 Cont.**

**Scheme 5**: Process of synthesizing optimal pore geometry superficially porous materials having different layers of different sized nanoparticles, without a hydrothermal treatment.

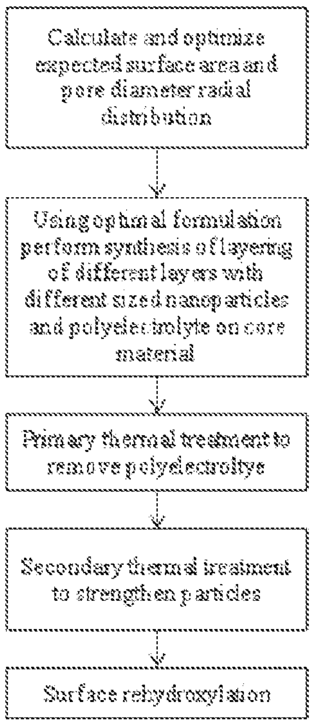

**FIG. 28 Cont.**

**Scheme 6**: Process of synthesizing optimal pore geometry superficially porous materials having different layers of different sized nanoparticles, with a hydrothermal treatment.

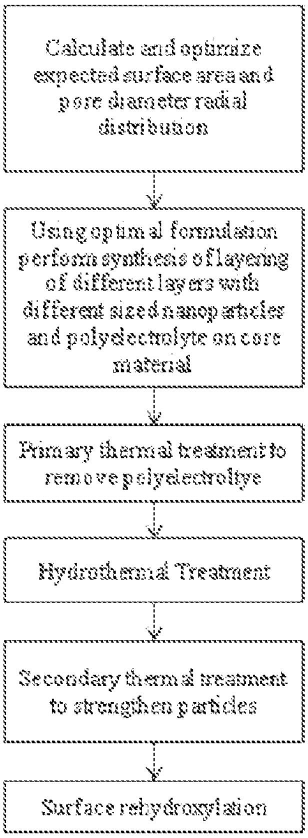

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62304254
- US 62304259
- US 62304261
- EP 84979 B1
- EP 1996 B1
- US 20070189944 A
- WO 2010061367 A2
- WO 2014201033 A
- US 4017528 A
- US 6528167 B
- US 6686035 B
- US 7175913 B
- WO 2008103423 A
- US 7250214 B
- US 3709664 A
- US 5374755 A
- US 3634558 A
- US 20130112605 A
- US 20130206665 A
- US 20080277346 A
- US 7223473 B
- US 7919177 B
- WO 2010141426 A
- US 8658277 B
- US 8404346 B
- US 2012055860 A
- US 8791220 B
- US 8697765 B
- US 8680311 B
- US 5624875 A
- US 6207098 B
- US 4983369 A
- US 4911903 A
- US 4775520 A
- US 5425930 A
- DE 102014019372
- US 20120141789 A
- US 710152 A
- US 8778453 B
- US 20120055860 A
- US 8845892 B
- US 2012141789 A
- US 20130319086 A


### Non-patent literature cited in the description


- **UNGER**. *Journal of Chromatography A*, 2004, vol. 1060, 1
- *Advanced Materials*, 1998, vol. 10, 1036
- *Journal of Chromatography A*, 2010, vol. 1217, 1604-1615
- *Journal of Chromatography A*, 2010, vol. 1217, 1589-1603
- **G. GUIOCHON**. *J. Chromatogr. A*, 2007, vol. 1168, 101-168
- **GLEITER, H.** Nano-crystalline materials. *Prog. Mater. Sci.*, 1989, vol. 33
- **SIEGEL, R. W.** Synthesis and properties of nanophase materials. *Mater. Sci. Eng. A*, 1993, vol. 168, 189-197
- **MARCH**. J. Advanced Organic Chemistry. Wiley, 1985
- Nanocomposites Science and Technology. Wiley-VCH, 2003
- **GRITTI** ; **GUIOCHON**. *J. Chromatogr. A*, 2010, vol. 1217, 5137
- *Journal of the American Chemical Society*, 1938, vol. 60, 309
- *Journal of Catalysis*, 1955, vol. 2, 111
- **GLEITER, H.** Nano-crystalline materials. *Prog. Mater. Sci.*, 1989, vol. 33, 223-315
- **SIEGEL, R. W.** Synthesis and properties of nanophase materials. *Prog. Mater. Sci. Eng. A*, 1993, vol. 168, 189-197
- **DOSHI, N.** *PNAS*, 2009, vol. 106 (51), 21495
- **ALEXANDER, L.** *Chem. Commun.*, 2008, 3507
- **NAIK, S. J.** *Phys. Chem. C*, 2007, vol. 111, 11168
- **PANG, X.** *Microporous and Mesoporous Materials*, 2005, vol. 85, 1
- **KIEVSKY, Y.** *IEEE Transactions on Nanotechnology*, 2005, vol. 4 (5), 490
- **SUGIMOTO, T.** Monodispersed Particles. Elsevier Science, 2001
- **OZIN, G.** *Adv. Mater.*, 1997, vol. 9, 662

- **MASSIOT, D.** ; **FAYON, F.** ; **CAPRON, M.** ; **KING, I.** ; **LE CALVÉ, S.** ; **ALONSO, B.** ; **DURAND, J.-O.** ; **BUJOLI, B.** ; **GAN, Z.** ; **HOATSON, G.** *Magn. Reson. Chem.*, 2002, vol. 40, 70-76
- Ullmann's Encyclopedia of Industrial Chemistry. VCH Verlagsgesellschaft mbH, 1988, vol. B2
- *J. Coll. Lnterf. Sci.*, 1968, vol. 26, 62
- **BLUE**. *J. Chromatogr. A*, 2011, vol. 1218 (44), 7989
- **BRENNAN**. *J. Mater. Chem.*, 2012, vol. 22, 13197
- **MURIITHI, B. W.** Ph.D. Thesis. University of Arizona, 2009, 396
- **BRUNS, S. J.** *Chromatogr. A*, 2012, vol. 1268, 53
- **K. HORVATH**. *J. Chromatogr. A*, 2010, vol. 1217 (41), 6373
- **G. GUIOCHON**. *J. Chromatogr. A*, 2011, vol. 1218 (15), 1915
- **J. TENCER**. *Kidney International*, 1998, vol. 53, 709
- **U. LUND**. *Am. J. Physiol. Renal Physiol.*, 2003, vol. 284, F1226
- **E. M. RENKIN**. *J.Gen.Physio.*, 1954, vol. 38, 225
- **D. VENTUROLI**. *Am. J. Physiol. Renal Physiol.*, 2005, vol. 288, F605
- **RIPPE**. *Kidney Int*, 1989, vol. 35, 1234
- **CHOI, J. Y.** ; **KIM, C.H.** ; **KIM, D. K**. *J. Am. Ceram. Soc.*, 1998, vol. 81, 1184-1188
- **SEOG, I. S** ; **KIM, C.H.** *J. Mat. Sci.*, 1993, vol. 28, 3277-3282
- **KIEVSKY**. *IEEE Transactions on Nanotechnology*, 2005, vol. 4 (5), 490
- **ZHANG**. *Functional Materials Letters*, 2010, vol. 3 (2), 125
- **NAIK, S.** *J. Phys. Chem. C*, 2007, vol. 111, 11168
- **SUGIMOTO, T.** Monodispersed Particles. Elsevier Science BV, 2001
- Polymer Handbook. Wiley, 1999
- **WU, W.** *J. Phys. Chem. C*, 2010, vol. 114, 16092
- **JIA, C.-J.** *J. Am. Chem. Soc.*, 2008, vol. 130, 16968
- **GIESCHE**. *J. Eur. Ceram. Soc.*, 1994, vol. 14, 189
- *J. Eur. Ceram. Soc.*, 1994, vol. 14, 205
- **NOZAWA**. *Phys. Rev. E: Stat., Nonlinear, Soft Matter Phys.*, 2005, vol. 72 (1), 011404
- **WYNDHAM, K. D.** Ph.D. Thesis. University of California, 2000, 256
- **OGINO, K.** *Chem. Mater*, 1998, vol. 10, 3833
- **ANDREOZZI, R.** *Water Research*, 1996, vol. 30 (12), 2955
- **SUZUKI, J.** *J. Applied Polymer Science*, 1976, vol. 20 (1), 93
- **TIAN, B.** *Chem. Commun.*, 2002, 1186
- Degradable Polymers: Principles and Applications. Chapman & Hall, 1995